(19) Europäisches Patentamt
European Patent Office
Office européen des brevets

(11) **EP 3 663 741 B1**

(12) **EUROPEAN PATENT SPECIFICATION**

(45) Date of publication and mention
of the grant of the patent:
**06.11.2024 Bulletin 2024/45**

(21) Application number: **18840775.3**

(22) Date of filing: **01.08.2018**

(51) International Patent Classification (IPC):
**G01M 13/04** *(2019.01)*   **G01H 17/00** *(2006.01)*
**G01H 13/00** *(2006.01)*   **G01M 13/045** *(2019.01)*

(52) Cooperative Patent Classification (CPC):
**G01H 13/00; G01H 17/00; G01M 13/045**

(86) International application number:
**PCT/JP2018/028942**

(87) International publication number:
**WO 2019/026980 (07.02.2019 Gazette 2019/06)**

(54) **INFORMATION PROCESSING DEVICE, INFORMATION PROCESSING METHOD, AND PROGRAM**

INFORMATIONSVERARBEITUNGSVORRICHTUNG,
INFORMATIONSVERARBEITUNGSVERFAHREN UND PROGRAMM

DISPOSITIF DE TRAITEMENT D'INFORMATIONS, PROCÉDÉ DE TRAITEMENT
D'INFORMATIONS ET PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.08.2017   JP 2017151727**
**25.10.2017   JP 2017206597**

(43) Date of publication of application:
**10.06.2020 Bulletin 2020/24**

(73) Proprietor: **Nippon Steel Corporation
Tokyo 100-8071 (JP)**

(72) Inventors:
• **NAKAGAWA, Junichi**
  **Tokyo 100-8071 (JP)**
• **MINAMI, Hideki**
  **Tokyo 100-8071 (JP)**
• **UESHIMA, Takayuki**
  **Tokyo 100-8071 (JP)**
• **TAKESHITA, Akinori**
  **Tokyo 100-8071 (JP)**
• **TANI, Yasunori**
  **Tokyo 100-8071 (JP)**

(74) Representative: **Vossius & Partner
Patentanwälte Rechtsanwälte mbB
Siebertstrasse 3
81675 München (DE)**

(56) References cited:
**WO-A1-2004/017038     WO-A1-2015/015987
CN-A- 104 228 872      CN-A- 105 806 604
JP-A- 2003 050 158     JP-A- 2012 159 298
JP-B2- H0 124 246      US-A1- 2015 369 698**

**Description**

TECHNICAL FIELD

The present invention relates to an information processing apparatus, an information processing method, and a program.

BACKGROUND ART

As a technique to perform an abnormality diagnosis of an object that moves periodically, there has been a method in which a signal obtained from a moving object is measured to calculate a characteristic amount of the signal and whether the object is normal or abnormal is determined according to the characteristic amount. At this time, there has been a technique in which in order to accurately perform the abnormality diagnosis by clarifying the difference between a characteristic amount at a normal time and a characteristic amount at an abnormal time, a component belonging to a narrow-band frequency domain corresponding to an integral multiple of a fundamental frequency of the movements of the object is extracted from the measured signal, a coefficient of an autoregressive model obtained from a signal of the extracted component is calculated, and from the coefficient of the autoregressive model, a characteristic amount is calculated (Patent Literature 1).

CITATION LIST

CN 104 228 872 A discloses a device and method for monitoring track irregularity. CN 105 806 604 A discloses a locomotive vehicle running gear bearing holder fault pre-alarm method. US 2015/0369698 A1 and WO 2015/015987 A1 disclose vibration analysis methods for a bearing device.

PATENT LITERATURE

Patent Literature 1: Japanese Laid-open Patent Publication No. 2003-50158

SUMMARY OF INVENTION

TECHNICAL PROBLEM

In the method disclosed in Patent Literature 1, filter processing and the like are performed on the measured signal beforehand, to thereby extract the signal for calculating the characteristic amount. However, the method disclosed in Patent Literature 1 has a problem that it is necessary to set a frequency domain of a filter through which the signal passes beforehand, and thus when the frequency of the signal component reflecting the abnormality of the object is unexpected and deviates from the frequency domain set beforehand, no difference appears between the characteristic amount at a normal time and the characteristic amount at an abnormal time, and thus there is a possibility of failing to detect the abnormality.
The present invention has been made in consideration of the above problem, and an object thereof is to enable more accurate performance of an abnormality diagnosis of an object that moves periodically.

SOLUTION TO PROBLEM

The invention is defined by the claims. An information processing apparatus of the present invention includes: an acquisition means that acquires measured data relating to periodical movements of an object that moves periodically; a determination means that determines, based on the measured data acquired by the acquisition means, a revision coefficient being a coefficient in a revised autoregressive model; and a diagnosis means that diagnoses an abnormality of the object based on the revision coefficient determined by the determination means, in which the revised autoregressive model is an equation expressing a predicted value of the measured data by using an actual value of the measured data and the revision coefficient in response to the actual value, the determination means determines the revision coefficient by using an equation in which a first matrix derived from a diagonal matrix whose diagonal component is eigenvalues of an autocorrelation matrix, the eigenvalues derived by subjecting the autocorrelation matrix derived from the measured data to singular value decomposition, and an orthogonal matrix in which an eigenvector of the autocorrelation matrix is set to a column component, the first matrix is set to a coefficient matrix and an autocorrelation vector derived from the measured data is set to a constant vector, the autocorrelation vector is a vector whose component is autocorrelation of the measured data with a time lag of 1 to m, m being a number of the actual value used in the revised autoregressive model, the autocorrelation matrix is a matrix whose component is autocorrelation of the measured data with a time lag of 0 to m - 1, the first matrix is a matrix $U_S\Sigma_S U_S^T$ that is derived from a second matrix $\Sigma_S$ derived from s pieces of the eigenvalues of the autocorrelation matrix, s being a number set to 1 or more and less than m, and the diagonal matrix and a third matrix $U_s$ derived from s pieces of the eigenvalues and the orthogonal matrix, the second matrix is a submatrix of the diagonal matrix and is a matrix whose diagonal component is s pieces of the eigenvalues, and the third matrix is a submatrix of the orthogonal matrix and is a matrix in which eigenvectors corresponding to s pieces of the eigenvalues are set to a column component vector.

ADVANTAGEOUS EFFECTS OF INVENTION

According to the present invention, it is possible to provide a technique capable of more accurately performing an abnormality diagnosis of an object that moves periodically.

BRIEF DESCRIPTION OF DRAWINGS

[Fig. 1A] Fig. 1A is a view illustrating a state of an experiment.
[Fig. 1B] Fig. 1B is a view illustrating the state of the experiment.
[Fig. 2] Fig. 2 is a view explaining one example of details of a bearing.
[Fig. 3A] Fig. 3A is a view illustrating one example of a distribution of eigenvalues.
[Fig. 3B] Fig. 3B is a view illustrating one example of the distribution of the eigenvalues.
[Fig. 3C] Fig. 3C is a view illustrating one example of the distribution of the eigenvalues.
[Fig. 4A] Fig. 4A is a view illustrating one example of a waveform of measured data.
[Fig. 4B] Fig. 4B is a view illustrating one example of the waveform of the measured data.
[Fig. 4C] Fig. 4C is a view illustrating one example of the waveform of the measured data.
[Fig. 5A] Fig. 5A is a view illustrating one example of a waveform of a revised autoregressive model.
[Fig. 5B] Fig. 5B is a view illustrating one example of the waveform of the revised autoregressive model.
[Fig. 5C] Fig. 5C is a view illustrating one example of the waveform of the revised autoregressive model.
[Fig. 6A] Fig. 6A is a view illustrating one example of a frequency characteristic of the revised autoregressive model.
[Fig. 6B] Fig. 6B is a view illustrating one example of the frequency characteristic of the revised autoregressive model.
[Fig. 6C] Fig. 6C is a view illustrating one example of the frequency characteristic of the revised autoregressive model.
[Fig. 7A] Fig. 7A is a view illustrating one example of the waveform of the revised autoregressive model.
[Fig. 7B] Fig. 7B is a view illustrating one example of the waveform of the revised autoregressive model.
[Fig. 7C] Fig. 7C is a view illustrating one example of the waveform of the revised autoregressive model.
[Fig. 8A] Fig. 8A is a view illustrating one example of the frequency characteristic of the revised autoregressive model.
[Fig. 8B] Fig. 8B is a view illustrating one example of the frequency characteristic of the revised autoregressive model.
[Fig. 8C] Fig. 8C is a view illustrating one example of the frequency characteristic of the revised autoregressive model.
[Fig. 9] Fig. 9 is a diagram illustrating one example of a system configuration of a diagnosis system.
[Fig. 10] Fig. 10 is a diagram illustrating one example of a hardware configuration of an information processing apparatus.
[Fig. 11] Fig. 11 is a flowchart illustrating one example of processing of the information processing apparatus.
[Fig. 12A] Fig. 12A is a view illustrating one example of the distribution of the eigenvalues.
[Fig. 12B] Fig. 12B is a view illustrating one example of the distribution of the eigenvalues.
[Fig. 13A] Fig. 13A is a view illustrating one example of the waveform of the measured data.
[Fig. 13B] Fig. 13B is a view illustrating one example of the waveform of the measured data.
[Fig. 14A] Fig. 14A is a view illustrating one example of the waveform of the revised autoregressive model.
[Fig. 14B] Fig. 14B is a view illustrating one example of the waveform of the revised autoregressive model.
[Fig. 15A] Fig. 15A is a view illustrating one example of the frequency characteristic of the revised autoregressive model.
[Fig. 15B] Fig. 15B is a view illustrating one example of the frequency characteristic of the revised autoregressive model.
[Fig. 16A] Fig. 16A is a view illustrating one example of the waveform of the revised autoregressive model.
[Fig. 16B] Fig. 16B is a view illustrating one example of the waveform of the revised autoregressive model.
[Fig. 17A] Fig. 17A is a view illustrating one example of the frequency characteristic of the revised autoregressive model.
[Fig. 17B] Fig. 17B is a view illustrating one example of the frequency characteristic of the revised autoregressive model.

[Fig. 18] Fig. 18 is a view illustrating one example of patterns of coefficients.

[Fig. 19] Fig. 19 is a view explaining one example of a pattern of a coefficient specified by learning.

[Fig. 20] Fig. 20 is a view explaining one example of a weight of each pattern.

[Fig. 21] Fig. 21 is a diagram illustrating one example of the system configuration of the diagnosis system.

[Fig. 22] Fig. 22 is a flowchart illustrating one example of learning processing.

[Fig. 23] Fig. 23 is a flowchart illustrating one example of abnormality diagnosis processing.

DESCRIPTION OF EMBODIMENTS

<Embodiment 1>

Hereinafter, there will be explained one embodiment of the present invention based on the drawings.

(Outline of processing of this embodiment)

In this embodiment, a diagnosis system diagnoses, based on a signal of vibrations measured from a bearing used for a railway bogie, an abnormality of the bearing.

The diagnosis system measures a signal corresponding to vibrations of the bearing, expresses the measured signal in an autoregressive model, subjects a matrix in a conditional expression relating to a coefficient of the autoregressive model to singular value decomposition, derives eigenvalues of the matrix, and determines the coefficient of the autoregressive model by using only the number set from the largest among the derived eigenvalues. Then, the diagnosis system derives a frequency characteristic of the autoregressive model from the determined coefficient and diagnoses the abnormality of the bearing based on the derived frequency characteristic.

(Experiment to diagnoses a bearing abnormality)

There will be explained an experiment performed for evaluating the abnormality diagnosis accuracy of the bearing used for the railway bogie.

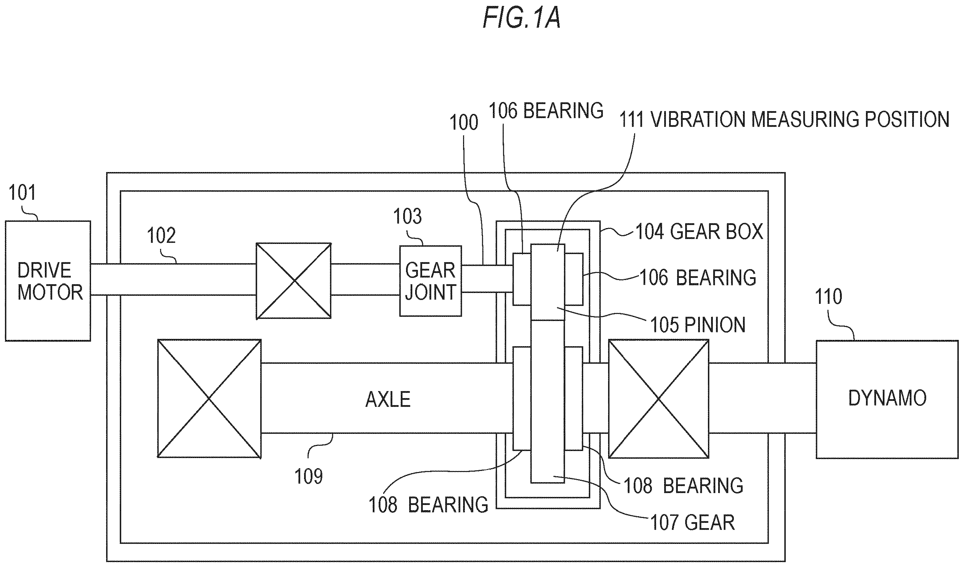

Fig. 1A is a view for explaining the state of this experiment. The state in Fig. 1A is a state where a drive mechanism for a wheel in the railway bogie is placed in a laboratory. A drive motor 101 rotates a pinion 105 via a drive motor shaft 102, a gear joint 103, and a pinion shaft 100. The pinion 105 rotates, to thereby rotate a gear 107. With this, an axle 109 rotates and the wheel connected to the axle 109 rotates eventually. In this experiment, in place of the wheel, a dynamo 110 is connected to the axle 109. The dynamo 110 is a generator connected for imparting a pseudo traveling load. In this experiment, the load for rotating the dynamo 110 is assumed as a load when traveling.

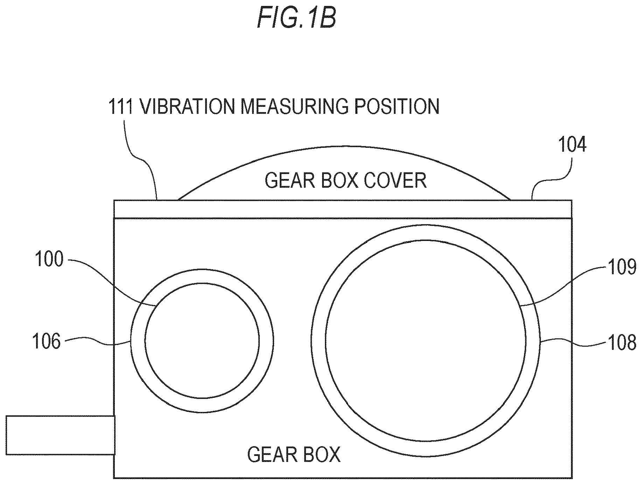

The pinion shaft 100 on which the pinion 105 is fitted and the axle 109 on which the gear 107 is fitted are fixed to a gear box 104. Then, in the gear box 104, a bearing 106 is fitted between the pinion shaft 100 and the pinion 105 and a bearing 108 is fitted between the axle 109 and the gear 107. Fig. 1B is a view illustrating a state where the bearings attached to the gear box 104 are seen from the side.

A position 111 on the gear box 104 is a position where a vibration measuring device is placed. The vibration measuring device includes sensors such as an acceleration sensor and a laser displacement sensor, detects vibration of an object through the sensors, and outputs a signal corresponding to the detected vibrations. The vibration measuring device placed at the position 111 measures vibrations transmitted to the position 111 and outputs a signal indicating the measured vibrations to an external information processing apparatus and the like through wire or radio communication. In this experiment, the vibration measuring device is placed at the position 111, but may be placed at an arbitrary position as long as it is the position where vibrations due to the bearing 106 is transmitted.

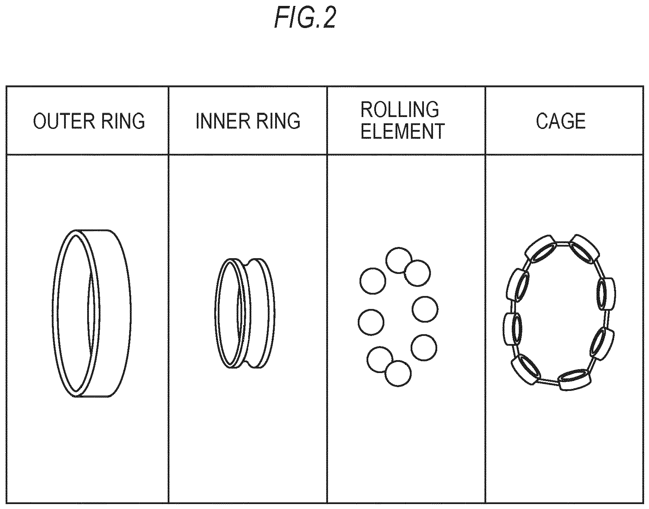

Here, the bearing 106 will be explained. Fig. 2 is a view explaining one example composition of the bearing 106. The bearing 106 is composed of four parts of an outer ring, an inner ring, rolling elements, and a cage. Fig. 2 illustrates an outline of the outer ring, the inner ring, the rolling elements, and the cage of the bearing 106. The bearing 106 is formed in which the rolling elements held in the cage are sandwiched between the outer ring and the inner ring.

In this experiment, as the bearing 106 fitted on the pinion 105, a flawless normal bearing, a bearing having a flaw in an inner ring, and a bearing having a flaw in a cage were each used. For each of the bearings 106, the drive motor 101 was driven and the vibration measuring device placed at the position 111 measured vibrations, to thereby acquire measured data for performing an abnormality diagnosis of the bearing 106. In this experiment, the drive motor 101 was driven so that the rotation number of the inner ring of the bearing 106 became 2954.7 rpm (round per minute).

As above, measured data of the vibrations at the position 111 were acquired in each of the case of the normal bearing 106, the case of the bearing 106 having a flaw in the inner ring, and the case of the bearing 106 having a flaw in the cage.

Next, there will be explained a method of the abnormality diagnosis of the bearing 106 using the measured data measured by the vibration measuring device.

Hereinafter, the measured data measured by the vibration measuring device are set to measured data y.

In this experiment, the measured data y was approximated by a revised autoregressive model and from coefficients of the revised autoregressive model, a characteristic amount was calculated.

A value of the measured data y at a certain time k ($1 \leqq k \leqq M$) is set to $y_k$. M is a number indicating a time until when, as the measured data y, data are contained, and is preset. The autoregressive model approximating $y_k$ is as in Equation 1 below, for example. The autoregressive model is, as expressed in Equation 1, an equation expressing a predicted value $y^\wedge_k$ of data at the time k ($m + 1 \leqq k \leqq M$) in time-series data (in the equation, $\wedge$ is illustrated by being added above y) by using an actual value $y_{k-1}$ of data at a time k - l ($1 \leqq l \leqq m$) prior to the time in the time-series data.

[Mathematical equation 1]

[Mathematical equation 1]

$$\hat{y}_k = \sum_{l=1}^{m} \alpha_l \, y_{k-l}, \qquad m+1 \leq k \leq M \qquad \cdots (\text{Equation 1})$$

In Equation 1, $\alpha$ is a coefficient of the autoregressive model. Further, m is an integer that is less than M, m indicating how many pieces of past data before the time are used to approximate $y_k$ being the value of the measured data y at the time k in the autoregressive model, and is set to 1500 in this experiment.

Then, there is derived a conditional expression for approximating the predicted value $y^\wedge_k$ by the autoregressive model to $y_k$ being an actual measured value by using a least square method. As the condition for approximating the predicted value y^k by the autoregressive model to $y_k$ being the actual measured value, minimizing a square error between $y^\wedge_k$ imparted by Equation 1 and $y_k$ is considered. That is, in this experiment, the least square method is used in order to approximate the predicted value $Y^\wedge_k$ by the autoregressive model to $y_k$. Equation 2 below is a conditional expression for minimizing the square error between the measured data and the predicted value by the autoregressive model.

[Mathematical equation 2]

[Mathematical equation 2]

$$\frac{\partial}{\partial \alpha_j} \sum_{k=m+1}^{M} \left| y_k - \sum_{l=1}^{m} \alpha_l \, y_{k-l} \right|^2$$

$$= 2 \sum_{k=m+1}^{M} \left\{ \left( y_k - \sum_{l=1}^{m} \alpha_l \, y_{k-l} \right) y_{k-j} \right\}$$

$$= 2 \left\{ \sum_{k=m+1}^{M} y_k \, y_{k-j} - \sum_{l=1}^{m} \alpha_l \sum_{k=m+1}^{M} y_{k-j} \, y_{k-l} \right\} = 0, \qquad 1 \leq j \leq m \qquad \cdots (\text{Equation 2})$$

The relation of Equation 3 below is satisfied by Equation 2.

[Mathematical equation 3]

[Mathematical equation 3]

$$\sum_{k=m+1}^{M} y_k \, y_{k-j} = \alpha_1 \sum_{k=m+1}^{M} y_{k-j} \, y_{k-1} + \alpha_2 \sum_{k=m+1}^{M} y_{k-j} y_{k-2} + \cdots + \alpha_m \sum_{k=m+1}^{M} y_{k-j} y_{k-m}, \qquad 1 \leq j \leq m$$

$$\cdots (\text{Equation 3})$$

Further, Equation 3 is modified (expressed in matrix notation form), and thereby Equation 4 below is obtained.

[Mathematical equation 4]

[Mathematical equation 4]

$$R_{j0} = (R_{j1} \quad R_{j2} \quad \cdots \quad R_{jm}) \begin{pmatrix} \alpha_1 \\ \alpha_2 \\ \vdots \\ \alpha_m \end{pmatrix}, \qquad 1 \le j \le m \qquad \cdots (\text{Equation } 4)$$

$R_{jl}$ in Equation 4 is called autocorrelation of the measured data y, and is a value defined by Equation 5 below. |j - l| at this time is referred to as a time lag.

[Mathematical equation 5]

[Mathematical equation 5]

$$R_{jl} = \sum_{k=m+1}^{M} y_{k-j} y_{k-l}, \qquad 1 \le j \le m, \quad 0 \le l \le m \qquad \cdots (\text{Equation } 5)$$

Based on Equation 4, Equation 6, which is a relational expression relating to coefficients of the following autoregressive model, is considered. Equation 6 is an equation derived from a condition that minimizes the error between the predicted value of the measured data by the autoregressive model and measured data at the time corresponding to the predicted value, and is called a Yule-Walker equation. Further, Equation 6 is a linear equation in which a vector composed of coefficients of the autoregressive model is set to a variable vector, and a constant vector on the left side in Equation 6 is a vector whose component is the autocorrelation of the measured data with a time lag of 1 to m to be referred to as an autocorrelation vector in the following explanation. Further, a coefficient matrix on the right side in Equation 6 is a matrix whose component is the autocorrelation of the measured data with a time lag of 0 to m - 1 to be referred to as an autocorrelation matrix in the following explanation.

[Mathematical equation 6]

[Mathematical equation 6]

$$\begin{pmatrix} R_{10} \\ R_{20} \\ \vdots \\ R_{m0} \end{pmatrix} = \begin{pmatrix} R_{11} & R_{12} & \cdots & R_{1m} \\ R_{21} & R_{22} & \cdots & R_{2m} \\ \vdots & \vdots & \ddots & \vdots \\ R_{m1} & R_{m2} & \cdots & R_{mm} \end{pmatrix} \begin{pmatrix} \alpha_1 \\ \alpha_2 \\ \vdots \\ \alpha_m \end{pmatrix} \qquad \cdots (\text{Equation } 6)$$

Further, the autocorrelation matrix on the right side in Equation 6 (a matrix of m × m composed of $R_{jl}$) is described as an autocorrelation matrix R like Equation 7 below.

[Mathematical equation 7]

[Mathematical equation 7]

$$R = \begin{pmatrix} R_{11} & R_{12} & \cdots & R_{1m} \\ R_{21} & R_{22} & \cdots & R_{2m} \\ \vdots & \vdots & & \vdots \\ R_{m1} & R_{m2} & \cdots & R_{mm} \end{pmatrix} \qquad \cdots (\text{Equation } 7)$$

In general, when deriving the coefficient of the autoregressive model, a method of solving a coefficient $\alpha$ of Equation 6 is used. In Equation 6, the coefficient $\alpha$ is derived so as to make the predicted value $y\hat{}_k$ of the measured data at the time k derived by the autoregressive model come close to the actual value $y_k$ of the measured data at the time k as much as possible. Therefore, the frequency characteristic of the autoregressive model includes a large number of frequency components included in the actual value $y_k$ of the measured data at each time. Therefore, in the case where a large amount of noise is contained in the measured data y, for example, a problem is caused in which the extraction of the signal relating to the vibrations of the bearing 106 is failed or extraction of a characteristic according to a failure state of the bearing 106 is failed.

Thus, as a result that the present inventors focused on the autocorrelation matrix R to be multiplied by the coefficient $\alpha$ of the autoregressive model and earnestly examined it, they conceived the idea that it is only necessary to rewrite the autocorrelation matrix R so that the effect of the noise contained in the measured data y is reduced by using a part of eigenvalues of the autocorrelation matrix R and the signal component relating to the vibrations of the bearing is emphasized (an SN ratio is increased).

There will be explained a concrete example of the above below.

The autocorrelation matrix R is subjected to singular value decomposition. Elements of the autocorrelation matrix R are symmetric, and thus when the autocorrelation matrix R is subjected to singular value decomposition, like Equation 8 below, the result becomes the product of an orthogonal matrix U, a diagonal matrix $\Sigma$, and a transposed matrix of the orthogonal matrix U.

[Mathematical equation 8]

[Mathematical equation 8]

$$R = U \Sigma U^T \qquad \cdots (\text{Equation 8})$$

The matrix $\Sigma$ in Equation 8 is a diagonal matrix whose diagonal component is the eigenvalues of the autocorrelation matrix R as expressed in Equation 9 below. The diagonal component of the diagonal matrix $\Sigma$ is set to $\sigma_{11}, \sigma_{22}, \cdots, \sigma_{mm}$. Further, the matrix U is an orthogonal matrix in which each column component vector is an eigenvector of the autocorrelation matrix R. The column component vector of the diagonal matrix U is set to $u_1, u_2, \cdots, u_m$. There is a correspondence relation in which the eigenvalue of the autocorrelation matrix R responsive to an eigenvector $u_j$ is $\sigma_{jj}$. The eigenvalue of the autocorrelation matrix R is a variable reflecting the strength of each frequency component included in a time waveform of the predicted value of the measured data by the autoregressive model.

[Mathematical equation 9]

[Mathematical equation 9]

$$\Sigma = \begin{pmatrix} \sigma_{11} & 0 & 0 \\ 0 & \ddots & 0 \\ 0 & 0 & \sigma_{mm} \end{pmatrix}, \quad U = (u_1 \quad u_2 \quad \cdots \quad u_m) \quad \cdots (\text{Equation 9})$$

The values of $\sigma_{11}, \sigma_{22}, \cdots, \sigma_{mm}$ being the diagonal components of the diagonal matrix $\Sigma$ obtained as a result of the singular value decomposition of the autocorrelation matrix R are set in descending order in order to simplify the illustration of the mathematical equation. A matrix R' is defined as in Equation 10 below by using, out of these eigenvalues of the autocorrelation matrix R, s pieces of the eigenvalues as the used eigenvalue number being a number set to 1 or more and less than m, which are chosen from the largest. The matrix R' is a matrix resulting from approximating the autocorrelation matrix R by using s pieces of the eigenvalues as the used eigenvalue number out of the eigenvalues of the autocorrelation matrix R.

[Mathematical equation 10]

[Mathematical equation 10]

$$R' = U_s \Sigma_s U_s^T \qquad \cdots (\text{Equation 10})$$

A matrix $U_S$ in Equation 10 is a matrix of $m \times s$ composed of s pieces of the column component vectors, which are chosen from the left of the orthogonal matrix U of Equation 8, (eigenvectors corresponding to the eigenvalues to be used). That is, the matrix $U_S$ is a submatrix composed of the left elements of $m \times s$ cut out from the orthogonal matrix U. Further, $U_S^T$ is a transposed matrix of $U_S$ and is a matrix of $s \times m$ composed of s pieces of row component vectors, which are chosen from the top of the matrix $U^T$ in Equation 8. A matrix $\Sigma_s$ in Equation 10 is a matrix of $s \times s$ composed of s pieces of columns, which are chosen from the left, and s pieces of rows, which are chosen from the top, of the diagonal matrix $\Sigma$ in Equation 8. That is, the matrix $\Sigma_s$ is a submatrix composed of the top and left elements of $s \times s$ cut out from the diagonal matrix $\Sigma$.

When the matrix $\Sigma_s$ and the matrix $U_s$ are expressed by the matrix elements, Equation 11 below is obtained.

[Mathematical equation 11]

[Mathematical equation 11]

$$\Sigma_s = \begin{pmatrix} \sigma_{11} & 0 & 0 \\ 0 & \ddots & 0 \\ 0 & 0 & \sigma_{ss} \end{pmatrix}, \quad U_s = (u_1 \quad u_2 \quad \cdots \quad u_s) \quad \cdots\text{(Equation 11)}$$

By using the matrix R' in place of the autocorrelation matrix R, the relational expression of Equation 6 is rewritten into Equation 12 below.

[Mathematical equation 12]

[Mathematical equation 12]

$$\begin{pmatrix} R_{10} \\ R_{20} \\ \vdots \\ R_{m0} \end{pmatrix} = U_s \Sigma_s U_s^T \begin{pmatrix} \alpha_1 \\ \alpha_2 \\ \vdots \\ \alpha_m \end{pmatrix} \quad \cdots\text{(Equation 12)}$$

Equation 12 is modified, and thereby Equation 13 that derives the coefficient $\alpha$ is obtained. The model that calculates the predicted value $y^\wedge_k$ from Equation 1 while using the coefficient $\alpha$ derived by Equation 13 is referred to as the "revised autoregressive model."

There has been so far explained that the values of $\sigma_{11}$, $\sigma_{22}$, $\cdots$, $\sigma_{mm}$ being the diagonal components of the diagonal matrix $\Sigma$ are set in descending order, but it is not necessary to set the diagonal components of the diagonal matrix $\Sigma$ in descending order during a process of calculating the coefficient $\alpha$ and in this case, the matrix $U_s$ is not the submatrix composed of the left elements of m $\times$ s cut out from the orthogonal matrix U, but is a submatrix composed of the cut out column component vectors corresponding to the eigenvalues to be used (eigenvectors), and the matrix $\Sigma_s$ is not the submatrix composed of the top and left elements of s $\times$ s cut out from the diagonal matrix $\Sigma$, but is a submatrix to be cut out so as to make the eigenvalues to be used become the diagonal components.

Equation 13 is an equation to be used for determining the coefficient of the revised autoregressive model. The matrix $U_s$ in Equation 13 is a third matrix being a matrix in which the eigenvectors corresponding to the eigenvalues to be used are set to the column component vectors, which is the submatrix of the orthogonal matrix obtained by the singular value decomposition of the autocorrelation matrix R. Further, the matrix $\Sigma_s$ in Equation 13 is a second matrix being a matrix in which the eigenvalues to be used are set to the diagonal components, which is the submatrix of the diagonal matrix obtained by the singular value decomposition of the autocorrelation matrix R. Then, the matrix $U_s \Sigma_s U_s^T$ in Equation 13 is a first matrix being a matrix derived from the matrix $\Sigma_s$ and the matrix $U_s$.

[Mathematical equation 13]

[Mathematical equation 13]

$$\begin{pmatrix} \alpha_1 \\ \alpha_2 \\ \vdots \\ \alpha_m \end{pmatrix} = U_s \Sigma_s^{-1} U_s^T \begin{pmatrix} R_{10} \\ R_{20} \\ \vdots \\ R_{m0} \end{pmatrix} \quad \cdots\text{(Equation 13)}$$

The right side of Equation 13 is calculated, and thereby the coefficient $\alpha$ of the revised autoregressive model is derived. One example of the method of deriving the coefficient of the revised autoregressive model has been explained above, but deriving the coefficient of the autoregressive model to be the base has been explained by the method of using the least square method for the predicted value in order to make it understandable intuitively. However, there has been known a method of defining the autoregressive model by using the concept of a stochastic process and deriving its coefficient generally. In this case, the autocorrelation is expressed by autocorrelation of the stochastic process (a population), and this autocorrelation of the stochastic process is expressed as a function of a time lag. Thus, the autocorrelation of the measured data in this embodiment may be replaced with a value calculated by another calculating formula as long as it approximates the autocorrelation of the stochastic process, and for example, $R_{22}$ to $R_{mm}$ are autocorrelation with a time lag of 0, but they may be replaced with $R_{11}$.

Then, there will be explained a method of deriving the frequency characteristic of the revised autoregressive model to be specified by the derived coefficient $\alpha$.

It is possible to derive a method of calculating the frequency characteristic by the following procedures because using a property in which a prediction error $x_k$ of the predicted value $y\hat{}k$ of the measured data imparted by Equation 1 turns into white noise makes it possible to regard the revised autoregressive model as a linear time invariant system with the prediction error $x_k$ being white noise set as an input and the actual measured value $y_k$ of the measured data set as an output. The one in which the revised autoregressive model is regarded as a linear time invariant model will be referred to as a system simply below. The prediction error $x_k$ is expressed by Equation 14 below.

[Mathematical equation 14]

[Mathematical equation 14]

$$y_k - \sum_{l=1}^{m} \alpha_l \, y_{k-l} = x_k \qquad \cdots (\text{Equation } 14)$$

z-transformation is applied to both sides of Equation 14, and then Equation 15 below is obtained.

[Mathematical equation 15]

[Mathematical equation 15]

$$\left(1 - \sum_{l=1}^{m} \alpha_l z^{-l}\right) Y(z) = X(z) \qquad \cdots (\text{Equation } 15)$$

From Equation 15, a transfer function H(z) being a z-transformation of an impulse response of the system is derived as in Equation 16 below.

[Mathematical equation 16]

[Mathematical equation 16]

$$H(z) = \frac{Y(z)}{X(z)}$$

$$= \frac{1}{1 - \sum_{l=1}^{m} \alpha_l z^{-l}} \qquad \cdots (\text{Equation } 16)$$

The frequency characteristic of the system appears as changes in amplitude and phase of an output responsive to a sinusoidal input, and is derived by Fourier transform of the impulse response. In other words, the transfer function H(z) when z is turned on a unit circle of a complex plane results in the frequency characteristic. Here, placing z in Equation 16 as in Equation 17 below is considered.

[Mathematical equation 17]

[Mathematical equation 17]

$$z = e^{j\omega T} \qquad \cdots (\text{Equation } 17)$$

Here, j denotes an imaginary unit, $\omega$ denotes an angular frequency, and T denotes a sampling interval.

In this case, an amplitude characteristic of H(z) (the frequency characteristic of the system) can be expressed like Equation 18 below. $\omega T$ in Equation 18 is set to vary within a range of 0 to $2\pi$.

[Mathematical equation 18]

[Mathematical equation 18]

$$\left| H\left(e^{j\omega T}\right) \right| = \frac{1}{\left| 1 - \sum_{l=1}^{m} \alpha_l e^{-jl\omega T} \right|} \qquad \cdots \text{(Equation 18)}$$

In this experiment, for each of the obtained measured data, the autocorrelation matrix R was derived by using Equation 5 and Equation 7 and was subjected to the singular value decomposition expressed by Equation 8, to thereby derive an eigenvalue of the autocorrelation matrix R, resulting in that the distribution of the eigenvalues of the autocorrelation matrix R was derived. Further, a waveform of the measured data was derived for each of the obtained measured data. Further, for each of the obtained measured data, the matrix $\Sigma_s$ and the matrix $U_s$ were derived from the singular value decomposition of the autocorrelation matrix R derived by the above procedures by using Equation 11, the coefficient $\alpha$ of the revised autoregressive model was derived by using Equation 5 and Equation 13, and a waveform of the revised autoregressive model to be specified by the derived coefficient $\alpha$ was derived. Then, for each of the obtained measured data, the frequency characteristic, and so on of the revised autoregressive model were derived by using Equation 18.

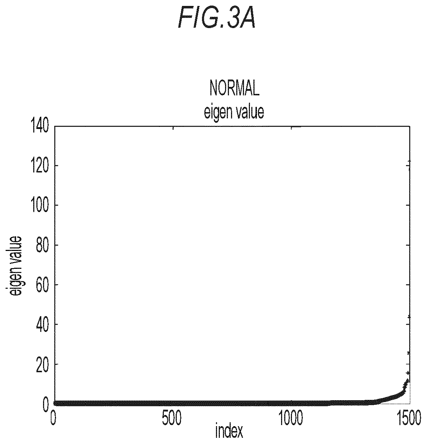

The derived experimental results are will be explained while using Fig. 3A to Fig. 3C to Fig. 9.

Fig. 3A to Fig. 3C are views illustrating the distribution of the eigenvalues of the autocorrelation matrix R derived by the above-described procedures on the respective measured data.

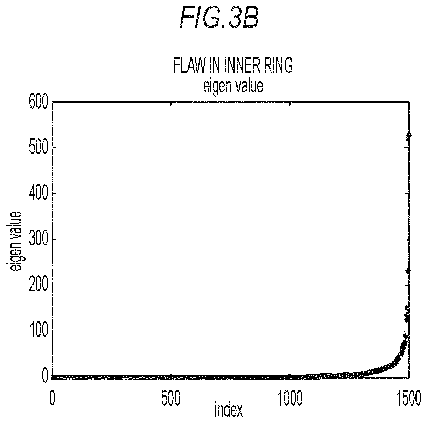

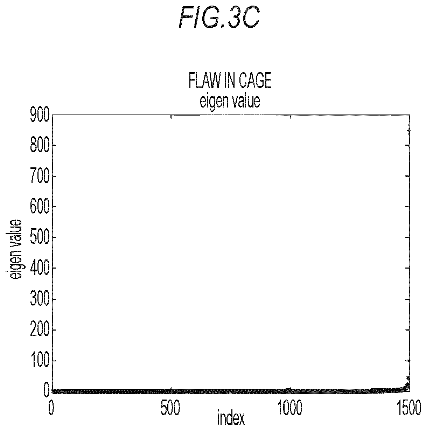

The graph in Fig. 3A is a graph indicating the distribution of the eigenvalues of the autocorrelation matrix R when using the measured data measured in the case where a normal bearing, namely the flawless bearing 106, was used. The graph of Fig. 3B is a graph indicating the distribution of the eigenvalues of the autocorrelation matrix R when using the measured data measured in the case where a bearing, namely the bearing 106 having a flaw in the inner ring, was used. The graph of Fig. 3C is a graph indicating the distribution of the eigenvalues of the autocorrelation matrix R when using the measured data measured in the case where a bearing, namely the bearing 106 having a flaw in the cage, was used.

The graphs in Fig. 3A to Fig. 3C each are a graph in which eigenvalues $\sigma_{11}$ to $\sigma_{mm}$, which are obtained by subjecting the autocorrelation matrix R to singular value decomposition, are aligned in ascending order and are plotted, and the horizontal axis indicates an index of the eigenvalue and the vertical axis indicates the value of the eigenvalue.

Seeing Fig. 3A reveals that there are five eigenvalues having a value significantly higher than that of the others. It reveals that particularly, the two eigenvalues out of the five eigenvalues have a value higher than that of the other three eigenvalues.

It is found out that out of the eigenvalues of the autocorrelation matrix R, the number of eigenvalues having a value significantly higher than that of the others is significantly smaller than the total number of eigenvalues.

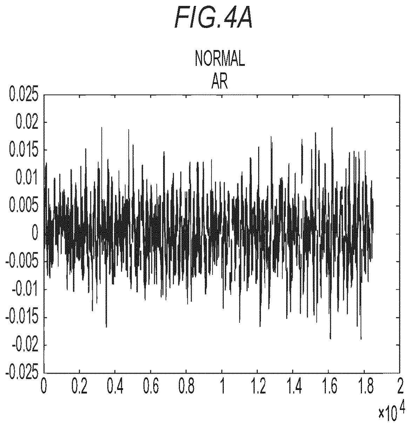

Fig. 4A to Fig. 4C are views illustrating waveforms of the respective measured data.

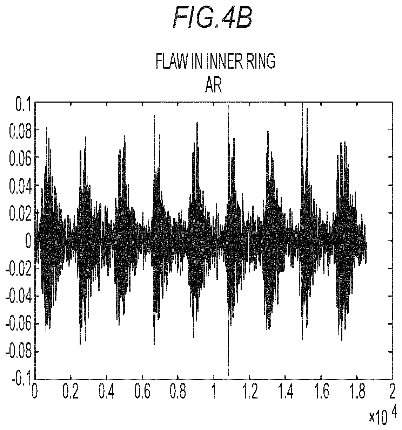

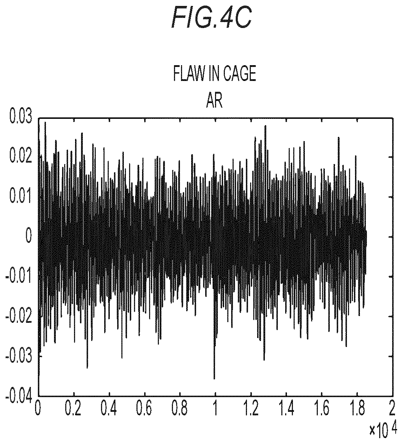

The graph in Fig. 4A is a graph indicating the waveform of the measured data measured in the case where a normal bearing, namely the flawless bearing 106, was used, and the horizontal axis indicates time and the vertical axis indicates an actual value of the measured data at a corresponding time. The graph of Fig. 4B is a graph indicating the waveform of the measured data measured in the case where a bearing, namely the bearing 106 having a flaw in the inner ring, was used, and the horizontal axis indicates time and the vertical axis indicates an actual value of the measured data at a corresponding time. The graph of Fig. 4C is a graph indicating the waveform of the measured data measured in the case where a bearing, namely the bearing 106 having a flaw in the cage, was used, and the horizontal axis indicates time and the vertical axis indicates an actual value of the measured data at a corresponding time.

Seeing the respective graphs in Fig. 4A to Fig. 4C reveals that the waveforms of Fig. 4A and Fig. 4C, for example, are similar. Therefore, it is difficult to diagnose the abnormality occurring in the bearing 106 from the respective graphs in Fig. 4A to Fig. 4C.

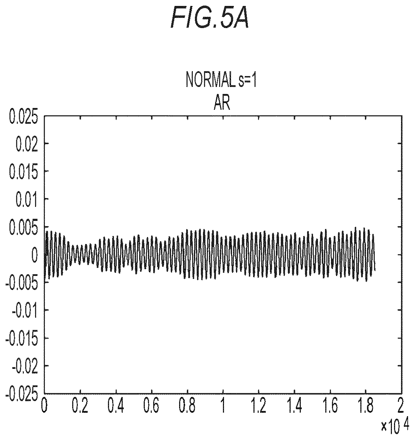

Fig. 5A to Fig. 5C are views each illustrating a waveform of measured data approximated by a revised autoregressive model specified by the coefficient $\alpha$ derived by setting the used eigenvalue number s to one.

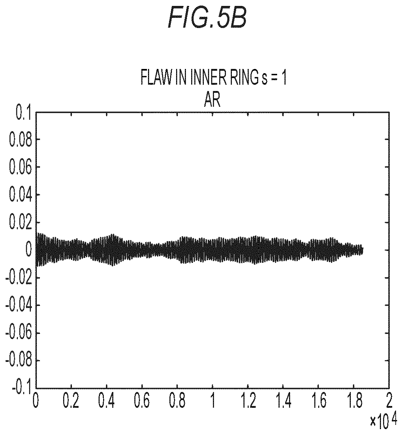

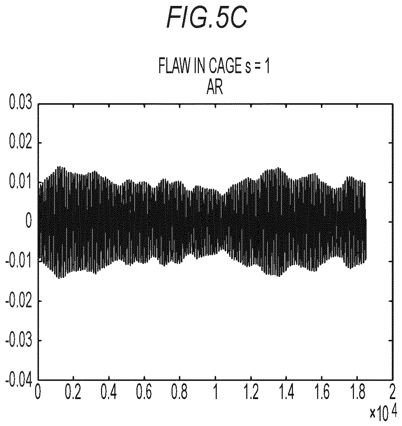

The graph in Fig. 5A is a graph indicating the waveform of the measured data approximated by the revised autoregressive model specified by the coefficient a derived from the measured data measured in the case where a normal bearing, namely the flawless bearing 106, was used by setting the used eigenvalue number s to one, and the horizontal axis indicates time and the vertical axis indicates a predicted value of the measured data at a corresponding time. The graph in Fig. 5B is a graph indicating the waveform of the measured data approximated by the revised autoregressive model specified by the coefficient a derived from the measured data measured in the case where a bearing, namely the bearing 106 having a flaw in the inner ring, was used by setting the used eigenvalue number s to one, and the horizontal axis indicates time and the vertical axis indicates a predicted value of the measured data at a corresponding time. The graph in Fig. 5C is a graph indicating the waveform of the measured data approximated by the revised autoregressive model specified by the coefficient $\alpha$ derived from the measured data measured in the case where a bearing, namely the bearing 106 having a flaw in the cage, was used by setting the used eigenvalue number s to one, and the horizontal axis indicates time and the vertical axis indicates a predicted value of the measured data at a corresponding time.

It is found out that noise components have been reduced from the respective graphs in Fig. 5A to Fig. 5C as compared to the respective graphs in Fig. 4A to Fig. 4C.

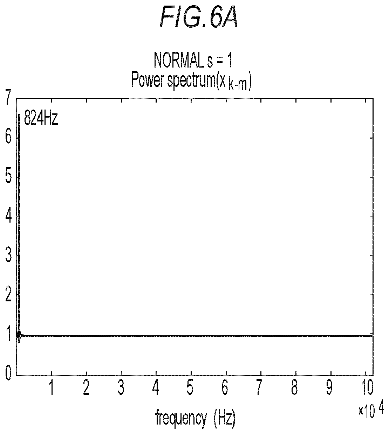

Fig. 6A to Fig. 6C are views each illustrating a frequency characteristic of the revised autoregressive model specified by the coefficient a derived by setting the used eigenvalue number s to one. The graphs in Fig. 6A to Fig. 6C are graphs indicating the frequency characteristics of the respective waveforms of Fig. 5A to Fig. 5C.

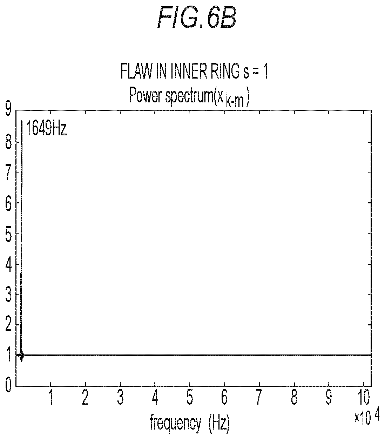

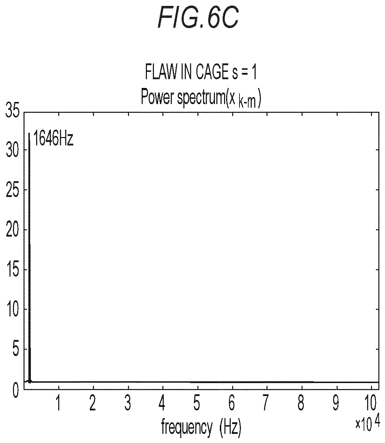

The graph in Fig. 6A is a graph indicating the frequency characteristic, which is derived by Equation 18, of the revised autoregressive model specified by the coefficient $\alpha$ derived from the measured data measured in the case where a normal bearing, namely the flawless bearing 106, was used by setting the used eigenvalue number s to one, and the horizontal axis indicates frequency and the vertical axis indicates a signal strength. The graph in Fig. 6B is a graph indicating the frequency characteristic, which is derived by Equation 18, of the revised autoregressive model specified by the coefficient $\alpha$ derived from the measured data measured in the case where a bearing, namely the bearing 106 having a flaw in the inner ring, was used by setting the used eigenvalue number s to one, and the horizontal axis indicates frequency and the vertical axis indicates a signal strength. The graph in Fig. 6C is a graph indicating the frequency characteristic, which is derived by Equation 18, of the revised autoregressive model specified by the coefficient $\alpha$ derived from the measured data measured in the case where a bearing, namely the bearing 106 having a flaw in the cage, was used by setting the used eigenvalue number s to one, and the horizontal axis indicates frequency and the vertical axis indicates a signal strength.

Seeing the graph in Fig. 6A reveals that a peak rises at a place of the frequency being 824 Hz. Further, seeing the graph in Fig. 6B reveals that a peak rises at a place of the frequency being 1649 Hz. Further, seeing the graph in Fig. 6C reveals that a peak rises at a place of the frequency being 1646 Hz.

Seeing the frequencies at which the peak rises in the respective graphs in Fig. 6A to Fig. 6C reveals that a peak rises at a frequency smaller in the case of the flawless bearing 106 than in the case of the bearing 106 having a flaw. That is, it is found out that it is possible to judge the presence or absence of a flaw in the bearing 106 from the frequency characteristic of the revised autoregressive model specified by the coefficient a derived by setting the used eigenvalue number s to one.

From the above, it was possible to learn that it is possible to perform the abnormality diagnosis of the bearing 106 based on the frequency characteristic of the revised autoregressive model specified by the coefficient $\alpha$ derived based on a single eigenvalue of the autocorrelation matrix R.

However, as illustrated by the graphs in Fig. 6B and Fig. 6C, the peak of the frequency characteristic rises at the frequencies similar in value in the case of the bearing 106 having a flaw in the inner ring and the case of the bearing 106 having a flaw in the cage. Therefore, it is possible to judge, from the frequency characteristic of the revised autoregressive model specified by the coefficient $\alpha$ derived by setting the used eigenvalue number s to one, the presence or absence of a flaw in the inner ring or the cage of the bearing 106, but it is difficult to judge whether the flaw is a flaw in the inner ring, a flaw in the cage, or flaws in the both.

Thus, in this experiment, the value of the used eigenvalue number s was further increased to five, the coefficient $\alpha$ was derived by using, out of the eigenvalues of the autocorrelation matrix R, the five eigenvalues chosen from the largest, and a waveform and a frequency characteristic of the revised autoregressive model specified by the derived coefficient $\alpha$ were derived.

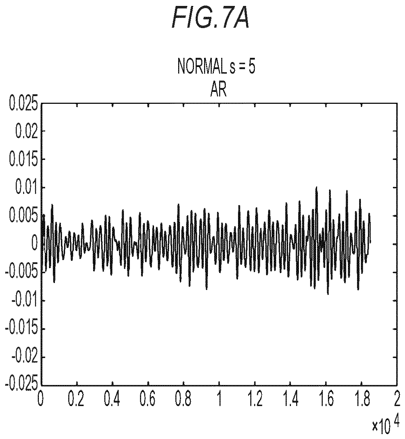

Fig. 7A to Fig. 7C are views each illustrating a waveform of the revised autoregressive model specified by the coefficient $\alpha$ derived by setting the used eigenvalue number s to five.

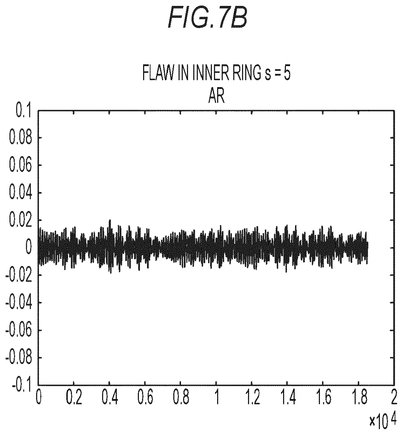

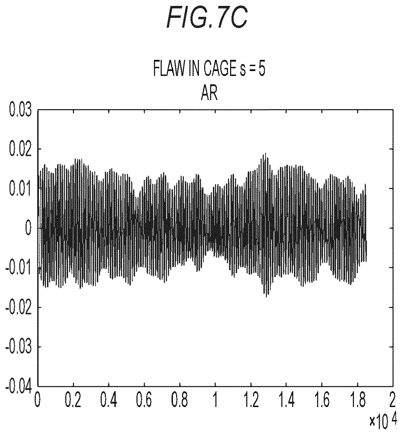

The graph in Fig. 7A is a graph indicating the waveform of the measured data approximated by the revised autoregressive model specified by the coefficient $\alpha$ derived from the measured data measured in the case where a normal bearing, namely the flawless bearing 106, was used by setting the used eigenvalue number s to five, and the horizontal axis indicates time and the vertical axis indicates a predicted value of the measured data at a corresponding time. The graph in Fig. 7B is a graph indicating the waveform of the measured data approximated by the revised autoregressive model specified by the coefficient $\alpha$ derived from the measured data measured in the case where a bearing, namely the bearing 106 having a flaw in the inner ring, was used by setting the used eigenvalue number s to five, and the horizontal axis indicates time and the vertical axis indicates a predicted value of the measured data at a corresponding time. The graph in Fig. 7C is a graph indicating the waveform of the measured data approximated by the revised autoregressive model specified by the coefficient $\alpha$ derived from the measured data measured in the case where a bearing, namely the bearing 106 having a flaw in the cage, was used by setting the used eigenvalue number s to five, and the horizontal axis indicates time and the vertical axis indicates a predicted value of the measured data at a corresponding time.

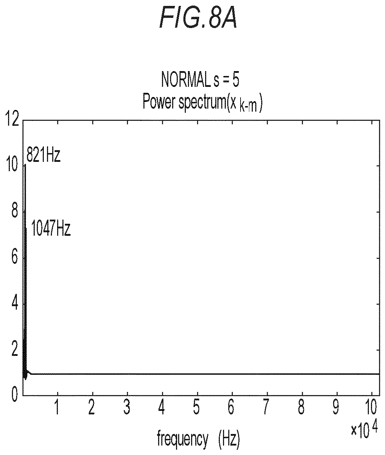

Fig. 8A to Fig. 8C are views each illustrating a frequency characteristic of the revised autoregressive model specified by the coefficient $\alpha$ derived by setting the used eigenvalue number s to five. The graphs in Fig. 8A to Fig. 8C are graphs indicating the frequency characteristics of the respective waveforms of Fig. 7A to Fig. 7C.

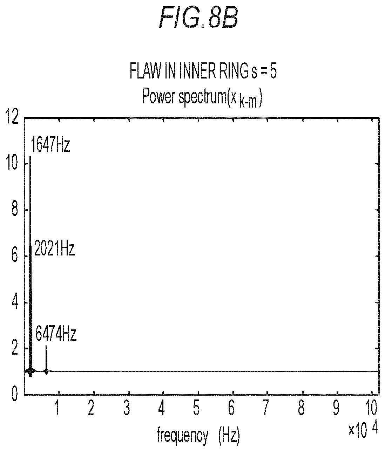

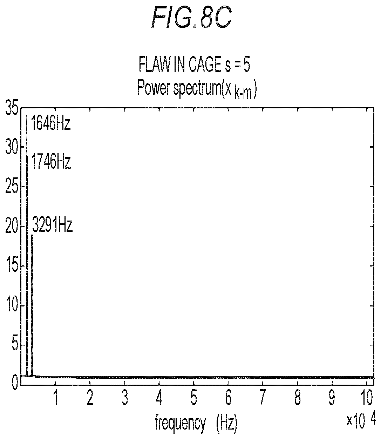

The graph in Fig. 8A is a graph indicating the frequency characteristic, which is derived by Equation 18, of the revised autoregressive model specified by the coefficient $\alpha$ derived from the measured data measured in the case where a normal bearing, namely the flawless bearing 106, was used by setting the used eigenvalue number s to five, and the horizontal axis indicates frequency and the vertical axis indicates a signal strength. The graph in Fig. 8B is a graph indicating the frequency characteristic, which is derived by Equation 18, of the revised autoregressive model specified by the coefficient a derived from the measured data measured in the case where a bearing, namely the bearing 106 having a flaw in the inner ring, was used by setting the used eigenvalue number s to five, and the horizontal axis indicates frequency and the vertical axis indicates a signal strength. The graph in Fig. 8C is a graph indicating the frequency characteristic, which is derived by Equation 18, of the revised autoregressive model specified by the coefficient $\alpha$ derived from the measured data measured in the case where a bearing, namely the bearing 106 having a flaw in the cage, was used by setting the used eigenvalue number s to five, and the horizontal axis indicates frequency and the vertical axis indicates a signal strength.

Seeing the graph in Fig. 8A reveals that a peak rises at a place of the frequency being 821 Hz and a place of the frequency being 1047 Hz. Further, seeing the graph in Fig. 8B reveals that a peak rises at a place of the frequency being 1648 Hz, a place of the frequency being 2021 Hz, and a place of the frequency being 6474 Hz. Further, seeing the graph in Fig. 8C reveals that a peak rises at a place of the frequency being 1646 Hz, a place of the frequency being 3291 Hz, and a place of the frequency being 1746 Hz.

Making a comparison between the peaks at the respective graphs in Fig. Fig. 8A to Fig. 8C and the peaks at the respective graphs in Fig. 6A to Fig. 6C reveals that the peaks each rise also at the graphs in Fig. 8A to Fig. 8C in the vicinities of the frequencies where the peak rises at the graphs in Fig. 6A to Fig. 6C. The peaks, which are not seen at the graphs in Fig. 6A to Fig. 6C, are further seen at the graphs in Fig. 8A to Fig. 8C.

As above, it is found out that by increasing the eigenvalues of the autocorrelation matrix R to be used for deriving the coefficient $\alpha$, the signal strength of the components of the frequencies other than the frequencies where the peak rises in Fig. 6A to Fig. 6C increase at the predicted values by the revised autoregressive model. That is, it is found out that the eigenvalue of the autocorrelation matrix R to be used for deriving the coefficient $\alpha$ is correlated with the strength of the component of each frequency included in the time waveform of the predicted value of the measured data by the revised autoregressive model specified by the derived coefficient $\alpha$.

Further, seeing the graphs in Fig. 8B and Fig. 8C reveals that a peak rises in the vicinity of 1640 Hz similarly to the graphs in Fig. 6B and Fig. 6C. However, it reveals that a peak further rises also at 2021 Hz and 6474 Hz in Fig. 8B and a peak further rises also at 3291 Hz and 1746 Hz in Fig. 8C. As above, it is possible to see, in Fig. 8A to Fig. 8C, a significant difference in the frequency at which a peak rises between the bearing 106 having a flaw in the inner ring and the bearing 106 having a flaw in the cage. That is, setting the used eigenvalue number s to five makes it possible to recognize whether the flaw in the bearing is the flaw in the inner ring, the flaw in the cage, or the flaw in the both.

As above, the present inventors learned that increasing the used eigenvalue number s makes it possible to recognize the flaw existing portion that is difficult to be recognized when the used eigenvalue number s is one. On the other hand, the present inventors learned that by an excessive increase in the used eigenvalue number s, the revised autoregressive model approximates the actual measured data and signal strengths of noise components and so on, which are not useful for the abnormality diagnosis of the bearing 106, also increase, resulting in that a peak caused by the noise component is generated also in the frequency characteristic obtained by Equation 18. That is, it is thought that out of the eigenvalues of the autocorrelation matrix R, some of the eigenvalues each having a relatively high value are used to derive the coefficient $\alpha$, thereby making it possible to derive the revised autoregressive model in which out of components contained in the measured data, the components useful for the abnormality diagnosis of the object are approximated. As the eigenvalues used when deriving the coefficient $\alpha$, the eigenvalues that are judged as relatively large eigenvalues from such graphs as illustrated in Fig. 3A to Fig. 3C by a user visually may be used, or the eigenvalues that are equal to or more than the average value of the entire eigenvalues, for example, may be used. As above, it is possible to change the method of selecting the eigenvalues to be used when deriving the coefficient $\alpha$ according to the intended use.

From the above, it was possible to learn that adjusting the used eigenvalue number s, which is the number of eigenvalues of the autocorrelation matrix R that are used for deriving the coefficient $\alpha$, makes it possible to perform the abnormality diagnosis of the bearing 106 more accurately.

The processing in this embodiment is as follows. That is, based on the findings obtained by this experiment, the autocorrelation matrix R derived from the measured data of vibrations of an object is subjected to singular value decomposition, and by using some of obtained eigenvalues, the coefficient of the revised autoregressive model approximating the measured data is derived. Then, from the revised autoregressive model specified by the derived coefficient, a predicted value of the measured data is not derived by calculating the right side of Equation 1, but a frequency characteristic of the revised autoregressive model is acquired by using the derived coefficient. Then, based on the acquired frequency characteristic, the abnormality of the object is diagnosed. However, processing to derive the predicted value of the measured data (the left side value of Equation 1) may be added to the processing in this embodiment.

(System configuration)

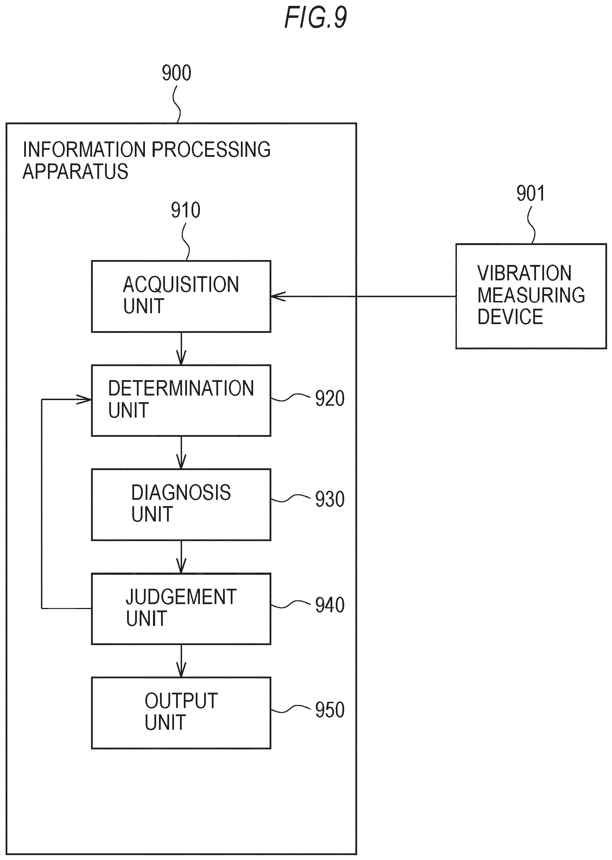

Fig. 9 is a diagram illustrating one example of a system configuration of the diagnosis system in this embodiment. The diagnosis system is a system of performing an abnormality diagnosis of an object that moves periodically. The diagnosis system includes an information processing apparatus 900 and a vibration measuring device 901. In this embodiment, the diagnosis system performs an abnormality diagnosis of a bearing used for a railway bogie.

The information processing apparatus 900 is an information processing apparatus such as a personal computer (PC), a server device, or a tablet device that performs an abnormality diagnosis of a bearing. Further, the information processing apparatus 900 may be a computer incorporated in an electric railcar or the like.

The vibration measuring device 901 is a measuring device that includes a sensor such as an acceleration sensor, detects vibrations of the object via the sensor, and outputs a signal according to the detected vibrations to an external apparatus such as the information processing apparatus 900 by wire or radio.

(Functional configuration of the information processing apparatus)

There will be explained one example of functions that the information processing apparatus 900 has with reference to Fig. 9.

The information processing apparatus 900 includes an acquisition unit 910, a determination unit 920, a diagnosis unit 930, a judgement unit 940, and an output unit 950.

<Acquisition unit 910>

The acquisition unit 910 acquires the measured data y relating to the periodical movements of the object that moves periodically.

In this embodiment, the acquisition unit 910 acquires the measured data y of vibrations measured by the vibration measuring device 901 placed at the position 111 when the bearing 106 is rotating.

<Determination unit 920>

The determination unit 920 determines the coefficient $\alpha$ in the revised autoregressive model based on the measured data y acquired by the acquisition unit 910. The revised autoregressive model is Equation 1 expressing the predicted value $y^\wedge_k$ of the measured data y using actual values $y_{k-1}$ to $y_{k-m}$ of the measured data y and the coefficients $\alpha$ (= $\alpha_1$ to $\alpha_m$) corresponding to these actual values. The determination unit 920 determines the coefficient $\alpha$ in the revised autoregressive model by using Equation 12 being an equation using a first matrix R' (Equation 10) obtained by extracting the components useful for the abnormality diagnosis of the object from the autocorrelation matrix R in place of the autocorrelation matrix R expressed by Equation 7 in Equation (a Yule-Walker equation) used for determining the coefficients in the autocorrelation matrix that is known generally. Equation 6 is an equation in which the autocorrelation matrix R whose component is the autocorrelation of the measured data y with a time lag of 0 to m - 1 is set to a coefficient matrix and an autocorrelation vector whose component is the autocorrelation of the measured data y with a time lag of 1 to m is set to a constant vector.

Equation 6 can be derived as a conditional expression that expresses a condition that minimizes a square error between the predicted value $y^\wedge_k$ of the measured data y calculated by Equation 1 and the actual measured value $y_k$ of the measured data y at the time k corresponding to the predicted value $y^\wedge_k$ of the measured data y. The first matrix R' is derived from the diagonal matrix $\Sigma$ in which the eigenvalues of the autocorrelation matrix R derived by subjecting the autocorrelation matrix R to the singular value decomposition (Equation 8) are set to diagonal components and the orthogonal matrix U in which eigenvectors of the autocorrelation matrix R are set to column components. The first matrix R' is the matrix $U_s \Sigma_s U_s^T$ derived from the matrix $\Sigma_s$ in which s pieces of the eigenvalues as the used eigenvalue number are set to the diagonal components, which is a submatrix of the diagonal matrix $\Sigma$, and the matrix $U_s$ in which eigenvectors corresponding to s pieces of the eigenvalues as the used eigenvalue number are set to the column component vector, which is a submatrix of the orthogonal matrix U, by using, out of the eigenvalues of the autocorrelation matrix R, s pieces of the eigenvalues as the used eigenvalue number that is set to 1 or more and less than m. S pieces of the eigenvalues as the used eigenvalue number may be set to include the eigenvalue having the largest value out of the eigenvalues of the autocorrelation matrix R, but are preferably chosen in descending order of value.

When the later-described judgement unit 940 judges that the abnormality diagnosis of the object is not successful, the determination unit 920 resets the used eigenvalue number s and determines the coefficient $\alpha$ in the revised autoregressive model again.

diagnosis unit 930>

The diagnosis unit 930 diagnoses the abnormality of the object based on the coefficient $\alpha$ determined by the determination unit 920. The diagnosis unit 930 may derive the frequency characteristic exhibiting the distribution of frequencies of the revised autoregressive model from Equation 18 by using the coefficient $\alpha$ determined by the determination unit 920 to diagnose the abnormality of the object based on this frequency characteristic. Further, the diagnosis unit 930 may regard the presence or absence of the abnormality in the object as a result of the diagnosis or regard the portion having an abnormality in the object as a result of the diagnosis based on the frequency at which a peak is shown in the frequency characteristic.

In this embodiment, the presence or absence of a flaw in the bearing 106 or the portion having a flaw is regarded as a result of the diagnosis.

<Judgement unit 940>

The judgement unit 940 judges whether or not the abnormality diagnosis of the object by the diagnosis unit 930 is successful. When the judgement unit 940 judges the abnormality diagnosis of the object to be unsuccessful, the previously-described determination unit 920 resets the used eigenvalue number s and determines the coefficient $\alpha$ of the revised autoregressive model again.

<Output unit 950>

The output unit 950 outputs information relating to the result of the diagnosis by the diagnosis unit 930.

(Hardware configuration of the information processing apparatus)

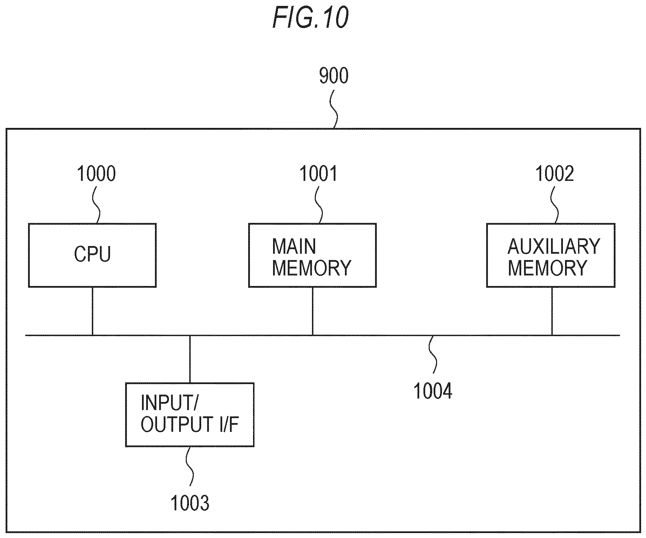

Fig. 10 is a diagram illustrating one example of a hardware configuration of the information processing apparatus 900.

The information processing apparatus 900 includes a CPU 1000, a main memory 1001, an auxiliary memory 1002, and an input/output IF 1003. These respective components are connected to be able to communicate to one another through a system bus 1004.

The CPU 1000 is a central processing unit that controls the information processing apparatus. The main memory 1001 is a memory such as a RAM (Random Access Memory) that functions as a work area or a temporary storage location for data of the CPU 1000. The auxiliary memory 1002 is a memory such as a ROM (Read Only Memory), a HDD (Hard Disk Drive), or a SSD (Solid State Drive) that stores various programs set data, measured data output from the vibration measuring device 901, diagnosis information, and so on. The input/output I/F 1003 is an interface used for exchanging information with an external device such as the vibration measuring device 901.

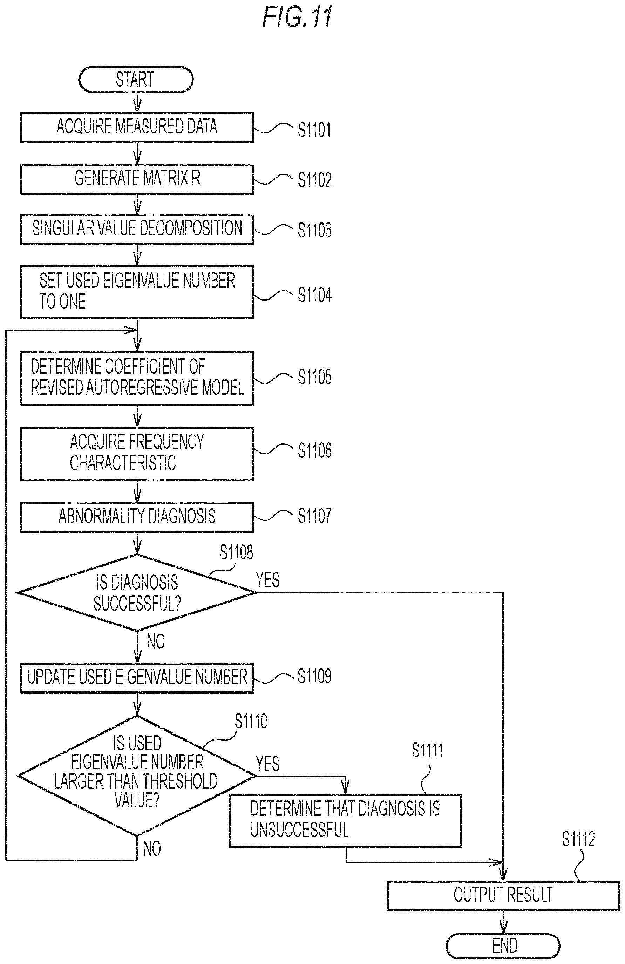

The CPU 1000 executes processing based on programs stored in the auxiliary memory 1002 and the like, and thereby the functions of the information processing apparatus 900 explained in Fig. 9 and processing of a flowchart to be explained later in Fig. 11, and the like are achieved.

(Abnormality diagnosis processing)

In this embodiment, the diagnosis system is set to diagnose the abnormality of the bearing 106 based on measured data of vibrations measured by the vibration measuring device 901 placed at the position 111 under the same state as in Fig. 1. In this embodiment, the diagnosis system is set to diagnose the abnormality of the bearing 106 by specifying in which of the portions of the bearing 106 a flaw exists, but may be set to diagnose the abnormality of the bearing 106 by specifying whether or not a flaw exists in the bearing 106. In this embodiment, the diagnosis system is set to diagnose the abnormality of the bearing 106 based on the measured data measured beforehand by the vibration measuring device 901.

Fig. 11 is a flowchart illustrating one example of the processing of the information processing apparatus 900.

At S1101, the acquisition unit 910 acquires the measured data y of vibrations measured by the vibration measuring device 901. The acquisition unit 910 acquires, as the measured data y, $y_1$ to $y_M$ being measured data at a time 1 to a time M.

At S1102, the determination unit 920 generates the autocorrelation matrix R by using Equation 5 and Equation 7 based on the measured data y acquired at S1101, a constant M set beforehand, and a number m indicating how many pieces of past data are used to approximate data at a certain time in the revised autoregressive model. The determination unit 920 reads pieces of information on M and m stored beforehand, to thereby acquire M and m. In this embodiment, the value of m is 1500. Further, M is an integer larger than m.

At S1103, the determination unit 920 subjects the autocorrelation matrix R generated at S1102 to singular value decomposition, to thereby acquire the orthogonal matrix U and the diagonal matrix $\Sigma$ of Equation 8, and acquires the eigenvalues $\sigma_{11}$ to $\sigma_{mm}$ of the autocorrelation matrix R from the diagonal matrix $\Sigma$.

At S1104, the determination unit 920 sets the used eigenvalue number s, which is the number of eigenvalues of the autocorrelation matrix R to be used for deriving the coefficient $\alpha$ of the revised autoregressive model, to one.

At S1105, the determination unit 920 chooses, out of on to $\sigma_{mm}$ being the plural eigenvalues of the autocorrelation matrix R, the eigenvalues $\sigma_{11}$ to $\sigma_{ss}$ from the largest by the used eigenvalue number s as the eigenvalues of the autocorrelation matrix R to be used for deriving the coefficient $\alpha$ of the revised autoregressive model. Then, the determination unit 920 determines the coefficient $\alpha$ of the revised autoregressive model by using Equation 13 based on the measured data y, the eigenvalues $\sigma_{11}$ to $\sigma_{ss}$, and the orthogonal matrix U obtained by the singular value decomposition of the autocorrelation matrix R.

At S1106, the diagnosis unit 930 acquires the frequency characteristic of the revised autoregressive model specified by the coefficient $\alpha$ determined at S1105 by using Equation 18 based on the coefficient $\alpha$ determined at S1105.

At S1107, the diagnosis unit 930 diagnoses the abnormality of the bearing 106 based on the frequency characteristic acquired at S1106.

In this embodiment, the diagnosis information being information used for the abnormality diagnosis of the bearing 106, which is information indicating correspondence of the frequency at which a peak rises in the frequency characteristic and the state of the bearing 106, is stored in the auxiliary memory beforehand. The diagnosis information is information indicating that the bearing 106 is normal as long as the frequency at which a peak rises in the frequency characteristic is within a set range and the bearing 106 has a flaw as long as the frequency at which a peak rises in the frequency characteristic is out of a set range, or the like, for example. Further, the diagnosis information may be information indicating the range of the frequency at which a peak rises in the frequency characteristic, which corresponds to the state where the bearing 106 has a flaw in a specific portion, for example. Further, in the case where the bearing 106 is in a state of having a flaw as long as a peak rises at a frequency that is equal to or more than a set threshold value and the bearing 106 is in a normal state as long as a peak rises at a frequency that is less than the threshold value, for example, the diagnosis information may be information on the threshold value.

Further, as illustrated in Fig. 6A to Fig. 6C and Fig. 8A to Fig. 8C, even when the objects being a target to be diagnosed such as the bearing 106 are in the same state, they differ in the place where a peak rises in the frequency characteristic of the revised autoregressive model according to the value of the used eigenvalue number s. Therefore, the auxiliary memory 1002 stores the diagnosis information according to the used eigenvalue number beforehand.

The diagnosis unit 930 acquires the diagnosis information according to the value of the used eigenvalue number s from the auxiliary memory 1002. In this embodiment, the diagnosis unit 930 acquires, as the diagnosis information, correspondence information of a state of the bearing 106 and a range of the frequency at which a peak rises in the frequency characteristic according to the state.

The diagnosis unit 930 specifies the frequency at which a peak rises based on the frequency characteristic acquired at S1106. The diagnosis unit 930 specifies the frequency that is equal to or more than a threshold value in which a signal strength is set as the frequency at which a peak rises from the frequency characteristic acquired at S1106, for example. The CPU 1000 may specify, in the case where the frequency specified that a peak rises is consecutive, for example (a peak rises at 100 Hz, 101Hz, and 102Hz, for example), out of these consecutive frequencies, the frequency having the highest signal strength as the frequency at which a peak rises.

The diagnosis unit 930 diagnoses the abnormality of the bearing 106 based on the specified frequency at which a peak rises and the acquired diagnosis information. The diagnosis unit 930 specifies to which of the states of the bearing 106 the specified frequency corresponds based on the correspondence of the state of the bearing 106 indicated by the diagnosis information and the range of the frequency, for example.

At S1108, the judgement unit 940 judges whether or not the abnormality diagnosis is successful based on a diagnosis result at S1107. When specifying that the bearing 106 is in a state indicating that a flaw exists in a specific portion or in a state of being normal at S1107, for example, the judgement unit 940 judges the abnormality diagnosis to be successful and the information processing apparatus 900 proceeds to processing at S1112. When specifying that the bearing 106 is in a state indicating that a flaw exists in an unspecified portion or failing to specify whether or not a flaw exists at S1107, for example, the judgement unit 904 judges the abnormality diagnosis to be unsuccessful and the information processing apparatus 900 proceeds to processing at S1109.

At S1109, the determination unit 920 changes the value of the used eigenvalue number s. The CPU 1000 sets, for example, a value obtained by adding one to the current value of the used eigenvalue number s as a new value of the used eigenvalue number s.

At S1110, the determination unit 920 judges whether or not the value of the used eigenvalue number s is larger than the set threshold value. When the determination unit 920 judges the value of the used eigenvalue number s to be larger than the set threshold value, the information processing apparatus 900 proceeds to processing at S1111. Further, when the determination unit 920 judges the value of the used eigenvalue number s to be equal to or less than the set threshold value, the information processing apparatus 900 proceeds to processing at S1105. Thereby, the determination unit 920 uses the used eigenvalue number s changed in the value and determines the coefficient $\alpha$ of the revised autoregressive model again.

At S1111, the determination unit 920 judges the abnormality diagnosis of the bearing 106 to be unsuccessful and the information processing apparatus 900 proceeds to processing at S1112.

At S1112, the output unit 950 outputs information indicating the result of the abnormality diagnosis of the bearing 106. The output unit 950 outputs the information indicating the result of the abnormality diagnosis of the bearing 106 by displaying it on a display device, for example. Further, the output unit 950 may output the information indicating the result of the abnormality diagnosis of the bearing 106 by storing it in the auxiliary memory 1002, for example. Further, the output unit 950 may output the information indicating the result of the abnormality diagnosis of the bearing 106 by transmitting it to a set transmission destination such as an external server device, for example.

(Summary)

As above, in this embodiment, the diagnosis system generates the autocorrelation matrix R from the measured data measured from the periodical movements of the object, subjects the autocorrelation matrix R to the singular value decomposition, and determines the coefficient $\alpha$ of the revised autoregressive model approximating the measured data by using, out of the obtained eigenvalues, a set number of the eigenvalues chosen from the largest. Then, the diagnosis system derives the frequency characteristic of the revised autoregressive model from the determined coefficient a and diagnoses the abnormality of the bearing 106 based on the derived frequency characteristic. Using some of the eigenvalues of the autocorrelation matrix R makes the diagnosis system possible to determine the coefficient $\alpha$ of the revised autoregressive model approximating the measured data so that the component useful for the abnormality diagnosis of the bearing 106 remains and the component unuseful for the abnormality diagnosis of the bearing 106 does not remain. This makes the diagnosis system possible to perform the abnormality diagnosis more accurately based on the component of the measured data useful for the abnormality diagnosis of the bearing 106.

Further, the processing in this embodiment makes the diagnosis system possible to extract the component useful for the abnormality diagnosis from the measured data without necessity to assume what frequency signal is used for the abnormality diagnosis or the like beforehand.

<Embodiment 2>

In the embodiment 1, the experiment to derive the frequency characteristic of the revised autoregressive model was performed only in the case where the inner ring and the cage out of the parts composing the bearing 106 have a flaw (see Fig. 6A to Fig. 6C and Fig. 8A to Fig. 8C). Therefore, there is a possibility that accurate detection of the flaw in the rolling element and the flaw in the outer ring fails in the case where a sampling frequency when the acquisition unit 910 acquires the measured data y of the vibrations at S1101 is a frequency higher than the frequencies at which a peak rises at the graphs in Fig. 6A to Fig. 6C and Fig. 8A to Fig. 8C, but frequencies at which a peak rises at graphs of frequency characteristics of a revised autoregressive model in the case where the rolling element and the outer ring have a flaw are higher than this sampling frequency.

Thus, the present inventors further performed the experiment similar to the experiment to diagnose the bearing abnormality explained in the embodiment 1 by using, as the bearing 106, each of a bearing having a flaw in the rolling element and a bearing having a flaw in the outer ring. There will be explained experimental results.

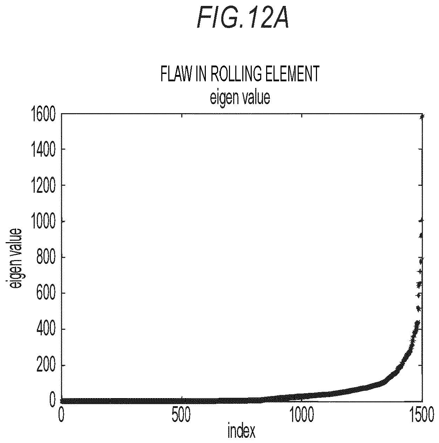

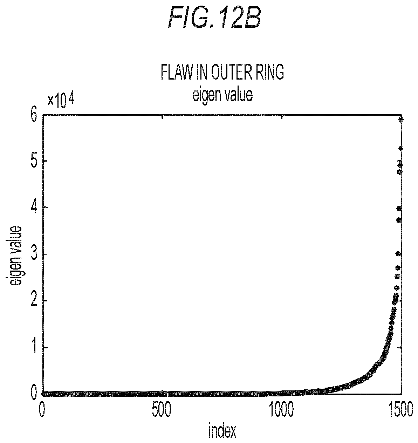

Fig. 12A and Fig. 12B each are a view illustrating a distribution of eigenvalues of the autocorrelation matrix R similarly to Fig. 3A to Fig. 3C.

The graph in Fig. 12A is a graph indicating the distribution of eigenvalues of the autocorrelation matrix R when using measured data measured in the case where a bearing, namely the bearing 106 having a flaw in the rolling element, was used. The graph in Fig. 12B is a graph indicating the distribution of eigenvalues of the autocorrelation matrix R when using measured data measured in the case where a bearing, namely the bearing 106 having a flaw in the outer ring, was used.

Similarly to Fig. 3A to Fig. 3C, the graphs in Fig. 12A and Fig. 12B each are a graph in which the eigenvalues $\sigma_{11}$ to $\sigma_{mm}$ obtained by subjecting the autocorrelation matrix R to singular value decomposition are aligned in ascending order and are plotted, and the horizontal axis indicates an index of the eigenvalue and the vertical axis indicates a value of the eigenvalue.

In the both cases of Fig. 12A and Fig. 12B, it is found out that the number of eigenvalues having a value significantly higher than that of the others out of the eigenvalues of the autocorrelation matrix R is significantly smaller than the total number of eigenvalues.

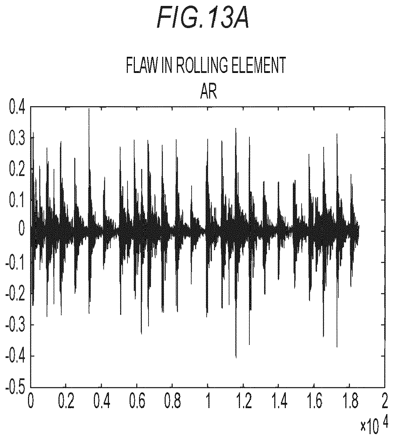

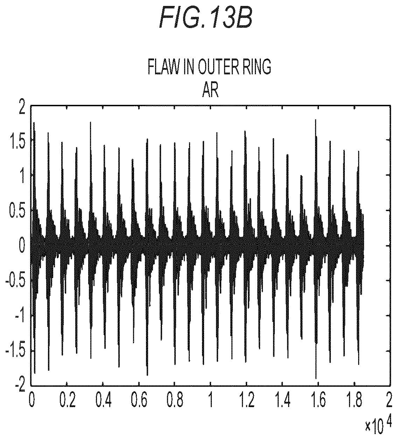

Fig. 13A and Fig. 13B are views illustrating waveforms of the respective measured data similarly to Fig. 4A to Fig. 4C.

The graph in Fig. 13A is a graph indicating the waveform of the measured data measured in the case where a bearing, namely the bearing 106 having a flaw in the rolling element, was used, and the horizontal axis indicates time and the vertical axis indicates an actual value of the measured data at a corresponding time. The graph of Fig. 13B is a graph indicating the waveform of the measured data measured in the case where a bearing, namely the bearing 106 having a flaw in the outer ring, was used, and the horizontal axis indicates time and the vertical axis indicates an actual value of the measured data at a corresponding time.

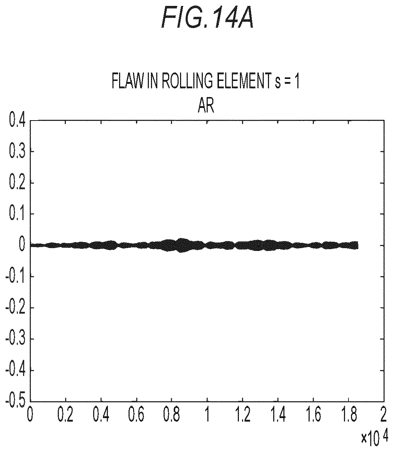

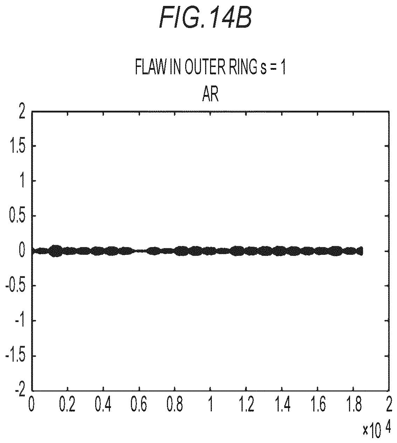

Fig. 14A and Fig. 14B are views each illustrating a waveform of measured data approximated by a revised autoregressive model specified by the coefficient $\alpha$ derived by setting the used eigenvalue number s to one similarly to Fig. 5A to Fig. 5C.

The graph in Fig. 14A is a graph indicating the waveform of the measured data approximated by the revised autoregressive model specified by the coefficient $\alpha$ derived from the measured data measured in the case where a bearing, namely the bearing 106 having a flaw in the rolling element, was used by setting the used eigenvalue number s to one, and the horizontal axis indicates time and the vertical axis indicates a predicted value of the measured data at a corresponding time.

The graph in Fig. 14B is a graph indicating the waveform of the measured data approximated by the revised autoregressive model specified by the coefficient a derived from the measured data measured in the case where a bearing, namely the bearing 106 having a flaw in the outer ring, was used by setting the used eigenvalue number s to one, and the horizontal axis indicates time and the vertical axis indicates a predicted value of the measured data at a corresponding time.

It is found out that noise components have been reduced from the respective graphs in Fig. 14A and Fig. 14B as compared to the respective graphs in Fig. 13A and Fig. 13B.

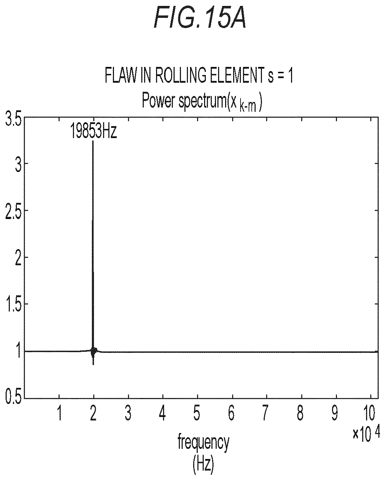

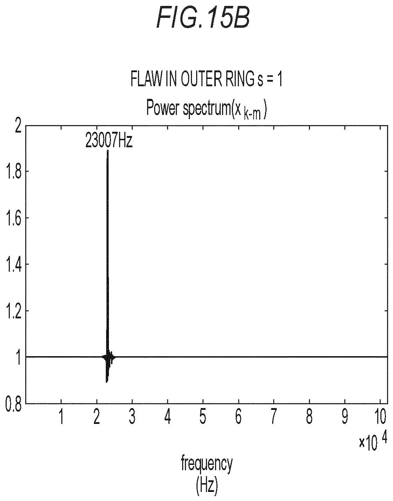

Fig. 15A and Fig. 15C are views each illustrating a frequency characteristic of the revised autoregressive model specified by the coefficient $\alpha$ derived by setting the used eigenvalue number s to one similarly to Fig. 6A to Fig. 6C. The graphs in Fig. 15A and Fig. 15B are graphs indicating the frequency characteristics of the respective waveforms of Fig. 14A and Fig. 14B.

The graph in Fig. 15A is a graph indicating the frequency characteristic, which is derived by Equation 18, of the revised autoregressive model specified by the coefficient $\alpha$ derived from the measured data measured in the case where a bearing, namely the bearing 106 having a flaw in the rolling element, was used by setting the used eigenvalue number s to one, and the horizontal axis indicates frequency and the vertical axis indicates a signal strength. The graph in Fig. 15B is a graph indicating the frequency characteristic, which is derived by Equation 18, of the revised autoregressive model specified by the coefficient $\alpha$ derived from the measured data measured in the case where a bearing, namely the bearing 106 having a flaw in the outer ring, was used by setting the used eigenvalue number s to one, and the horizontal axis indicates frequency and the vertical axis indicates a signal strength.

Seeing the graph in Fig. 15A reveals that a peak rises at a place of the frequency being 19853 Hz. Further, seeing the graph in Fig. 15B reveals that a peak rises at a place of the frequency being 23007 Hz.

Seeing the frequencies at which a peak rises at the respective graphs in Fig. 15A and Fig. 15B reveals that the frequency in Fig. 15B is higher than that in Fig. 15A. Further, the frequency at which a peak rises at each of the graphs in Fig. 15A and Fig. 15B is significantly higher than that at each of the graphs in Fig. 6A to Fig. 6C. Therefore, it is found out that it is possible to judge the presence or absence of a flaw in the rolling element or the outer ring of the bearing 106 from the frequency characteristic of the revised autoregressive model specified by the coefficient $\alpha$ derived by setting the used eigenvalue number s to one.

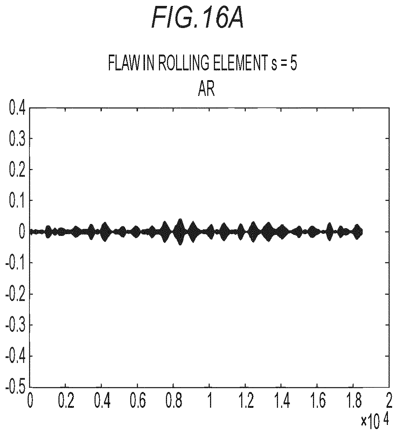

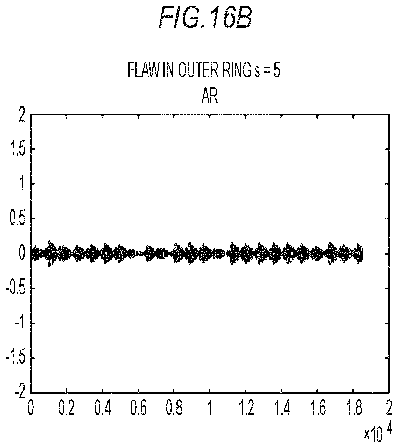

Fig. 16A and Fig. 16B are views each illustrating a waveform of the revised autoregressive model specified by the coefficient $\alpha$ derived by setting the used eigenvalue number s to five similarly to Fig. 7A to Fig. 7C.

The graph in Fig. 16A is a graph indicating the waveform of the measured data approximated by the revised autoregressive model specified by the coefficient $\alpha$ derived from the measured data measured in the case where a bearing, namely the bearing 106 having a flaw in the rolling element, was used by setting the used eigenvalue number s to five, and the horizontal axis indicates time and the vertical axis indicates a predicted value of the measured data at a corresponding time. The graph in Fig. 16B is a graph indicating the waveform of the measured data approximated by the revised autoregressive model specified by the coefficient $\alpha$ derived from the measured data measured in the case where a bearing, namely the bearing 106 having a flaw in the outer ring, was used by setting the used eigenvalue number s to five, and the horizontal axis indicates time and the vertical axis indicates a predicted value of the measured data at a corresponding time.

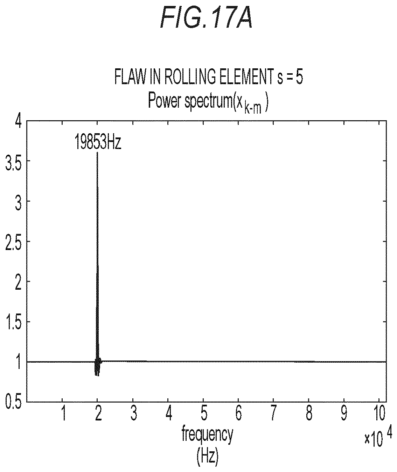

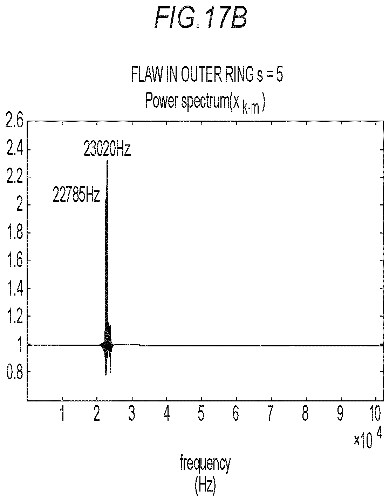

Fig. 17A and Fig. 17B are views each illustrating a frequency characteristic of the revised autoregressive model specified by the coefficient a derived by setting the used eigenvalue number s to five similarly to Fig. 8A to Fig. 8C. The graphs in Fig. 17A and Fig. 17B are graphs indicating the frequency characteristics of the respective waveforms of Fig. 16A and Fig. 16B.

The graph in Fig. 17A is a graph indicating the frequency characteristic, which is derived by Equation 18, of the revised autoregressive model specified by the coefficient $\alpha$ derived from the measured data measured in the case where a bearing, namely the bearing 106 having a flaw in the rolling element, was used by setting the used eigenvalue number s to five, and the horizontal axis indicates frequency and the vertical axis indicates a signal strength. The graph in Fig. 17B is a graph indicating the frequency characteristic, which is derived by Equation 18, of the revised autoregressive model specified by the coefficient $\alpha$ derived from the measured data measured in the case where a bearing, namely the bearing 106 having a flaw in the outer ring, was used by setting the used eigenvalue number s to five, and the horizontal axis indicates frequency and the vertical axis indicates a signal strength.

Seeing the graph in Fig. 17A reveals that a peak rises at a place of the frequency being 19853 Hz. Further, seeing the graph in Fig. 17B reveals that a peak rises at a place of the frequency being 22785 Hz and a place of the frequency being 23020 Hz.

Seeing the peaks at the respective graphs in Fig. 6A to Fig. 6C, Fig. 8A to Fig. 8C, Fig. 15A and Fig. 15B, and Fig. 17A and Fig. 17B reveals that out of the peaks generated when the bearing 106 has a flaw, the peak at the highest frequency is the peak generated in the vicinity of 23000 Hz in the case where a flaw exists in the outer ring.

From the above, the present inventors learned that the vibrations of the bearing 106 are measured at a sampling frequency at which a peak at a frequency of 23000 Hz is detectable, thereby making it possible to detect a flaw generated in each portion of the bearing 106. Further, the frequency at which a peak is shown in the frequency characteristic of the revised autoregressive model obtained from the measured data of the vibrations of the bearing 106 seems to be proportional to the number of rotations of the inner ring of the bearing 106. The largest frequency out of the frequencies at which a peak is shown in the frequency characteristic of the revised autoregressive model is 23000 Hz and the number of rotations of the inner ring of the bearing 106 is 2954.7 rpm. Therefore, the present inventors learned that a signal having a frequency up to about 7.8 ($\fallingdotseq$ 23000/2954.7) times as large as the number of rotations of the inner ring is generated in the bearing 106 due to the inner flaw. That is, vibrations relating to rotational movements of the inner ring of the bearing 106 are measured at a sampling frequency at which a peak at 7.8 times the frequency (Hz) of the number of rotations (rpm) of the inner ring of the bearing 106 is detectable, thereby making it possible to detect a flaw generated in each portion of the bearing 106.

Thus, in this embodiment, the same processing as that in the embodiment 1 is performed on data relating to the vibrations relating to the rotational movement of the inner ring of the bearing 106 measured at a sampling frequency at which a signal having 7.8 times the frequency (Hz) of the number of rotations (rpm) of the inner ring of the bearing 106 is detectable from the bearing 106 having the inner ring to rotate.

The system configuration of the diagnosis system in this embodiment is the same as that in the embodiment 1. Further, the hardware configuration and the functional configuration of the information processing apparatus 900 are also the same as those in the embodiment 1.

Differences from the embodiment 1 in the processing of the diagnosis system in this embodiment will be explained.

In this embodiment, the vibration measuring device 901 measures vibrations of the bearing 106 at a sampling frequency at which a signal having 7.8 times the frequency (Hz) of the number of rotations (rpm) of the inner ring of the bearing 106 is detectable. The vibration measuring device 901 measures vibrations relating to the rotational movements of the inner ring of the bearing 106 at 15.6 times the sampling frequency (Hz) of the number of rotations (rpm) of the inner ring of the bearing 106 so that, for example, a Nyquist frequency (Hz) increases 7.8 times the number of rotations (rpm) of the inner ring of the bearing 106. Further, the vibration measuring device 901 may measure vibrations relating to the rotational movements of the inner ring of the bearing 106 at a sampling frequency (Hz) that is equal to or more than 15.6 times the number of rotations (rpm) of the inner ring of the bearing 106. for example.

At S1101, the acquisition unit 910 acquires the measured data y of vibrations measured by the vibration measuring device 901 at a sampling frequency at which a signal having 7.8 times the frequency (Hz) of the number of rotations (rpm) of the inner ring of the bearing 106 is detectable.

As above, in this embodiment, the diagnosis system is designed to perform the abnormality diagnosis of the bearing 106 based on the measured data measured at a sampling frequency at which a signal having 7.8 times the frequency (Hz) of the number of rotations (rpm) of the inner ring of the bearing 106 is detectable. This makes the diagnosis system possible to detect a flaw generated in each portion of the bearing 106.

<Embodiment 3>

(Outline of processing in this embodiment)

In the embodiments 1, 2, the diagnosis system generates the autocorrelation matrix R from the measured data measured from the periodical movements of the object, subjects the autocorrelation matrix R to the singular value decomposition, and determines the coefficient $\alpha$ of the revised autoregressive model approximating the measured data by using, out of the obtained eigenvalues, a set number of the eigenvalues chosen from the largest. Then, the diagnosis system derives the frequency characteristic of the revised autoregressive model from the determined coefficient $\alpha$ and

diagnoses the abnormality of the bearing 106 based on the derived frequency characteristic.

In this embodiment, there will be explained processing to diagnose the abnormality of the bearing based on a pattern of the determined coefficient $\alpha$.

(Experiment to diagnose a bearing abnormality)

There will be explained an experiment performed for evaluating the abnormality diagnosis accuracy of the bearing used for the railway bogie.

The state of this experiment is the same as that of the experiments explained in the embodiments 1, 2 illustrated in Fig. 1A and Fig. 1B.

In this experiment, similarly to the embodiments 1, 2, measured data of vibrations at the position 111 were acquired in each of the case of the normal bearing 106, the case of the bearing 106 having a flaw in the inner ring, the case of the bearing 106 having a flaw in the cage, the case of the bearing 106 having a flaw in the rolling element, and the case of the bearing 106 having a flaw in the outer ring. Then, for each of the obtained measured data, the autocorrelation matrix R was derived by using Equation 5 and Equation 7 and was subjected to the singular value decomposition expressed by Equation 8, to thereby derive eigenvalues of the autocorrelation matrix R, and a distribution of the eigenvalues of the autocorrelation matrix R was derived. In this experiment, the value of m was set to 500.

Further, in this experiment, the following processing was performed for q times in each of the case where the bearing 106 is in a flawless normal state, the case where the bearing 106 is in a state of having a flaw in the inner ring, the case where the bearing 106 is in a state of having a flaw in the cage, the case where the bearing 106 is in a state of having a flaw in the rolling element, and the case where the bearing 106 is in a state of having a flaw in the outer ring. In this experiment, q was set to 50, but may be set to another value such as 30 or 100. That is, of the bearing 106, M pieces of continuous measured data were acquired, for each of M pieces of the acquired continuous measured data, the matrix $\Sigma_s$ and the matrix $U_s$ were derived by using Equation 11, and the coefficient $\alpha$ of the revised autoregressive model was derived by using Equation 5 and Equation 13. The used eigenvalue number s was set to three.

Thereby, in each of five cases, namely, the case where the bearing 106 is in a flawless normal state, the case where the bearing 106 is in a state of having a flaw in the inner ring, the case where the bearing 106 is in a state of having a flaw in the cage, the case where the bearing 106 is in a state of having a flaw in the rolling element, and the case where the bearing 106 is in a state of having a flaw in the outer ring, q pieces of the coefficients $\alpha$ of the revised autoregressive model were acquired.

The state that the bearing 106 can be brought into is set to five states, namely, the flawless normal state, the state of having a flaw in the inner ring, the state of having a flaw in the cage, the state of having a flaw in the rolling element, and the state of having a flaw in the outer ring. The number of states that the bearing 106 can be brought into is set to p below. In this experiment, p is five.

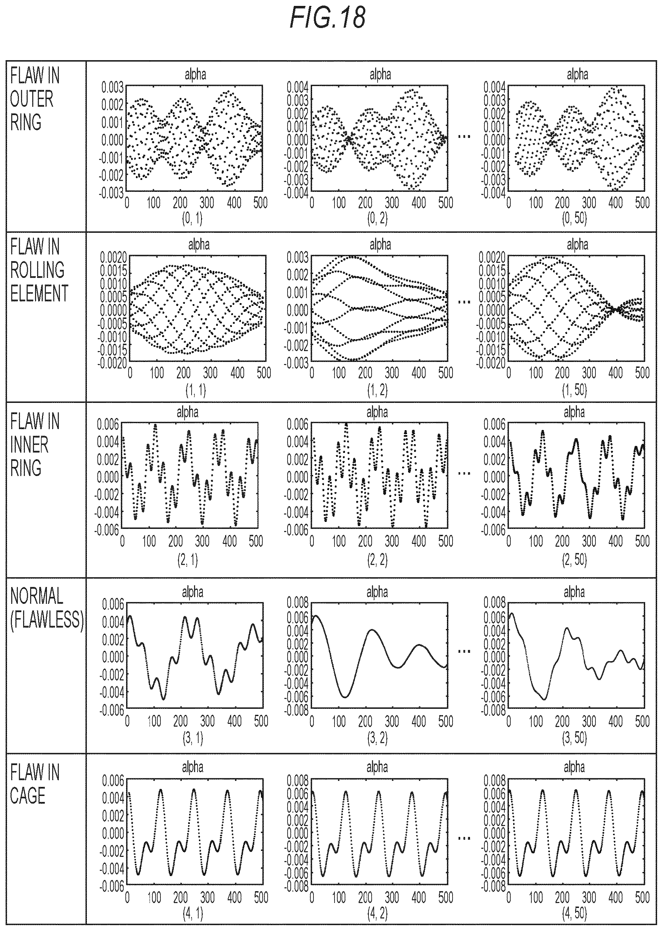

Fig. 18 is a view illustrating patterns of the coefficients a derived by the above-described procedures in each of the case where the bearing 106 is in a normal state, the case where the bearing 106 is in a state of having a flaw in the inner ring, the case where the bearing 106 is in a state of having a flaw in the cage, the case where the bearing 106 is in a state of having a flaw in the rolling element, and the case where the bearing 106 is in a state of having a flaw in the outer ring. The pattern of the coefficient a is information indicating a shape formed when components of the coefficient $\alpha$ are aligned. In this experiment, m is 500, and thus the coefficient $\alpha$ is composed of 500 pieces of components $\alpha 1$ to $\alpha 500$. Each of the patterns illustrated in Fig. 18 is a pattern in which components $\alpha i$ ($1 < = i < = 500$) are aligned in an index i order. This index i can be regarded as an index indicating a measurement point of the measured data y relating to the components of the coefficient in Equation 1. That is, each of the patterns illustrated in Fig. 18 is one example of the pattern in which the respective components of the coefficient $\alpha$ are aligned based on the measurement point of the measured data y relating to the respective components in Equation 1.

Examples of the pattern of the coefficient $\alpha$ include a vector in which the components of the coefficient $\alpha$ are aligned in the index order, a vector in which the components of the coefficient $\alpha$ are aligned in the index order in a manner to skip a predetermined number (for example, one, or the like), a vector in which the components of the coefficient $\alpha$ are aligned in the order reverse to the indexes, and so on. Further, examples of the pattern of the coefficient $\alpha$ include a vector in which the components of the coefficient a resulting from adding the same value to the respective components are aligned in the index order, a vector in which the components of the coefficient $\alpha$ resulting from adding the same value to the respective components are aligned in the index order in a manner to skip a predetermined number (for example, one, or the like), a vector in which the components of the coefficient $\alpha$ resulting from adding the same value to the respective components are aligned in the order reverse to the indexes, and so on. Further, examples of the pattern of the coefficient a include a vector in which the components of the coefficient $\alpha$ resulting from multiplying the respective components by the same value are aligned in the index order, a vector in which the components of the coefficient a resulting from multiplying the respective components by the same value are aligned in the index order in a manner to skip a predetermined number (for example, one, or the like), a vector in which the components of the coefficient $\alpha$

resulting from multiplying the respective components by the same value are aligned in the order reverse to the indexes, and so on. Further, the pattern of the coefficient $\alpha$ being the information indicating the shape formed when the components of the coefficient $\alpha$ are aligned is not a vector but may be an image of a graph in which the components of the coefficient a are aligned.

Seeing the patterns illustrated in Fig. 18 makes it possible to recognize the following. In the case of the bearing 106 having a flaw in the outer ring, each of the patterns of q pieces of the coefficients $\alpha$ is such a pattern as to show a region surrounded by two vertically symmetrical wavy lines. Further, in the case of the bearing 106 having a flaw in the rolling element, each of the patterns of q pieces of the coefficients $\alpha$ is a pattern such that a plurality of wavy lines overlap. Further, in the case of the bearing 106 having a flaw in the inner ring, each of the patterns of q pieces of the coefficients $\alpha$ is a pattern in which a chevron pattern having four peaks is continuous. Further, in the case of the flawless bearing 106, each of the patterns of q pieces of the coefficients $\alpha$ is a waveform pattern that decays gradually. Further, in the case of the bearing 106 having a flaw in the cage, each of the patterns of q pieces of the coefficients $\alpha$ is a pattern in which a chevron pattern having two peaks is continuous.

As above, it is possible to recognize that the coefficient $\alpha$ of the revised autoregressive model exhibits a characteristic pattern in each of the case of the normal bearing 106, the case of the bearing 106 having a flaw in the inner ring, the case of the bearing 106 having a flaw in the cage, the case of the bearing 106 having a flaw in the rolling element, and the case of the bearing 106 having a flaw in the outer ring.

Thus, the present inventors learned that by specifying which of the patterns the coefficient a of the revised autoregressive model exhibits, the diagnosis of the bearing 106 can be performed.

Further, in this experiment, a representative pattern of the coefficient $\alpha$ of the revised autoregressive model was specified by learning in each of the case of the normal bearing 106, the case of the bearing 106 having a flaw in the inner ring, the case of the bearing 106 having a flaw in the cage, the case of the bearing 106 having a flaw in the rolling element, and the case of the bearing 106 having a flaw in the outer ring as below.

First, a matrix Y having a size of m $\times$ d that has columns representing the respective coefficients $\alpha$ illustrated in Fig. 18 is generated like Equation 19 below. d is p $\times$ q, and is 250 in this experiment.

[Mathematical equation 19]

[Mathematical equation 19]

$$
Y = \begin{pmatrix}
\alpha_{1,(0,1)} & \cdots & \alpha_{1,(0,q)} & \alpha_{1,(1,1)} & \cdots & \alpha_{1,(1,q)} & \cdots & \alpha_{1,(p-1,q)} \\
\alpha_{2,(0,1)} & \cdots & \alpha_{2,(0,q)} & \alpha_{2,(1,1)} & \cdots & \alpha_{2,(1,q)} & \cdots & \alpha_{2,(p-1,q)} \\
\vdots & & \vdots & \vdots & & \vdots & & \vdots \\
\alpha_{m,(0,1)} & \cdots & \alpha_{m,(0,q)} & \alpha_{m,(1,1)} & \cdots & \alpha_{m,(1,q)} & \cdots & \alpha_{m,(p-1,q)}
\end{pmatrix} \cdots (\text{Equation } 19)
$$

$\alpha_k$, (i,j) in Equation 19 represents a k-th component $\alpha_k$ of the coefficient $\alpha$ determined from j-th measured data out of q pieces of measured data measured from the bearing 106 in a state corresponding to i. In this experiment, the component of the coefficient $\alpha$ determined from the measured data measured from the bearing 106 in a state of having a flaw in the outer ring is $\alpha_k$, (0,j) in Equation 19 (1 < = k < = m, 1 < = j < = q). Further, the component of the coefficient $\alpha$ determined from the measured data measured from the bearing 106 in a state of having a flaw in the rolling element is $\alpha_k$, (1,j) in Equation 19 (1 < = k < = m, 1 < = j < = q). Further, the component of the coefficient a determined from the measured data measured from the bearing 106 in a state of having a flaw in the inner ring is $\alpha_k$, (2,j) in Equation 19 (1 < = k < = m, 1 < = j < = q). Further, the component of the coefficient $\alpha$ determined from the measured data measured from the bearing 106 in a flawless normal state is $\alpha_k$, (3,j) in Equation 19 (1 < = k < = m, 1 < = j < = q). Further, the component of the coefficient $\alpha$ determined from the measured data measured from the bearing 106 in a state of having a flaw in the cage is $\alpha_k$, (4,j) in Equation 19 (1 < = k < = m, 1 < = j < = q).

In this experiment, the Y matrix is subjected to non-negative matrix factorization, to thereby specify the representative pattern of the coefficient $\alpha$ of the revised autoregressive model in each of the states of the bearing 106. In order to subject the matrix Y to the non-negative matrix factorization, it is necessary to adjust each of the components of the matrix Y itself to a non-negative value without changing the patterns of the coefficients a of the columns of the matrix Y. Thus, the components of the matrix Y are each adjusted to a non-negative value by adding the absolute value of the smallest component out of the components that are less than 0 of the matrix Y to each of the components of the matrix Y, for example. A matrix whose components are non-negative values is set to a non-negative matrix below.

As expressed in Expression 20 below, the matrix Y is non-negative matrix factorized into a matrix A and a matrix P each being a non-negative value matrix. The matrix A is a matrix having a size of m $\times$ p and the matrix P is a matrix having a size of p $\times$ d. The number of columns of the matrix A is a base number in the non-negative matrix factorization and is set to p(5) as the number of states that the bearing 106 can be brought into in this embodiment. Thereby, in the columns of the matrix A, patterns of p(5) pieces of the coefficients $\alpha$ (to be also referred to as bases) derived from the matrix Y are stored.

[Mathematical expression 20]
[Mathematical expression 20]

$$Y \approx AP, \qquad A \in R^{m \times p}, P \in R^{p \times d} \qquad \cdots (\text{Expression } 20)$$

A cost function J is defined as in Equation 21 below.

[Mathematical equation 21]
[Mathematical equation 21]

$$J(A,P) = \frac{1}{2}\|AP - Y\|_F^2 + \beta \sum_{i,k} P_{i,k} + \frac{\gamma}{2} \sum_{k,\bar{k};k \neq \bar{k}} \left(A^T A - I\right)_{k,\bar{k}} \quad \cdots (\text{Equation } 21)$$

The right-side first term in Equation 21 represents a condition for making the product of the matrix A and the matrix P and the matrix Y agree with each other in least square meaning. The symbol of F at lower right of the right-side first term in Equation 21 is a symbol indicating Frobenius norm. That is, $\|AP\text{-}Y\|$ in the right-side first term in Equation 21 is Frobenius norm and results in a square root of the total of squares of the absolute values of components of a matrix (AP-Y). The right-side second term in Equation 21 represents a condition requiring a sparse property of the matrix P. Adding this condition makes it possible to prevent overlearning of the non-negative matrix factorization.

The index i in the right-side second term in Equation 21 is an index indicating a row of a matrix. Further, the index k in the right-side second term in Equation 21 is an index indicating a column of the matrix. The right-side third term in Equation 21 represents a condition that approximately requires orthogonality between the patterns stored in different columns in the matrix A, and has an effect of preventing the patterns stored in p(5) pieces of the columns in the matrix A from being linearly dependent as much as possible. If the patterns stored in the columns of the matrix A are linearly dependent, coefficients (to be also referred to as weights) when a certain pattern is approximated by a linear combination of the patterns stored in the columns of the matrix A no longer become a series, and thus identification of the patterns becomes difficult. Further, a matrix AT in the right-side third term in Equation 21 is a transposed matrix of the matrix A, and a matrix I is a unit matrix. Further, the indexes k, k- (expressed as k with a bar drawn thereabove in Equation) in the right-side third term in Equation 21 are indexes indicating a row and a column of the matrix respectively.

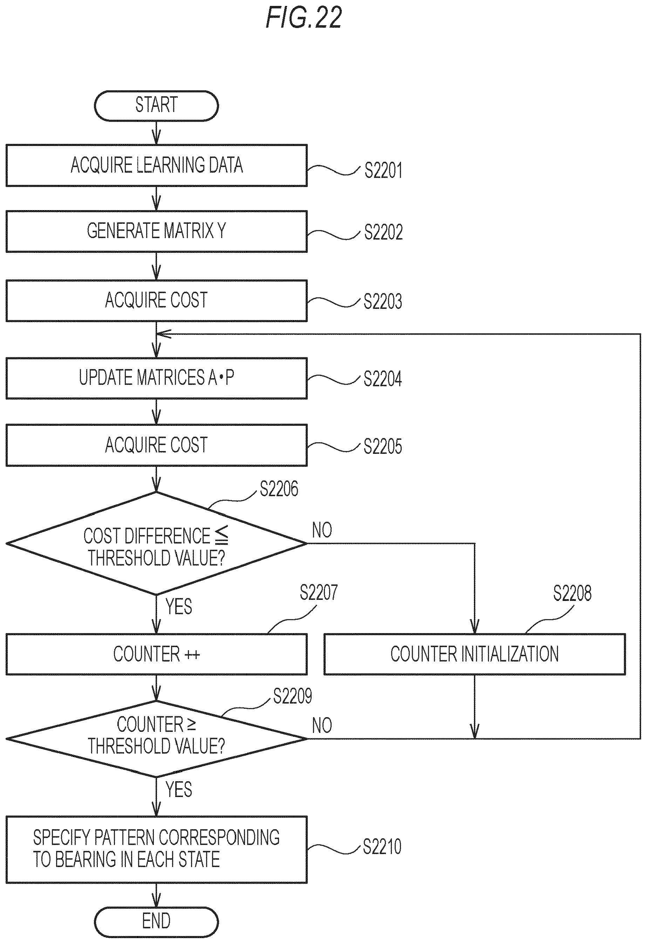

Here, even when as the cost function J, only the right-side first term in Equation 21 is used, the non-negative matrix factorization functions, and thus as the cost function J, only the right-side first term in Equation 21 may be used. Further, when a problem such as the above-described overlearning or linear dependence occurs, as the cost function J, an equation made by adding the right-side second term and the right-side third term in Equation 21 to the right-side first term in Equation 21 may be used. Then, when adding the right-side second term and the right-side third term, a coefficient β and a coefficient $\gamma$ are determined beforehand by a case study, for example, so as to be capable of well associating the respective states of the bearing 106 with learning patterns determined by a method to be described in Fig. 22, and so on. In this embodiment, $\beta$ is set to 0.035 and $\gamma$ is set to 0.

The matrix Y is factorized into the matrix A and the matrix P so as to minimize this cost function J. That is, a minimization problem of the cost function J defined in Equation 22 below is solved.

[Mathematical equation 22]
[Mathematical equation 22]

$$\min_{A,P} J(A,P) = \min_{A,P} \left( \frac{1}{2}\|AP - Y\|_F^2 + \beta \sum_{i,k} P_{i,k} + \frac{\gamma}{2} \sum_{k,\bar{k};k \neq \bar{k}} \left(A^T A - I\right)_{k,\bar{k}} \right) \quad \cdots (\text{Equation } 22)$$

$$\text{subject to} \quad A, P \geq 0, \left(A^T A\right)_{k,k} = 1 \; \forall k$$

A first constraint condition in Equation 22 is a condition expressing that the matrix A and the matrix P are a non-negative matrix. A second constraint condition in Equation 22 is a condition for normalizing the matrix A. Further, the index k in the second constraint condition in Equation 22 is an index indicating a row and a column of a matrix.

In this experiment, the following processing is performed in order to minimize the cost function J. That is, updating the matrix A and updating the matrix P are performed repeatedly by using Expression 23 and Expression 24 below, to thereby minimize the cost function J. Further, in order to minimize the cost function J, a method other than the method to be described below (for example, an optimization method such as a steepest descent method, Newton's method, or a stochastic gradient descent method) may be used.

[Mathematical expression 23]
[Mathematical expression 23]

$$P \leftarrow P - \left(\eta^P\right)\left(\frac{\partial J}{\partial P}\right) \quad \cdots(\text{Expression } 23)$$

[Mathematical expression 24]
[Mathematical expression 24]

$$A \leftarrow A - \left(\eta^A\right)\left(\frac{\partial J}{\partial A}\right) \quad \cdots(\text{Expression } 24)$$

$\eta P$ in Expression 23 is a relaxation coefficient used for updating the matrix P. $\eta A$ in Expression 24 is a relaxation coefficient used for updating the matrix A.

A partial differential by the matrix P of the cost function J in Expression 23 is as expressed in Equation 25 below.

[Mathematical equation 25]
[Mathematical equation 25]

$$\frac{\partial J}{\partial P} = A^T\left(AP - Y\right) + \beta F \quad \cdots(\text{Equation } 25)$$

A matrix F in Equation 25 is a matrix that has a size of p × d and whose components are all one.

A partial differential by the matrix A of the cost function J in Expression 24 is as expressed in Equation 26 below.

[Mathematical equation 26]
[Mathematical equation 26]

$$\frac{\partial J}{\partial A} = \left(AP - Y\right)P^T + \gamma\left(AE - A\right) \quad \cdots(\text{Equation } 26)$$

A matrix E in Equation 26 is a matrix that has a size of p × p and whose components are all one.

Expression 23 is rewritten by using Equation 25, to thereby derive Equation 27 below.

[Mathematical equation 27]
[Mathematical equation 27]

$$P_{i,k} - \eta_{i,k}^P\left(A^t(AP - Y) + \beta F\right)_{i,k} = P_{i,k} - \eta_{i,k}^P\left(A^T(AP) + \beta F\right)_{i,k} + \eta_{i,k}^P\left(A^T Y\right)_{i,k} \quad \cdots(\text{Equation } 27)$$

The index i in Equation 27 is an index indicating a row of a matrix. The index k in Equation 27 is an index indicating a column of the matrix.

Since the matrix P is a non-negative matrix, the value of Equation 27 needs to be a non-negative value. The right-side third term in Equation 27 is a term to be a non-negative value inevitably. That is, as long as the value of an equation resulting from removing the third term from the right side of Equation 27 is 0, the value of Equation 27 becomes a non-negative value inevitably. Therefore, as expressed in Equation 28, updating the matrix P is performed so as to satisfy the condition that the value of an equation resulting from removing the third term from the right side of Equation 27 is 0.

[Mathematical equation 28]
[Mathematical equation 28]

$$P_{i,k} - \eta_{i,k}^P\left(A^T(AP) + \beta F\right)_{i,k} = 0 \quad \cdots(\text{Equation } 28)$$

The index i in Equation 28 is an index indicating a row of a matrix. The index k in Equation 28 is an index indicating a column of the matrix.

From Equation 28, the value of the relaxation coefficient $\eta$P in Expression 23 is derived as in Equation 29 below.

[Mathematical equation 29]

[Mathematical equation 29]

$$\eta_{i,k}^{P} = \frac{\overline{P}_{i,k}}{\left(A^{T}AP + \beta F\right)_{i,k}} \qquad \cdots(\text{Equation } 29)$$

The index i in Equation 29 is an index indicating a row of a matrix. The index k in Equation 29 is an index indicating a column of the matrix.

Expression 23 is rewritten by using Equation 29, and thereby such a resultant as Expression 30 below is obtained.

[Mathematical expression 30]

[Mathematical expression 30]

$$P_{i,k} \leftarrow P_{i,k} - \frac{P_{i,k}\left(A^{T}Y\right)_{i,k}}{\left(A^{T}AP + \beta F\right)_{i,k}} \qquad \cdots(\text{Expression } 30)$$

The index i in Expression 30 is an index indicating a row of a matrix. The index k in Expression 30 is an index indicating a column of the matrix. The respective components of the matrix P are updated by using Expression 30, to thereby update the matrix P.

Further, Expression 24 is rewritten by using Equation 26, to thereby derive Equation 31 below.

[Mathematical equation 31]

[Mathematical equation 31]

$$A_{k,j} - \eta_{k,j}^{A}\left(\left(AP - Y\right)P^{T} + \gamma\left(AE - A\right)\right)_{k,j} = A_{k,j} - \eta_{k,j}^{A}\left(\left(AP\right)P^{T} + \gamma\left(AE - A\right)\right)_{k,j} + \eta_{k,j}^{A}\left(YP^{T}\right)_{k,j}$$

$$\cdots(\text{Equation } 31)$$

The index k in Equation 31 is an index indicating a row of a matrix. The index j in Equation 31 is an index indicating a column of the matrix.

Since the matrix A is a non-negative matrix, the value of Equation 31 needs to be a non-negative value. The right-side third term in Equation 31 is a term to be a non-negative value inevitably. That is, as long as the value of an equation resulting from removing the third term from the right side of Equation 31 is 0, the value of Equation 31 becomes a non-negative value inevitably. Therefore, as expressed in Equation 32 below, updating the matrix A is performed so as to satisfy the condition that the value of an equation resulting from removing the third term from the right side of Equation 31 is 0.

[Mathematical equation 32]

[Mathematical equation 32]

$$A_{k,j} - \eta_{k,j}^{A}\left(\left(AP\right)P^{T} + \gamma\left(AE - A\right)\right)_{k,j} = 0 \qquad \cdots(\text{Equation } 32)$$

The index k in Equation 32 is an index indicating a row of a matrix. The index j in Equation 32 is an index indicating a column of the matrix.

From Equation 32, the value of the relaxation coefficient $\eta$A in Expression 24 is derived as in Equation 33 below.

[Mathematical equation 33]

[Mathematical equation 33]

$$\eta_{k,j}^{A} = \frac{A_{k,j}}{\left(A P P^{T} + \gamma\left(A E - A\right)\right)_{k,j}} \qquad \cdots (\text{Equation 33})$$

The index k in Equation 33 is an index indicating a row of a matrix. The index j in Equation 33 is an index indicating a column of the matrix.

Expression 24 is rewritten by using Equation 33, and thereby such a resultant as Expression 34 below is obtained.

[Mathematical expression 34]

[Mathematical expression 34]

$$A_{k,j} \leftarrow A_{k,j} - \frac{A_{k,j}\left(Y P^{T}\right)_{k,j}}{\left(A P P^{T} + \gamma\left(A E - A\right)\right)_{k,j}} \qquad \cdots (\text{Expression 34})$$

The index k in Expression 34 is an index indicating a row of a matrix. The index j in Expression 34 is an index indicating a column of the matrix. The respective components of the matrix A are updated by using Expression 34, to thereby update the matrix A.

Further, in order to satisfy the second constraint condition in Equation 22, the matrix A is updated as expressed in Expression 35 below.

[Mathematical expression 35]

[Mathematical expression 35]

$$A_{k,j} \leftarrow \frac{A_{k,j}}{\sqrt{\left(A^{T} A\right)_{j,j}}} \qquad \cdots (\text{Expression 35})$$

k in Expression 35 is an index indicating a row of a matrix. j in Expression 35 is an index indicating a row or a column of the matrix.

Until the value of the cost function J converges, the matrix P is updated by using Expression 30 and updating the matrix A is performed by using Expression 34 and Expression 35 repeatedly. For example, it is assumed that the value of the cost function J has converged if the fluctuation in the value of the cost function J continues to be equal to or less than a predetermined threshold value for a predetermined number of times before and after updating the matrix P and the matrix A. Then, the matrix A and the matrix P at this time are set to a matrix to minimize the cost function J.

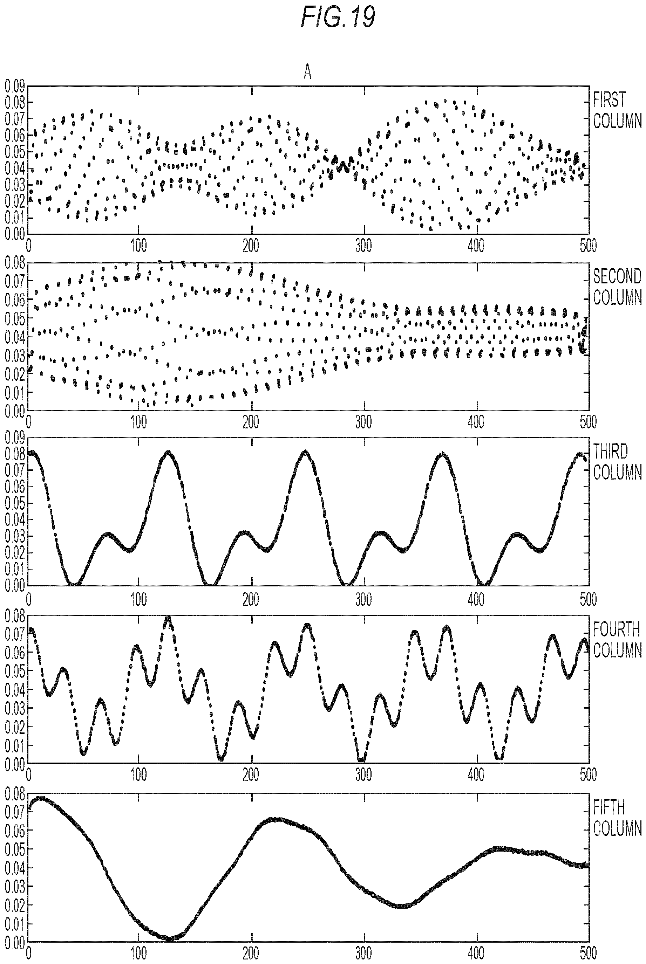

Patterns exhibited by the columns of the matrix A when the cost function J converged were confirmed. Fig. 19 illustrates one example of the patterns exhibited by the columns of the matrix A when the cost function J converged. The columns of the matrix A each include m (500) pieces of values and express the patterns of the coefficients $\alpha$.

The top graph in Fig. 19 indicates a pattern in which m pieces of values ($A_{i,1}$ ($1 <= i <= m$)) of the first column of the matrix A are aligned in the order of index indicating a row. The second graph from the top in Fig. 19 indicates a pattern in which m pieces of values ($A_{i,2}$ ($1 <= i <= m$)) of the second column of the matrix A are aligned in the order of index (i) indicating a row. The third graph from the top in Fig. 19 indicates a pattern in which m pieces of values ($A_{i,3}$ ($1 <= i <= m$)) of the third column of the matrix A are aligned in the order of index indicating a row. The second graph from the bottom in Fig. 19 indicates a pattern in which m pieces of values ($A_{i,4}$ ($1 <= i <= m$)) of the fourth column of the matrix A are aligned in the order of index indicating a row. The bottom graph in Fig. 19 indicates a pattern in which m pieces of values ($A_{i,5}$ ($1 <= i <= m$)) of the fifth column (p-th column) of the matrix A are aligned in the order of index indicating a row.

Further, values of the components of the matrix P when the cost function J converged were confirmed. As expressed in Expression 36 below obtained from Expression 20, each column of the matrix P (the j-th column $P_{k,j}$ ($1 <= k <= p$)) represents a coefficient (weight) when the pattern exhibited by each column of the matrix Y (the j-th column $Y_{i,j}$ ($1 <= i <= m$)) is approximated by the linear combination of the patterns exhibited by the columns of the matrix A (bases).

[Mathematical expression 36]

[Mathematical expression 36]

$$\begin{pmatrix} Y_{1,j} \\ \\ Y_{m,j} \end{pmatrix} \approx \sum_{k=1}^{p} P_{k,j} \begin{pmatrix} A_{1,k} \\ \\ A_{m,k} \end{pmatrix} \qquad \cdots (\text{Expression } 36)$$

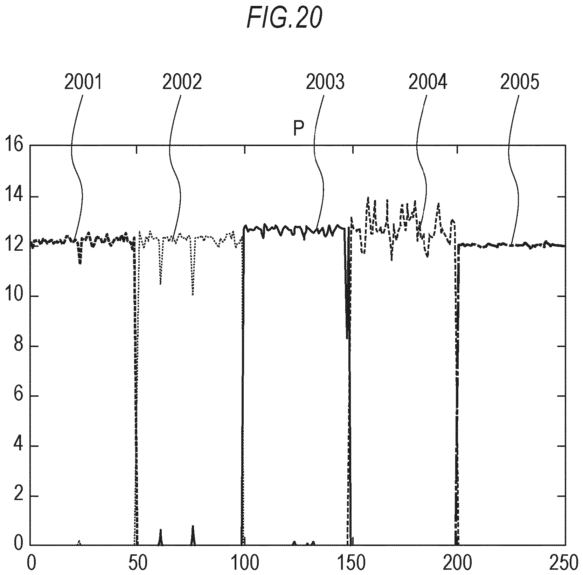

Fig. 20 illustrates a graph indicating values of the rows of the matrix P when the cost function J converged. The horizontal axis of the graph in Fig. 20 indicates an index of the column of the matrix P. The vertical axis of the graph in Fig. 20 indicates a value of each component of the matrix P.

A line 2001 in Fig. 20 is a line connecting d (250) pieces of values of the first row of the matrix P. Regarding the line 2001, the value is about 12 in a range where the index of the horizontal axis is 0 or more and less than 50 (a range from the first column to the q-th (50th) column), and is a very small value (about 0) in ranges other than this range as compared to the value of 12.

A line 2002 in Fig. 20 is a line connecting d pieces of values of the second row of the matrix P. Regarding the line 2002, the value is about 12 in a range where the index of the horizontal axis is 50 or more and less than 100 (a range from the q + 1-th column to the 2q-th column), and is a very small value (about 0) in ranges other than this range as compared to the value of 12.

A line 2003 in Fig. 20 is a line connecting d pieces of values of the fourth row of the matrix P. Regarding the line 2003, the value is about 12 in a range where the index of the horizontal axis is 100 or more and less than 150 (a range from the 2q + 1-th column to the 3q-th column), and is a very small value (about 0) in ranges other than this range as compared to the value of 12.

A line 2004 in Fig. 20 is a line connecting d pieces of values of the fifth row of the matrix P. Regarding the line 2004, the value is about 12 in a range where the index of the horizontal axis is 150 or more and less than 200 (a range from the 3q + 1-th column to the 4q-th column), and is a very small value (about 0) in ranges other than this range as compared to the value of 12.

A line 2005 in Fig. 20 is a line connecting d pieces of values of the third row of the matrix P. Regarding the line 2005, the value is about 12 in a range where the index of the horizontal axis is 200 or more and less than 250 (a range from the 4q + 1-th column to the 5q-th column), and is a very small value (about 0) in ranges other than this range as compared to the value of 12.

That is, regarding the values of the columns of the matrix P, in the range of the first column to the q-th (50th) column, the value of the first row is about 12 and the values of the second to fifth rows are about 0. Further, regarding the values of the columns of the matrix P, in the range of the q + 1-th column to the 2q-th column, the value of the second row is about 12 and the values of the first row and the third to fifth rows are about 0. Further, regarding the values of the columns of the matrix P, in the range of the 2q + 1-th column to the 3q-th column, the value of the fourth row is about 12 and the values of the first to third rows and the fifth row are about 0. Further, regarding the values of the columns of the matrix P, in the range of the 3q + 1-th column to the 4q-th column, the value of the fifth row is about 12 and the values of the first to fourth rows are about 0. Further, regarding the values of the columns of the matrix P, in the range of the 4q + 1-th column to the 5q-th column, the value of the third row is about 12 and the values of the first, second, fourth, and fifth rows are about 0.

Therefore, the patterns exhibited by data of the columns from the first column to the q-th column of the matrix AP are a pattern made by the respective patterns in Fig. 19 being superimposed with a weight of about 12 for the pattern expressed at the top graph in Fig. 19 and a weight of about 0 for the patterns expressed at the graphs other than the top graph in Fig. 19, and is a pattern similar to the pattern expressed at the top graph in Fig. 19. Further, the patterns exhibited by data of the columns from the q + 1-th column to the 2q-th column of the matrix AP are a pattern made by the respective patterns in Fig. 19 being superimposed with a weight of about 12 for the pattern expressed at the second graph from the top in Fig. 19 and a weight of about 0 for the patterns expressed at the graphs other than the second graph from the top in Fig. 19, and is a pattern similar to the pattern expressed at the second graph from the top in Fig. 19. Further, the patterns exhibited by data of the columns from the 2q + 1-th column to the 3q-th column of the matrix AP are a pattern made by the respective patterns in Fig. 19 being superimposed with a weight of about 12 for the pattern expressed at the second graph from the bottom in Fig. 19 and a weight of about 0 for the patterns expressed at the graphs other than the second graph from the bottom in Fig. 19, and is a pattern similar to the pattern expressed at the second graph from the bottom in Fig. 19. Further, the patterns exhibited by data of the columns from the 3q + 1-th column to the 4q-th column of the matrix AP are a pattern made by the respective patterns in Fig. 19 being superimposed with a weight of about 12 for the pattern expressed at the bottom graph in Fig. 19 and a weight of about 0 for the patterns expressed at the graphs other than the bottom graph in Fig. 19, and is a pattern similar to the pattern expressed at the bottom graph in Fig. 19. Further, the patterns exhibited by data of the columns from the 4q + 1-th column to the 5q-th column of the matrix AP are a pattern made by the respective patterns in Fig. 19 being superimposed with a weight of about 12 for the pattern expressed at the third graph from the top in Fig. 19 and a weight of about 0 for the patterns expressed at the graphs other than the third graph from the top in Fig. 19, and is a pattern similar to the pattern expressed at the third graph from the top in Fig. 19.

The patterns exhibited by data of the columns from the first column to the q-th column of the matrix Y are a pattern corresponding to the bearing 106 having a flaw in the outer ring illustrated in Fig. 18. Further, the patterns exhibited by data of the columns from the q + 1-th column to the 2q-th column of the matrix Y are a pattern corresponding to the bearing 106 having a flaw in the rolling element illustrated in Fig. 18. Further, the patterns exhibited by data of the columns from the 2q + 1-th column to the 3q-th column of the matrix Y are a pattern corresponding to the bearing 106 having a flaw in the inner ring illustrated in Fig. 18. Further, the patterns exhibited by data of the columns from the 3q + 1-th column to the 4q-th column of the matrix Y are a pattern corresponding to the flawless normal bearing 106 illustrated in Fig. 18. Further, the patterns exhibited by data of the columns from the 4q + 1-th column to the 5q-th column of the matrix Y are a pattern corresponding to the bearing 106 having a flaw in the cage illustrated in Fig. 18.

A comparison between the matrix Y and the matrix A reveals that the patterns exhibited by the data of the columns of the matrix Y and the patterns exhibited by the data of the columns of the matrix A are similar. That is, it reveals that the patterns exhibited by the data of the columns of the matrix A are the patterns of the coefficients $\alpha$ that correspond to the bearings 106 in the respective states respectively. The data of the first column of the matrix A exhibit the representative pattern of the coefficient $\alpha$ corresponding to the bearing 106 in a state of having a flaw in the outer ring. The data of the second column of the matrix A exhibit the representative pattern of the coefficient a corresponding to the bearing 106 in a state of having a flaw in the rolling element. The data of the third column of the matrix A exhibit the representative pattern of the coefficient $\alpha$ corresponding to the bearing 106 in a state of having a flaw in the cage. The data of the fourth column of the matrix A exhibit the representative pattern of the coefficient $\alpha$ corresponding to the bearing 106 in a state of having a flaw in the inner ring. The data of the fifth column of the matrix A exhibit the representative pattern of the coefficient $\alpha$ corresponding to the bearing 106 in a flawless normal state.

From the above, it is confirmed that the matrix Y is generated and the generated matrix Y is learned by the non-negative matrix factorization so as to satisfy Equation 22, and thereby the patterns of the coefficients $\alpha$ corresponding to the bearings 106 in the respective states are specified as the columns (bases) of the matrix A.

The processing in this embodiment is the following processing. That is, measured data of vibrations of the bearing 106 are acquired beforehand with respect to the bearing 106 in each of the state of having a flaw in the outer ring, the state of having a flaw in the rolling element, the state of having a flaw in the inner ring, the flawless normal state, and the state of having a flaw in the cage, and regarding each of the acquired measured data, the autocorrelation matrix R derived from the measured data is subjected to singular value decomposition, and by using some of the obtained eigenvalues, the coefficient of the revised autoregressive model approximating the measured data is derived. Then, the matrix Y being each of the coefficients derived from the data of the columns is generated and the generated matrix Y is learned by non-negative matrix factorization, to thereby specify the patterns of the coefficients in the revised autoregressive models that correspond to the bearings 106 in the respective states.

Then, the measured data of vibrations of the bearing 106 to be a target for abnormality diagnosis is acquired, the autocorrelation matrix R derived from the acquired measured data is subjected to singular value decomposition, and by using some of the obtained eigenvalues, the coefficient of the revised autoregressive model approximating the measured data is derived. The processing is to diagnose the abnormality of the bearing 106 based on the pattern of the derived coefficient and the pattern of the coefficient specified by learning.

(System configuration)

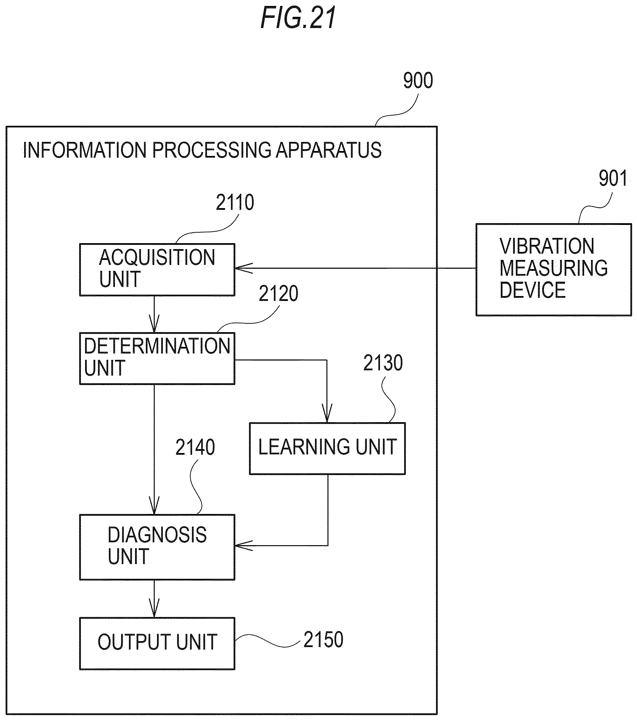

Fig. 21 is a diagram illustrating one example of a system configuration of the diagnosis system in this embodiment. The diagnosis system is a system of performing an abnormality diagnosis of an object that moves periodically similarly to the embodiment 1. The diagnosis system includes an information processing apparatus 900 and a vibration measuring device 901 similarly to the embodiment 1. In this embodiment, the diagnosis system performs the abnormality diagnosis of a bearing used for a railway bogie. A hardware configuration of the information processing apparatus 900 is the same as that in the embodiment 1.

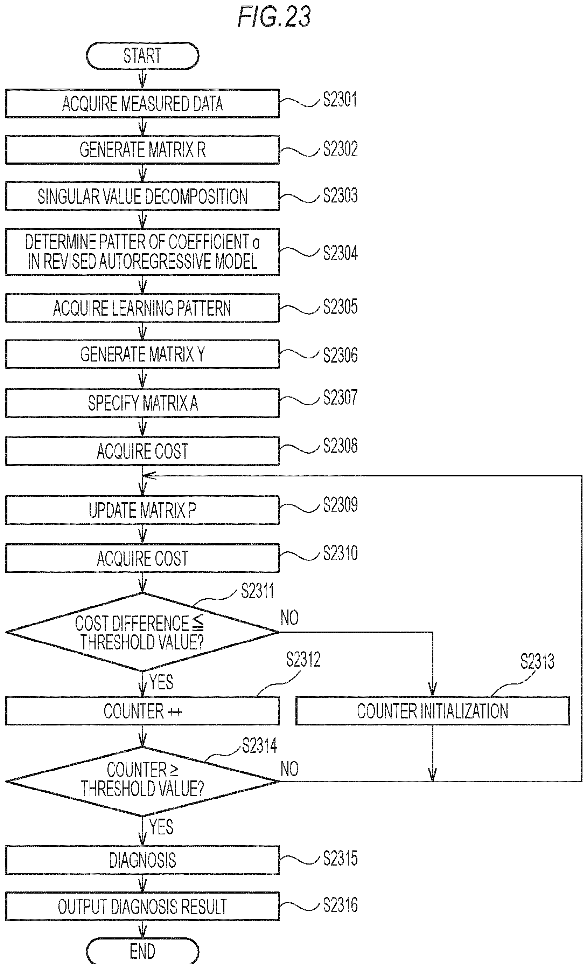

In this embodiment, the CPU 1000 in the information processing apparatus 900 executes processing based on programs stored in the auxiliary memory 1002 and the like, and thereby functions of the information processing apparatus 900 illustrated in Fig. 21, processing of flowcharts to be described later in Fig. 22 and Fig. 23, and so on are achieved.

(Functional configuration of the information processing apparatus)

There will be explained one example of the functions that the information processing apparatus 900 in this embodiment has with reference to Fig. 21.

The information processing apparatus 900 includes an acquisition unit 2110, a determination unit 2120, a learning unit 2130, a diagnosis unit 2140, and an output unit 2150.

<Acquisition unit 2110>

The acquisition unit 910 acquires measured data y relating to periodical movements of an object that moves periodically similarly to the acquisition unit 910 in Fig. 9.

<Determination unit 2120>

The determination unit 2120 determines a coefficient $\alpha$ in a revised autoregressive model based on the measured data y acquired by the acquisition unit 2110 similarly to the determination unit 920 in Fig. 9.

<Learning unit 2130>

The learning unit 2130 sets coefficients $\alpha$ in revised autoregressive models determined by the determination unit 2120 from measured data of objects in a plurality of states that are acquired by the acquisition unit 2110 beforehand as learning data and specifies patterns of the coefficients $\alpha$ in the revised autoregressive models that correspond to the objects in a plurality of states respectively by learning. The patterns specified by learning of the learning unit 2130 are set as learning patterns below.

<Diagnosis unit 2140>

The diagnosis unit 2140 diagnoses the abnormality of the object based on the coefficient $\alpha$ determined by the determination unit 2120 and the patterns of the coefficients in the revised autoregressive models in the respective states of the object that are specified by learning of the learning unit 2130. The diagnosis unit 2140 subjects, for example, the coefficient $\alpha$ determined by the determination unit 2120 to non-negative matrix factorization by using the learning patterns and diagnosis the abnormality of the object based on weights of the respective learning patterns of the coefficient $\alpha$ determined by the determination unit 2120.

In this embodiment, the state of the bearing 106 is set as a result of the diagnosis.

<Output unit 2150>

The output unit 2150 outputs information relating to the result of the diagnosis by the diagnosis unit 2140 similarly to the output unit 950 in Fig. 9.

(Learning processing)

In this embodiment, the diagnosis system diagnoses the abnormality of the bearing 106 based on the measured data of vibrations measured by the vibration measuring device 901 placed at the position 111 under the same state as that in Fig. 1A and Fig. 1B.

Fig. 22 is a flowchart illustrating one example of the learning processing. There will be explained processing to specify the learning pattern by learning while using Fig. 22.

In this embodiment, the information processing apparatus 900 performs the following processing for q (50) times repeatedly beforehand in each of the case where the bearing 106 is in a state of having a flaw in the outer ring, the case where the bearing 106 is in a state of having a flaw in the rolling element, the case where the bearing 106 is in a state of having a flaw in the inner ring, the case where the bearing 106 is in a flawless normal state, and the case where the bearing 106 is in a state of having a flaw in the cage.

That is, the acquisition unit 2110 acquires the measured data y of vibrations measured by the vibration measuring device 901. The acquisition unit 2110 acquires, as the measured data y, y1 to yM being measured data at times 1 to M in the case where the time set randomly is set to the time 1. Then, the determination unit 2120 generates the autocorrelation matrix R by using Equation 5 and Equation 7 based on the measured data y acquired at S2301, a constant M set beforehand, and a number m indicating how many pieces of past data are used to approximate data at a certain time in the revised autoregressive model. The determination unit 2120 reads pieces of information on M and m stored beforehand, to thereby acquire M and m. In this embodiment, the value of m is 500. Further, M is an integer larger than m.

Then, the determination unit 2120 subjects the generated autocorrelation matrix R to singular value decomposition, to thereby acquire the orthogonal matrix U and the diagonal matrix $\Sigma$ of Equation 8, and acquires the eigenvalues $\sigma_{11}$ to $\sigma_{mm}$ of the autocorrelation matrix R from the diagonal matrix $\Sigma$. The determination unit 2120 chooses, out of $\sigma_{11}$

to $\sigma_{mm}$ being the plural eigenvalues of the autocorrelation matrix R, the eigenvalues $\sigma_{11}$ to $\sigma_{ss}$ from the largest by the used eigenvalue number s as the eigenvalues of the autocorrelation matrix R to be used for deriving the coefficient $\alpha$ of the revised autoregressive model. In this embodiment, the used eigenvalue number s is set to three, but may be two or less or four or more. Then, the determination unit 2120 determines the coefficient $\alpha$ of the revised autoregressive model by using Equation 13 based on the measured data y, the eigenvalues $\sigma_{11}$ to $\sigma_{ss}$, and the orthogonal matrix U obtained by the singular value decomposition of the autocorrelation matrix R. Then, the determination unit 2120 makes the determined coefficient $\alpha$ non-negative (for example, adds a value obtained by multiplying the lowest value of the component contained in the coefficient $\alpha$, which is less than 0, by -1 to the respective components of the coefficient $\alpha$, or the like) to be stored in the auxiliary memory 1002 as the learning data.

Thereby, the information processing apparatus 900 can acquire, as the learning data, q (50) pieces of data of the coefficient $\alpha$ in the revised autoregressive model in each of the case where the bearing 106 is in a state of having a flaw in the outer ring, the case where the bearing 106 is in a state of having a flaw in the rolling element, the case where the bearing 106 is in a state of having a flaw in the inner ring, the case where the bearing 106 is in a flawless normal state, and the case where the bearing 106 is in a state of having a flaw in the cage and store them.

In this embodiment, the state that the bearing 106 can be brought into is set to five states, namely, the flawless normal state, the state of having a flaw in the inner ring, the state of having a flaw in the cage, the state of having a flaw in the rolling element, and the state of having a flaw in the outer ring. That is, the number of states that the bearing 106 can be brought into p is five.

At S2201, the learning unit 2130 acquires the learning data stored in the auxiliary memory 1002.

At S2202, the learning unit 2130 generates the matrix Y of Expression 23 based on the learning data acquired at S2201. The learning unit 2130 generates the matrix Y by generating a matrix having a size of m(500) $\times$ d(250) and setting data of columns to values of the respective coefficients $\alpha$ contained in the learning data. Further, the learning unit 2130 generates the matrix A having a size of m $\times$ p and sets a predetermined initial value to respective components of the matrix A. Further, the learning unit 2130 generates the matrix P having a size of p $\times$ d and sets a predetermined initial value to respective components of the matrix P.

At S2203, the learning unit 2130 derives the value of the cost function J as a cost by using Equation 21 based on the matrix Y, the matrix A, and the matrix P that are generated at S2202, a predetermined coefficient $\beta$, and a predetermined coefficient $\gamma$. The learning unit 2130 stores the derived cost in the main memory 1001 and the like as a cost before updating.

At S2204, the learning unit 2130 updates the matrix A by using Expression 34 based on the matrix Y, the matrix A, the matrix P, the coefficient $\gamma$, and the matrix E being a matrix that has a size of p $\times$ p and whose components are all one. Further, the learning unit 2130 further updates the updated matrix A by using Expression 35. Further, the learning unit 2130 updates the matrix P by using Expression 30 based on the matrix Y, the matrix A, the matrix P, the coefficient $\beta$, and the matrix F being a matrix that has a size of m $\times$ p and whose components are all one.

At S2205, the learning unit 2130 derives the value of the cost function J as a cost by using Equation 21 based on the matrix Y, the matrix A updated at S2203, the matrix P updated at S2203, the coefficient $\beta$, and the coefficient $\gamma$. The learning unit 2130 stores the derived cost in the main memory 1001 and the like as a cost after updating.

At S2206, the learning unit 2130 judges whether or not the absolute value of the difference between the cost after updating and the cost before updating is a predetermined threshold value or less. When judging that the absolute value of the difference between the cost after updating and the cost before updating is the predetermined threshold value or less, the learning unit 2130 proceeds to processing at S2207. Further, when judging that the absolute value of the difference between the cost after updating and the cost before updating is larger than the predetermined threshold value, the learning unit 2130 proceeds to processing at S2208. The learning unit 2130 stores the cost after updating in the main memory 1001 as a new cost before updating after the processing at S2206.

At S2207, the learning unit 2130 adds one to a value of a counter stored in the main memory 1001 or the like. The learning unit 2130 initializes the value of the counter to 0 before the processing in Fig. 22 starts.

At S2208, the learning unit 2130 initializes the value of the counter stored in the main memory 1001 or the like to 0 and proceeds to processing at S2204.

At S2209, the learning unit 2130 judges whether or not the value of the counter stored in the main memory 1001 or the like is a predetermined threshold value or more. When judging that the value of the counter stored in the main memory 1001 or the like is the predetermined threshold value or more, the learning unit 2130 regards that the value of the cost function J has converged to a minimum value and proceeds to processing at S2210. When judging that the value of the counter stored in the main memory 1001 or the like is less than the predetermined threshold value, the learning unit 2130 proceeds to processing at S2204.

At S2210, the learning unit 2130 specifies, based on the matrix P, which of the patterns of the coefficients $\alpha$ in the revised autoregressive models corresponding to the bearings 106 in the respective states the patterns exhibited by the data of the columns of the matrix A are.

The data of a certain column of the matrix Y are derived as data obtained by multiplying the matrix A and the column of the matrix P together. That is, the data of a certain column of the matrix Y result in data obtained by superimposition of the data of the columns of the matrix A with values of rows at the column of the matrix P set as weights. Thus, at S2210, the learning unit 2130 specifies which of the patterns of the coefficients $\alpha$ in the revised autoregressive models corresponding to the bearings 106 in the respective states the patterns exhibited by the data of the columns of the matrix A are in the following manner.

The learning unit 2130 specifies, out of the columns of the matrix Y, the column in which the data indicating the coefficient $\alpha$ that corresponds to the bearing 106 in a certain state are to be stored. For example, the learning unit 2130 specifies, out of the columns of the matrix Y, the first column to the q-th column, each of which is the column in which the data indicating the coefficient $\alpha$ that corresponds to the bearing 106 in a state of having a flaw in the outer ring are to be stored. Then, the learning unit 2130 totalizes the values of the specified columns (the first column to the q-th column) in the matrix P for each row. Then, the learning unit 2130 specifies the row corresponding to the largest value out of the totalized values. The learning unit 2130 specifies the column of the matrix A to be multiplied by the specified row of the matrix P. When specifying the first row of the matrix P, for example, the learning unit 2130 specifies the first column because the column of the matrix A to be multiplied by the first row of the matrix P is the first column. Then, the learning unit 2130 specifies the data indicated by the specified column of the matrix A as the data exhibiting the representative pattern of the coefficient $\alpha$ corresponding to the bearing 106 in the state.

The learning unit 2130 performs the above processing in each of the states that the bearing 106 can be brought into, to thereby specify which of the patterns of the coefficients a in the revised autoregressive models corresponding to the bearings 106 in the respective states the patterns exhibited by the data of the columns of the matrix A are.

The learning unit 2130 stores the data exhibiting the specified representative patterns of the coefficients $\alpha$ in the revised autoregressive models corresponding to the bearings 106 in the respective states in the auxiliary memory 1002 or the like as the learning patterns.

(Abnormality diagnosis processing)

In this embodiment, the diagnosis system specifies where in the bearing 106 a flaw exists, to thereby diagnose the abnormality of the bearing 106, but may diagnose the abnormality of the bearing 106 by specifying whether or not a flaw exists in the bearing 106. The diagnosis system may diagnose the abnormality of the bearing 106 based on the measured data measured by the vibration measuring device 901 beforehand, or may also diagnose the abnormality of the bearing 106 in operation by using measured data continuously measured by the vibration measuring device 901 in real time to be output.

Fig. 23 is a flowchart illustrating one example of the abnormality diagnosis processing.

At S2301, the acquisition unit 2110 acquires the measured data y of vibrations measured by the vibration measuring device 901. The acquisition unit 2110 acquires, as the measured data y, y1 to yM being measured data at the times 1 to M.

At S2302, the determination unit 2120 generates the autocorrelation matrix R by using Equation 5 and Equation 7 based on the measured data y acquired at S2301, the constant M set beforehand, and the number m indicating how many pieces of past data are used to approximate data at a certain time in the revised autoregressive model. The determination unit 2120 reads pieces of information on M and m stored beforehand, to thereby acquire M and m. In this embodiment, the value of m is 500. Further, M is an integer larger than m.

At S2303, the determination unit 2120 subjects the autocorrelation matrix R generated at S2302 to singular value decomposition, to thereby acquire the orthogonal matrix U and the diagonal matrix $\Sigma$ of Equation 8, and acquires the eigenvalues $\sigma_{11}$ to $\sigma_{mm}$ of the autocorrelation matrix R from the diagonal matrix $\Sigma$.

At S2304, the determination unit 2120 chooses, out of $\sigma_{11}$ to $\sigma_{mm}$ being the plural eigenvalues of the autocorrelation matrix R, the eigenvalues $\sigma_{11}$ to $\sigma_{ss}$ from the largest by the used eigenvalue number s as the eigenvalues of the autocorrelation matrix R to be used for deriving the coefficient $\alpha$ of the revised autoregressive model. In this embodiment, the used eigenvalue number s is set to three, but may be two or less or four or more. Then, the determination unit 2120 determines the coefficient $\alpha$ of the revised autoregressive model by using Equation 13 based on the measured data y, the eigenvalues $\sigma_{11}$ to $\sigma_{ss}$, and the orthogonal matrix U obtained by the singular value decomposition of the autocorrelation matrix R. The coefficient $\alpha$ determined at S2304 is one example of revision coefficients being the coefficients in the revised autoregressive model determined from the measured data. The pattern of the coefficient $\alpha$ determined at S2304 is one example of measurement patterns.

At S2305, the diagnosis unit 2140 acquires the learning pattern specified finally at S2304 from the auxiliary memory 1002.

At S2306, the diagnosis unit 2140 generates the matrix Y having a size of m $\times$ d like Equation 19 by using the coefficient $\alpha$ determined at S2304 with d set to one. That is, one column of the matrix Y exhibits the pattern of the coefficient $\alpha$ determined at S2304. Further, the diagnosis unit 2140 makes components of the matrix Y non-negative (for example, adds a value obtained by multiplying the lowest of the components of the matrix Y, which is less than 0, by -1 to the respective components of the matrix Y, or the like).

At S2307, the diagnosis unit 2140 generates the matrix A having a size of m $\times$ p. Then, the diagnosis unit 2140 sets the data of the learning pattern in the columns of the matrix A. Further, the diagnosis unit 2140 generates the matrix P having a size of p $\times$ d(1) and sets a predetermined initial value in its components. The diagnosis unit 2140 updates the matrix P with the value of the matrix A generated at S2307 set as a fixed value, to thereby subject the matrix Y to non-negative matrix factorization.

At S2308, the diagnosis unit 2140 derives the value of the cost function J as a cost by using Equation 21 based on the matrix Y, the matrix A, the matrix P, the predetermined coefficient $\beta$, and the predetermined coefficient $\gamma$. The diagnosis unit 2140 stores the derived cost in the main memory 1001 and the like as a cost before updating.

At S2309, the diagnosis unit 2140 updates the matrix P by using Expression 30 based on the matrix Y, the matrix A, the matrix P, the coefficient $\beta$, and the matrix F being a matrix that has a size of m $\times$ p and whose components are all one.

At S2310, the diagnosis unit 2140 derives the value of the cost function J as a cost by using Equation 21 based on the matrix Y, the matrix A, the matrix P updated at S2309, the coefficient $\beta$, and the coefficient $\gamma$. The diagnosis unit 2140 stores the derived cost in the main memory 1001 and the like as a cost after updating.

At S2311, the diagnosis unit 2140 judges whether or not the absolute value of the difference between the cost after updating and the cost before updating is a predetermined threshold value or less. When judging that the absolute value of the difference between the cost after updating and the cost before updating is the predetermined threshold value or less, the diagnosis unit 2140 proceeds to processing at S2312. Further, when judging that the absolute value of the difference between the cost after updating and the cost before updating is larger than the predetermined threshold value, the diagnosis unit 2140 proceeds to processing at S2313. The diagnosis unit 2140 stores the cost after updating in the main memory 1001 as a new cost before updating after the processing at S2311.

At S2312, the diagnosis unit 2140 adds one to the value of the counter stored in the main memory 1001 or the like. The diagnosis unit 2140 initializes the value of the counter to 0 before the processing in Fig. 23 starts.

At S2313, the diagnosis unit 2140 initializes the value of the counter stored in the main memory 1001 or the like to 0 and proceeds to processing at S2309.

At S2314, the diagnosis unit 2140 judges whether or not the value of the counter stored in the main memory 1001 or the like is a predetermined threshold value or more. When judging that the value of the counter stored in the main memory 1001 or the like is the predetermined threshold value or more, the diagnosis unit 2140 regards that the value of the cost function J has converged to a minimum value and proceeds to processing at S2315. When judging that the value of the counter stored in the main memory 1001 or the like is less than the predetermined threshold value, the diagnosis unit 2140 proceeds to processing at S2309.

At S2315, the diagnosis unit 2140 diagnoses the state of the bearing 106 based on the matrix P. The diagnosis unit 2140 specifies the row corresponding to the largest out of the values of the rows of the matrix P, for example. The diagnosis unit 2140 specifies the column of the matrix A to be multiplied by the specified row of the matrix P. Then, the diagnosis unit 2140 diagnoses that the state of the bearing 106 is brought into a state corresponding to the learning pattern exhibited by the specified column of the matrix A.

Further, the diagnosis unit 2140 may diagnose that the state of the bearing 106 is brought into the state corresponding to the learning pattern exhibited by the specified column of the matrix A by specifying the row corresponding to, out of the values of the rows of the matrix P, the value that is equal to or more than the predetermined threshold value and specifying the column of the matrix A to be multiplied by the specified row of the matrix P. Further, when specifying, as the row corresponding to, out of the values of the rows of the matrix P, the value that is equal to or more than the predetermined threshold value, a plurality of the rows, the diagnosis unit 2140 may specify a plurality of the columns of the matrix A to be multiplied by a plurality of the specified rows and diagnose that the state of the bearing 106 is brought into a combined state of a plurality of the states corresponding to the learning patterns exhibited by a plurality of the specified columns of the matrix A. Further, in the case where, for example, the matrix P does not include in the rows the values that are equal to or more than the predetermined threshold value, the diagnosis unit 2140 may diagnose the bearing 106 as being in an unknown state (for example, a state where an unknown abnormality occurs).

At S2316, the output unit 2150 outputs information indicating the result of the abnormality diagnosis of the bearing 106 at S2315. The output unit 2150 outputs the information indicating the result of the abnormality diagnosis of the bearing 106 by displaying it on a display device, for example. Further, the output unit 2150 may output the information indicating the result of the abnormality diagnosis of the bearing 106 by storing it in the auxiliary memory 1002, for example. Further, the output unit 2150 may output the information indicating the result of the abnormality diagnosis of the bearing 106 by transmitting it to a set transmission destination such as an external server device, for example.

(Summary)

As above, in this embodiment, the diagnosis system beforehand generates the autocorrelation matrix R from the measured data measured from the periodical movements of the bearings 106 in a plurality of states, subjects the autocorrelation matrix R to the singular value decomposition, and determines, as the learning data, the coefficient $\alpha$ of the revised autoregressive model approximating the measured data by using, out of the obtained eigenvalues, a set number of the eigenvalues chosen from the largest. Then, the diagnosis system uses the learning data to specify, as the learning pattern, the representative patterns of the coefficients a corresponding to the bearings 106 in the respective states by learning. Then, the diagnosis system determines the coefficient $\alpha$ of the revised autoregressive model from the measured data measured from the periodical movements of the bearing 106 to be a target for diagnosis and diagnoses the abnormality of the bearing 106 based on the pattern of the determined coefficient $\alpha$ and the learning pattern specified by learning. Using some of the eigenvalues of the autocorrelation matrix R makes the diagnosis system possible to determine the coefficient $\alpha$ of the revised autoregressive model approximating the measured data so that the component useful for the abnormality diagnosis of the bearing 106 remains and the component unuseful for the abnormality diagnosis of the bearing 106 does not remain. Regarding the pattern of the coefficient $\alpha$, the experiment reveals that a characteristic pattern is exhibited in each of the states of the bearing 106, and in this embodiment, the diagnosis system diagnoses the abnormality of the bearing 106 based on the pattern of the coefficient $\alpha$. This makes the diagnosis system possible to perform the abnormality diagnosis more accurately based on the component of the measured data useful for the abnormality diagnosis of the bearing 106.

<Modified example>

In the embodiments 1 to 3, the diagnosis system is designed to perform the abnormality diagnosis of the bearing 106 in the railway bogie. However, the diagnosis system may be designed to perform an abnormality diagnosis of another object that moves periodically, namely, a rotating body such as a gear, an oscillating body such as an oscillator, an elastic body such as a spring, a heart of a creature, or the like.

In the embodiments 1, 2, m is set to a preset number of 1500. Further, in the embodiment 3, m is set to a number of 500. However, it is also possible to specify the number of past data capable of appropriately approximating the measured data by performing an experiment according to a target to be diagnosed or the like and set the specified number to the value of m. For example, it is also possible for the information processing apparatus 900 to, regarding measured data measured from the target to be diagnosed, approximate the measured data at a certain time by using a plurality of past measured data before the time and using an autocorrelation model or the like and determine, as m, the number of the past measured data used for the approximation in the case where the difference between the approximated value and the measured data at the time is less than a set threshold value.

In the embodiments 1, 2, the information processing apparatus 900 is designed to set the initial value of the used eigenvalue number s to one and change the value of the used eigenvalue number s when failing in the abnormality diagnosis. Further, in the embodiment 3, the information processing apparatus 900 sets the used eigenvalue number s to three. However, the information processing apparatus 900 may determine the value of the used eigenvalue number s as follows. That is, the information processing apparatus 900 first derives the total value of all the eigenvalues of the autocorrelation matrix R. Then, the information processing apparatus 900 may determine, as the used eigenvalue number s, the smallest out of a pieces of the eigenvalues, the total of a pieces of the eigenvalues, which are chosen from the largest, out of the eigenvalues of the autocorrelation matrix R being equal to or more than a set percentage of the derived total value (for example, 90%).

In the embodiments 1 to 3, the information processing apparatus 900 is designed to determine the coefficient $\alpha$ in the revised autoregressive model by using, out of the eigenvalues of the autocorrelation matrix R, s pieces of the eigenvalues as the used eigenvalue number, which are chosen from the largest. However, the information processing apparatus 900 may be designed to determine the coefficient $\alpha$ in the revised autoregressive model by using, out of the eigenvalues of the autocorrelation matrix R, s pieces of the arbitrary eigenvalues. For example, the information processing apparatus 900 may be designed to determine the coefficient $\alpha$ in the revised autoregressive model by using, out of the eigenvalues of the autocorrelation matrix R, two of the largest eigenvalue and the third-largest eigenvalue.

In the embodiments 1 to 3, the diagnosis system is designed to diagnose the abnormality of the bearing 106 based on the measured data measured by the vibration measuring device 901 beforehand. However, the diagnosis system may be designed to diagnose the abnormality of the bearing 106 in operation by using measured data continuously measured by the vibration measuring device 901 in real time to be output. That is, the information processing apparatus 900 may be designed to update the measured data $y_1$ to $y_M$ every time the new measured data y are acquired from the vibration measuring device 901 and perform the processing in Fig. 11 or Fig. 23.

The embodiment 3 includes the direct correspondences between the learning patterns obtained from the learning data by the non-negative matrix factorization and the respective states. That is, when the patterns of the coefficients $\alpha$ corresponding to the bearings 106 in the respective states are approximated by the linear combination of the learning patterns, the weights concentrate in the learning patterns corresponding to the respective states. However, even when such concentrations of the weights applied to the learning patterns are not seen, the linear combination of the learning patterns using the weights only needs to be derived newly again as the learning patterns corresponding to the respective states as long as correspondences between the combinations of the weights applied to the learning patterns and the patterns of the coefficients $\alpha$ corresponding to the bearings 106 in the respective states exist.

In the embodiment 3, the diagnosis system is designed to specify five pieces of the patterns representing the coefficient $\alpha$ in the revised autoregressive model by learning in the case where the bearing 106 is in each of the five states. However, in the case where there are six or more states that the bearing 106 can be brought into, the diagnosis system may be designed to specify six or more patterns representing the coefficient $\alpha$ in the revised autoregressive model by learning in each of the states of the bearing 106.

In this case, the learning unit 2130 generates the matrix Y by using Equation 19 with the value of p set to a value of six or more, for example, and updates the matrix A having a size of m $\times$ p and the matrix P having a size of p $\times$ d so as to minimize the cost function J, to thereby specify the patterns of the coefficients $\alpha$ corresponding to the bearings 106 in the respective states by learning as the columns of the matrix A.

In the case where the bearing 106 can be brought into nine states, for example, the state of having a scratch on the outer ring, the state of having irregularities on the outer ring, the state of having a scratch on the inner ring, the state of having irregularities on the inner ring, the state of having a scratch on the rolling element, the state of having irregularities on the rolling element, the state of having a scratch on the cage, the state of having irregularities on the cage, and the flawless normal state, the learning unit 2130 may be designed to perform the following processing. That is, the learning unit 2130 may set the coefficients $\alpha$ in the revised autoregressive models determined from measured data acquired from the bearings 106 in the respective states as learning data to specify patterns of nine pieces of the coefficients $\alpha$ corresponding to the bearings 106 in the respective states by learning.

Further, in the case where the diagnosis system has only the four states or less that the bearing 106 can be brought into, the diagnosis system may be designed to specify four or less patterns representing the coefficient $\alpha$ in the revised autoregressive model by learning in each of the states of the bearing 106.

In this case, the learning unit 2130 generates the matrix Y by using Equation 19 with the value of p set to a value of four or less, for example, and updates the matrix A having a size of m $\times$ p and the matrix P having a size of p $\times$ d so as to minimize the cost function J, to thereby specify the patterns of the coefficients $\alpha$ corresponding to the bearings 106 in the respective states by learning as the columns of the matrix A.

In the case where the bearing 106 can be brought into two states, for example, the flawless normal state and the state of having a flaw in any portion, the learning unit 2130 may set the coefficients $\alpha$ in the revised autoregressive models determined from measured data acquired from the bearings 106 in the both states as learning data to specify patterns of two pieces of the coefficients $\alpha$ corresponding to the bearings 106 in the both states by learning.

In the embodiment 3, the diagnosis system diagnoses the abnormality by specifying in which of the predetermined five states (the flawless normal state, the state of having a flaw in the outer ring, the state of having a flaw in the inner ring, the state of having a flaw in the rolling element, and the state of having a flaw in the cage) the bearing 106 is. However, there is such a case that it is impossible to accurately grasp which of the states the bearing 106 can be brought into, but diagnosing whether or not the bearing 106 is in the flawless normal state is desired. In such a case, the diagnosis system may use, out of the learning patterns, only the learning pattern corresponding to the bearing 106 in the normal state and perform the following processing, to thereby diagnose whether or not the bearing 106 is normal.

That is, when updating the matrix P at S2309 in the processing in Fig. 23, the diagnosis system updates, out of the components of the matrix A, the components of the columns other than the column in which the learning pattern corresponding to the bearing 106 in the flawless normal state is stored by using Expression 34. Then, as long as the value of the row of the matrix P to be multiplied by the column in which the learning pattern corresponding to the bearing 106 in the flawless normal state is stored out of the components of the matrix A is the largest among the values of the rows of the matrix P at S2315, the diagnosis system may be designed to diagnose the bearing 106 as being in the normal state.

As above, the diagnosis system may diagnose the abnormality of the bearing 106 by using a part of the learning patterns specified by learning.

In the embodiment 3, it is designed that in each of the columns of the matrix Y expressed by Equation 19, each q pieces of the coefficients $\alpha$ in the revised autoregressive models determined from the measured data corresponding to the bearings 106 in the plural states are stored with respect to each state. However, in each of the columns of the matrix Y, the coefficients $\alpha$ in the revised autoregressive models determined from the measured data corresponding to the bearings 106 in the plural states may be stored in different numbers with respect to each state.

In the embodiment 3, the diagnosis system generates the matrix Y so as to make the columns each storing the coefficient $\alpha$ corresponding to the bearing 106 in the same state continuous. However, the diagnosis system may generate the matrix Y so as not to make the columns each storing the coefficient $\alpha$ corresponding to the bearing 106 in the same state continuous.

In the embodiment 3, the diagnosis system generates the matrix Y including the columns having the coefficients $\alpha$ corresponding the bearings 106 in the respective states stored therein and learns the matrix Y by the non-negative matrix factorization, to thereby specify the representative patterns of the coefficients a corresponding to the bearings 106 in the respective states. However, the diagnosis system may determine a plurality of the coefficients $\alpha$ corresponding to the bearing 106 in a certain state by the processing similar to that performed when acquiring the learning data, for example, and perform learning by deriving the average of the determined plural coefficients $\alpha$, to thereby specify the pattern exhibited by the derived average coefficient as the representative pattern of the coefficient a corresponding to the bearing 106 in the state.

In the embodiment 3, the diagnosis system diagnoses the abnormality of the bearing 106 based on the pattern of the coefficient $\alpha$ in the revised autoregressive model determined from the measured data of the bearing 106. However, when failing to specify the state of the bearing 106 at S2315, the diagnosis system may derive the frequency characteristic of the revised autoregressive model by using Equation 18, for example, to diagnose the abnormality of the bearing 106 based on the derived frequency characteristic. Further, the diagnosis system may be designed to perform the processing in Fig. 23 when the diagnosis system derives the frequency characteristic of the revised autoregressive model by using Equation 18, for example, and diagnoses the abnormality of the bearing 106 based on the derived frequency characteristic, ending in failure in the diagnosis.

As above, the diagnosis system diagnoses the abnormality based on the pattern of the coefficient $\alpha$ in the revised autoregressive model determined from the measured data of the bearing 106 and the frequency characteristic of the revised autoregressive model determined from the measured data of the bearing 106, to thereby enable more accurate diagnosis of the abnormality of the bearing 106.

In the embodiments 1 to 3, the information processing apparatus 900 is designed to perform the processing in Fig. 11, Fig. 22, and Fig. 23 by executing the programs stored in the auxiliary memory 1002. However, the information processing apparatus 900 may be designed to perform the processing in Fig. 11, Fig. 22, and Fig. 23 by executing the programs stored in an external storage medium, an external storage server, or the like.

Further, for example, some or all of the functions of the above-described information processing apparatus 900 may be mounted in the information processing apparatus 900 as a hardware.

Further, the embodiments of the present invention explained above merely illustrate concrete examples of implementing the present invention, and the technical scope of the present invention is not to be construed in a restrictive manner by these embodiments. That is, the present invention may be implemented in various forms without departing from the scope of the claims.

## Claims

1. An information processing apparatus (900, 2110) of abnormality diagnosis of a bearing (106), comprising:

    an acquisition means (910, 2120) that acquires measured data relating to vibrations of the bearing (106);
    a determination means (920, 2130) that determines, based on the measured data acquired by the acquisition means, a revision coefficient being a coefficient in a revised autoregressive model; and
    a diagnosis means (930, 2140) that diagnoses an abnormality of the bearing (106) based on the revision coefficient determined by the determination means; and
    an output means (950 ,2150) that outputs information relating to the result of the diagnosis by the diagnosis means, wherein
    the revised autoregressive model is an equation expressing a predicted value of the measured data by using an actual value of the measured data and the revision coefficient in response to the actual value,
    the determination means determines the revision coefficient by using an equation in which a first matrix is set to a coefficient matrix and an autocorrelation vector derived from the measured data is set to a constant vector, wherein the first matrix is derived from a diagonal matrix and an orthogonal matrix, the diagonal matrix is a matrix whose diagonal component is eigenvalues of an autocorrelation matrix, the eigenvalues being derived by subjecting the autocorrelation matrix derived from the measured data to singular value decomposition, and the orthogonal matrix is a matrix in which an eigenvector of the autocorrelation matrix is set to a column component,
    the autocorrelation vector is a vector whose component is autocorrelation of the measured data with a time lag of 1 to m, m being a number of the actual value used in the revised autoregressive model,
    the autocorrelation matrix is a matrix whose component is autocorrelation of the measured data with a time lag of 0 to m - 1,
    the first matrix is a matrix $U_S \Sigma_S U_S^T$ that is derived from a second matrix $\Sigma_S$ derived from s pieces of the eigenvalues of the autocorrelation matrix, s being a number set to 1 or more and less than m, and the diagonal matrix and a third matrix $U_s$ derived from s pieces of the eigenvalues and the orthogonal matrix,
    the second matrix is a submatrix of the diagonal matrix and is a matrix whose diagonal component is s pieces of the eigenvalues, and
the third matrix is a submatrix of the orthogonal matrix and is a matrix in which eigenvectors corresponding to s pieces of the eigenvalues are set to a column component vector.

2. The information processing apparatus according to claim 1, wherein
s pieces of the eigenvalues include the eigenvalue having the largest value out of the eigenvalues of the autocorrelation matrix.

3. The information processing apparatus according to claim 2, wherein
s pieces of the eigenvalues are eigenvalues that are chosen from the eigenvalues of the autocorrelation matrix in descending order of value.

4. The information processing apparatus according to any one of claims 1 to 3, further comprising:

a judgement means (940) that judges whether or not the abnormality diagnosis of the bearing (106) by the diagnosis means is successful, wherein
the determination means resets s and determines the revision coefficient again when the judgement means judges that the abnormality diagnosis of the bearing (106) by the diagnosis means is not successful, and when the judgement means judges that the abnormality diagnosis of the bearing (106) by the diagnosis means is not successful, the diagnosis means further diagnoses the abnormality of the bearing (106) based on the revision coefficient determined again by the determination means.

5. The information processing apparatus according to any one of claims 1 to 4, wherein
the autocorrelation matrix is a matrix included in a conditional expression that expresses a condition minimizing a square error between a predicted value of the measured data and an actual measured value of the measured data at a time corresponding to the predicted value of the measured data.

6. The information processing apparatus according to any one of claims 1 to 5, wherein
the diagnosis means derives a frequency characteristic indicating a distribution of frequency of the revised autoregressive model by using the revision coefficient determined by the determination means, and diagnoses the abnormality of the bearing (106) based on the frequency characteristic.

7. The information processing apparatus according to claim 6, wherein
the diagnosis means specifies the presence or absence of the abnormality of the bearing (106) based on a frequency at which a peak is shown in the frequency characteristic and sets a result obtained by the specification as a diagnosis result, to thereby diagnose the abnormality of the bearing (106).

8. The information processing apparatus according to claim 6 or 7, wherein
the diagnosis means specifies a portion, of the bearing (106), having an abnormality based on a frequency at which a peak is shown in the frequency characteristic and sets a result obtained by the specification as a diagnosis result, to thereby diagnose the abnormality of the bearing (106).

9. The information processing apparatus according to any one of claims 1 to 5, wherein
the diagnosis means diagnoses the abnormality of the bearing (106) based on a measurement pattern that is a pattern of the revision coefficient determined by the determination means.

10. The information processing apparatus according to claim 9, further comprising:

a learning means (2130) that specifies, based on learning data that are one or more coefficients in the revised autoregressive model determined from the bearing (106) in each of a plurality of predetermined states, a pattern of the coefficient in the revised autoregressive model corresponding to each of a plurality of the states by learning as a learning pattern, wherein
the diagnosis means diagnoses the abnormality of the bearing (106) based on the measurement pattern determined by the determination means and the learning pattern specified by the learning means by learning.

11. The information processing apparatus according to claim 10, wherein
the learning means subjects a matrix that includes columns each having the learning data stored therein to non-negative matrix factorization with the number of a plurality of the states set to a base number, to thereby specify the learning pattern by learning.

12. The information processing apparatus according to any one of claims 1 to 11, wherein

the bearing (106) is a bearing to be used in a railway bogie, and
the diagnosis means diagnoses an abnormality including the presence of a flaw in the bearing (106) based on the revision coefficient determined by the determination means.

13. The information processing apparatus according to claim 12, wherein

the vibrations of the bearing (106) are vibrations based on rotational movements of an inner ring in the bearing (106), and
the measured data are measured data at a sampling frequency (Hz) that is equal to or more than 15.6 times the number of rotations (rpm) of the inner ring of the bearing.

14. A diagnosis system, comprising

a vibration measuring device (901), and
the information processing apparatus (900) according to any one of the preceding claims, wherein the information processing apparatus (900) is configured to acquire the measured data from the vibration measuring device (901).

15. An information processing method to be executed by an information processing apparatus of abnormality diagnosis of a bearing (106), the method comprising:

an acquisition step that acquires measured data relating to vibrations of the bearing (106);
a determination step that determines, based on the measured data acquired by the acquisition step, a revision coefficient being a coefficient in a revised autoregressive model;
a diagnosis step that diagnoses an abnormality of the bearing (106) based on the revision coefficient determined by the determination step; and
an output step that outputs information relating to the result of the diagnosis by the diagnosis step, wherein
the revised autoregressive model is an equation expressing a predicted value of the measured data by using an actual value of the measured data and the revision coefficient in response to the actual value,
the determination step determines the revision coefficient by using an equation in which a first matrix is set to a coefficient matrix and an autocorrelation vector derived from the measured data is set to a constant vector, wherein the first matrix is derived from a diagonal matrix and an orthogonal matrix, the diagonal matrix is a matrix whose diagonal component is eigenvalues of an autocorrelation matrix, the eigenvalues being derived by subjecting the autocorrelation matrix derived from the measured data to singular value decomposition, and the orthogonal matrix is a matrix in which an eigenvector of the autocorrelation matrix is set to a column component,
the autocorrelation vector is a vector whose component is autocorrelation of the measured data with a time lag of 1 to m, m being a number of the actual value used in the revised autoregressive model,
the autocorrelation matrix is a matrix whose component is autocorrelation of the measured data with a time lag of 0 to m - 1,
the first matrix is a matrix $U_S \Sigma_S U_S^T$ that is derived from a second matrix $\Sigma_S$ derived from s pieces of the eigenvalues of the autocorrelation matrix, s being a number set to 1 or more and less than m, and the diagonal matrix and a third matrix $U_s$ derived from s pieces of the eigenvalues and the orthogonal matrix,
the second matrix is a submatrix of the diagonal matrix and is a matrix whose diagonal component is s pieces of the eigenvalues, and
the third matrix is a submatrix of the orthogonal matrix and is a matrix in which eigenvectors corresponding to s pieces of the eigenvalues are set to a column component vector.

16. A computer program for abnormality diagnosis of a bearing (106), comprising instructions which, when the program is executed by a computer, cause the computer to execute steps comprising:

an acquisition step that acquires measured data relating to vibrations of the bearing (106);
a determination step that determines, based on the measured data acquired by the acquisition step, a revision coefficient being a coefficient in a revised autoregressive model;

a diagnosis step that diagnoses an abnormality of the bearing (106) based on the revision coefficient determined by the determination step; and

an output step that outputs information relating to the result of the diagnosis by the diagnosis step, wherein the revised autoregressive model is an equation expressing a predicted value of the measured data by using an actual value of the measured data and the revision coefficient in response to the actual value,

the determination step determines the revision coefficient by using an equation in which a first matrix is set to a coefficient matrix and an autocorrelation vector derived from the measured data is set to a constant vector, wherein the first matrix is derived from a diagonal matrix and an orthogonal matrix, the diagonal matrix is a matrix whose diagonal component is eigenvalues of an autocorrelation matrix, the eigenvalues being derived by subjecting the autocorrelation matrix derived from the measured data to singular value decomposition, and the orthogonal matrix is a matrix in which an eigenvector of the autocorrelation matrix is set to a column component,

the autocorrelation vector is a vector whose component is autocorrelation of the measured data with a time lag of 1 to m, m being a number of the actual value used in the revised autoregressive model,

the autocorrelation matrix is a matrix whose component is autocorrelation of the measured data with a time lag of 0 to m - 1,

the first matrix is a matrix $U_S \Sigma_S U_S^T$ that is derived from a second matrix $\Sigma_S$ derived from s pieces of the eigenvalues of the autocorrelation matrix, s being a number set to 1 or more and less than m, and the diagonal matrix and a third matrix $U_s$ derived from s pieces of the eigenvalues and the orthogonal matrix,

the second matrix is a submatrix of the diagonal matrix and is a matrix whose diagonal component is s pieces of the eigenvalues, and

the third matrix is a submatrix of the orthogonal matrix and is a matrix in which eigenvectors corresponding to s pieces of the eigenvalues are set to a column component vector.

## Patentansprüche

1. Informationsverarbeitungsvorrichtung (900, 2110) zur Abnormitätsdiagnose eines Lagers (106), die aufweist:

   eine Erfassungseinrichtung (910, 2120), die Schwingungen des Lagers (106) betreffende Messdaten erfasst;
   eine Bestimmungseinrichtung (920, 2130), die auf der Grundlage der durch die Erfassungseinrichtung erfassten Messdaten einen Revisionskoeffizienten bestimmt, der ein Koeffizient in einem revidierten autoregressiven Modell ist; und
   eine Diagnoseeinrichtung (930, 2140), die eine Abnormität des Lagers (106) auf der Grundlage des durch die Bestimmungseinrichtung bestimmten Revisionskoeffizienten diagnostiziert; und
   eine Ausgabeeinrichtung (950, 2150), die Informationen ausgibt, die das Ergebnis der Diagnose durch die Diagnoseeinrichtung betreffen, wobei das revidierte autoregressive Modell eine Gleichung ist, die einen Vorhersagewert der Messdaten mit Hilfe eines Istwerts der Messdaten und des Revisionskoeffizienten als Reaktion auf den Istwert ausdrückt,
   die Bestimmungseinrichtung den Revisionskoeffizienten mit Hilfe einer Gleichung bestimmt, in der eine erste Matrix auf eine Koeffizientenmatrix gesetzt ist und ein aus den Messdaten abgeleiteter Autokorrelationsvektor auf einen Konstantvektor gesetzt ist, wobei die erste Matrix aus einer Diagonalmatrix und einer Orthogonalmatrix abgeleitet ist, wobei die Diagonalmatrix eine Matrix ist, deren Diagonalkomponente Eigenwerte einer Autokorrelationsmatrix sind, wobei die Eigenwerte abgeleitet sind, indem die aus den Messdaten abgeleitete Autokorrelationsmatrix Einzelwertzerlegung unterzogen wird, und die Orthogonalmatrix eine Matrix ist, in der ein Eigenvektor der Autokorrelationsmatrix auf eine Spaltenkomponente gesetzt ist,
   der Autokorrelationsvektor ein Vektor ist, dessen Komponente Autokorrelation der Messdaten mit einer Zeitverzögerung von 1 bis m ist, wobei m eine Zahl des im revidierten autoregressiven Modell verwendeten Istwerts ist,
   die Autokorrelationsmatrix eine Matrix ist, deren Komponente Autokorrelation der Messdaten mit einer Zeitverzögerung von 0 bis m - 1 ist,
   die erste Matrix eine Matrix $U_S \Sigma_S U_S^T$ ist, die abgeleitet ist aus einer zweiten Matrix $\Sigma_S$, die aus s Stücken der Eigenwerte der Autokorrelationsmatrix abgeleitet ist, wobei s eine Zahl ist, die auf mindestens 1 und unter m gesetzt ist, und der Diagonalmatrix sowie einer dritten Matrix $U_s$, die aus s Stücken der Eigenwerte und der Orthogonalmatrix abgeleitet ist,
   die zweite Matrix eine Untermatrix der Diagonalmatrix ist und eine Matrix ist, deren Diagonalkomponente s Stücke der Eigenwerte sind, und
   die dritte Matrix eine Untermatrix der Orthogonalmatrix ist und eine Matrix ist, in der Eigenvektoren, die s Stücken der Eigenwerte entsprechen, auf einen Spaltenkomponentenvektor gesetzt sind.

2. Informationsverarbeitungsvorrichtung nach Anspruch 1, wobei
s Stücke der Eigenwerte den Eigenwert mit dem größten Wert aus den Eigenwerten der Autokorrelationsmatrix aufweisen.

3. Informationsverarbeitungsvorrichtung nach Anspruch 2, wobei
s Stücke der Eigenwerte Eigenwerte sind, die aus den Eigenwerten der Autokorrelationsmatrix in absteigender Wertreihenfolge ausgewählt sind.

4. Informationsverarbeitungsvorrichtung nach einem der Ansprüche 1 bis 3, die ferner aufweist:

eine Beurteilungseinrichtung (940), die beurteilt, ob die Abnormitätsdiagnose des Lagers (106) durch die Diagnoseeinrichtung erfolgreich ist, wobei
die Bestimmungseinrichtung s zurücksetzt und den Revisionskoeffizienten erneut bestimmt, wenn die Beurteilungseinrichtung beurteilt, dass die Abnormitätsdiagnose des Lagers (106) durch die Diagnoseeinrichtung nicht erfolgreich ist, und
bei Beurteilung durch die Beurteilungseinrichtung, dass die Abnormitätsdiagnose des Lagers (106) nicht erfolgreich ist, die Diagnoseeinrichtung ferner die Abnormität des Lagers (106) auf der Grundlage des durch die Bestimmungseinrichtung erneut bestimmten Revisionskoeffizienten diagnostiziert.

5. Informationsverarbeitungsvorrichtung nach einem der Ansprüche 1 bis 4, wobei
die Autokorrelationsmatrix eine Matrix ist, die zu einem Bedingungsausdruck gehört, der eine Bedingung ausdrückt, die einen quadratischen Fehler zwischen einem Vorhersagewert der Messdaten und einem Istmesswert der Messdaten zu einer Zeit minimiert, die dem Vorhersagewert der Messdaten entspricht.

6. Informationsverarbeitungsvorrichtung nach einem der Ansprüche 1 bis 5, wobei
die Diagnoseeinrichtung eine Frequenzcharakteristik, die eine Frequenzverteilung des revidierten autoregressiven Modells angibt, mit Hilfe des durch die Bestimmungseinrichtung bestimmten Revisionskoeffizienten ableitet und die Abnormität des Lagers (106) auf der Grundlage der Frequenzcharakteristik diagnostiziert.

7. Informationsverarbeitungsvorrichtung nach Anspruch 6, wobei
die Diagnoseeinrichtung das Vorhandensein oder Fehlen der Abnormität des Lagers (106) auf der Grundlage einer Frequenz spezifiziert, bei der sich ein Peak in der Frequenzcharakteristik zeigt, und ein durch die Spezifikation erhaltenes Ergebnis als Diagnoseergebnis einstellt, um dadurch die Abnormität des Lagers (106) zu diagnostizieren.

8. Informationsverarbeitungsvorrichtung nach Anspruch 6 oder 7, wobei
die Diagnoseeinrichtung einen Abschnitt des Lagers (106) mit einer Abnormität auf der Grundlage einer Frequenz spezifiziert, bei der sich ein Peak in der Frequenzcharakteristik zeigt, und ein durch die Spezifikation erhaltenes Ergebnis als Diagnoseergebnis einstellt, um dadurch die Abnormität des Lagers (106) zu diagnostizieren.

9. Informationsverarbeitungsvorrichtung nach einem der Ansprüche 1 bis 5, wobei
die Diagnoseeinrichtung die Abnormität des Lagers (106) auf der Grundlage eines Messmusters diagnostiziert, das ein Muster des durch die Bestimmungseinrichtung bestimmten Revisionskoeffizienten ist.

10. Informationsverarbeitungsvorrichtung nach Anspruch 9, die ferner aufweist:

eine Lerneinrichtung (2130), die auf der Grundlage von Lerndaten, die ein oder mehrere Koeffizienten im revidierten autoregressiven Modell sind, die vom Lager (106) in jedem von mehreren vorbestimmten Zuständen bestimmt werden, ein Muster des Koeffizienten im revidierten autoregressiven Modell, das jedem von mehreren der Zustände entspricht, durch Lernen als Lernmuster spezifiziert, wobei
die Diagnoseeinrichtung die Abnormität des Lagers (106) auf der Grundlage des durch die Bestimmungseinrichtung bestimmten Messmusters und des durch die Lerneinrichtung durch Lernen spezifizierten Lernmusters diagnostiziert.

11. Informationsverarbeitungsvorrichtung nach Anspruch 10, wobei
die Lerneinrichtung eine Matrix, die Spalten mit jeweils den darin gespeicherten Lerndaten aufweist, einer nichtnegativen Matrixfaktorisierung mit der auf eine Basiszahl eingestellten Zahl mehrerer der Zustände unterzieht, um

EP 3 663 741 B1

dadurch das Lernmuster durch Lernen zu spezifizieren.

12. Informationsverarbeitungsvorrichtung nach einem der Ansprüche 1 bis 11, wobei
das Lager (106) ein in einem Eisenbahn-Drehgestell zu verwendendes Lager ist und die Diagnoseeinrichtung eine Abnormität mit dem Vorhandensein eines Defekts im Lager (106) auf der Grundlage des durch die Bestimmungseinrichtung bestimmten Revisionskoeffizienten diagnostiziert.

13. Informationsverarbeitungsvorrichtung nach Anspruch 12, wobei

die Schwingungen des Lagers (106) Schwingungen auf der Grundlage von Drehbewegungen eines Innenrings im Lager (106) sind und
die Messdaten Messdaten mit einer Abtastfrequenz (Hz) sind, die mindestens das 15,6-Fache der Drehzahl (U/min) des Innenrings des Lagers beträgt.

14. Diagnosesystem, das aufweist:

ein Schwingungsmessbauelement (901) und
die Informationsverarbeitungsvorrichtung (900) nach einem der vorstehenden Ansprüche, wobei die Informationsverarbeitungsvorrichtung (900) so konfiguriert ist, dass sie die Messdaten vom Schwingungsmessbauelement (901) erfasst.

15. Informationsverarbeitungsverfahren, das durch eine Informationsverarbeitungsvorrichtung zur Abnormitätsdiagnose eines Lagers (106) auszuführen ist, wobei das Verfahren aufweist:

einen Erfassungsschritt, der Schwingungen des Lagers (106) betreffende Messdaten erfasst;
einen Bestimmungsschritt, der auf der Grundlage der durch den Erfassungsschritt erfassten Messdaten einen Revisionskoeffizienten bestimmt, der ein Koeffizient in einem revidierten autoregressiven Modell ist;
einen Diagnoseschritt, der eine Abnormität des Lagers (106) auf der Grundlage des durch den Bestimmungsschritt bestimmten Revisionskoeffizienten diagnostiziert; und
einen Ausgabeschritt, der Informationen ausgibt, die das Ergebnis der Diagnose durch den Diagnoseschritt betreffen, wobei
das revidierte autoregressive Modell eine Gleichung ist, die einen Vorhersagewert der Messdaten mit Hilfe eines Istwerts der Messdaten und des Revisionskoeffizienten als Reaktion auf den Istwert ausdrückt,
der Bestimmungsschritt den Revisionskoeffizienten mit Hilfe einer Gleichung bestimmt, in der eine erste Matrix auf eine Koeffizientenmatrix gesetzt ist und ein aus den Messdaten abgeleiteter Autokorrelationsvektor auf einen Konstantvektor gesetzt ist, wobei die erste Matrix aus einer Diagonalmatrix und einer Orthogonalmatrix abgeleitet ist, wobei die Diagonalmatrix eine Matrix ist, deren Diagonalkomponente Eigenwerte einer Autokorrelationsmatrix sind, wobei die Eigenwerte abgeleitet sind, indem die aus den Messdaten abgeleitete Autokorrelationsmatrix Einzelwertzerlegung unterzogen wird, und die Orthogonalmatrix eine Matrix ist, in der ein Eigenvektor der Autokorrelationsmatrix auf eine Spaltenkomponente gesetzt ist, der Autokorrelationsvektor ein Vektor ist, dessen Komponente Autokorrelation der Messdaten mit einer Zeitverzögerung von 1 bis m ist, wobei m eine Zahl des im revidierten autoregressiven Modell verwendeten Istwerts ist,
die Autokorrelationsmatrix eine Matrix ist, deren Komponente Autokorrelation der Messdaten mit einer Zeitverzögerung von 0 bis m - 1 ist,
die erste Matrix eine Matrix $U_S \Sigma_S U_S^T$ ist, die abgeleitet ist aus einer zweiten Matrix $\Sigma_s$, die aus s Stücken der Eigenwerte der Autokorrelationsmatrix abgeleitet ist, wobei s eine Zahl ist, die auf mindestens 1 und unter m gesetzt ist, und der Diagonalmatrix sowie einer dritten Matrix $U_s$, die aus s Stücken der Eigenwerte und der Orthogonalmatrix abgeleitet ist,
die zweite Matrix eine Untermatrix der Diagonalmatrix ist und eine Matrix ist, deren Diagonalkomponente s Stücke der Eigenwerte sind, und
die dritte Matrix eine Untermatrix der Orthogonalmatrix ist und eine Matrix ist, in der Eigenvektoren, die s Stücken der Eigenwerte entsprechen, auf einen Spaltenkomponentenvektor gesetzt sind.

16. Computerprogramm zur Abnormitätsdiagnose eines Lagers (106), das Befehle aufweist, die bei Ausführung des Programms durch einen Computer den Computer veranlassen, Schritte auszuführen, die aufweisen:

einen Erfassungsschritt, der Schwingungen des Lagers (106) betreffende Messdaten erfasst;
einen Bestimmungsschritt, der auf der Grundlage der durch den Erfassungsschritt erfassten Messdaten einen Revisionskoeffizienten bestimmt, der ein Koeffizient in einem revidierten autoregressiven Modell ist;

einen Diagnoseschritt, der eine Abnormität des Lagers (106) auf der Grundlage des durch den Bestimmungsschritt bestimmten Revisionskoeffizienten diagnostiziert; und

einen Ausgabeschritt, der Informationen ausgibt, die das Ergebnis der Diagnose durch den Diagnoseschritt betreffen, wobei

das revidierte autoregressive Modell eine Gleichung ist, die einen Vorhersagewert der Messdaten mit Hilfe eines Istwerts der Messdaten und des Revisionskoeffizienten als Reaktion auf den Istwert ausdrückt,

der Bestimmungsschritt den Revisionskoeffizienten mit Hilfe einer Gleichung bestimmt, in der eine erste Matrix auf eine Koeffizientenmatrix gesetzt ist und ein aus den Messdaten abgeleiteter Autokorrelationsvektor auf einen Konstantvektor gesetzt ist, wobei die erste Matrix aus einer Diagonalmatrix und einer Orthogonalmatrix abgeleitet ist, wobei die Diagonalmatrix eine Matrix ist, deren Diagonalkomponente Eigenwerte einer Autokorrelationsmatrix sind, wobei die Eigenwerte abgeleitet sind, indem die aus den Messdaten abgeleitete Autokorrelationsmatrix Einzelwertzerlegung unterzogen wird, und die Orthogonalmatrix eine Matrix ist, in der ein Eigenvektor der Autokorrelationsmatrix auf eine Spaltenkomponente gesetzt ist, der Autokorrelationsvektor ein Vektor ist, dessen Komponente Autokorrelation der Messdaten mit einer Zeitverzögerung von 1 bis m ist, wobei m eine Zahl des im revidierten autoregressiven Modell verwendeten Istwerts ist,

die Autokorrelationsmatrix eine Matrix ist, deren Komponente Autokorrelation der Messdaten mit einer Zeitverzögerung von 0 bis m - 1 ist,

die erste Matrix eine Matrix $U_s\Sigma_sU_s^T$ ist, die abgeleitet ist aus einer zweiten Matrix $\Sigma_s$, die aus s Stücken der Eigenwerte der Autokorrelationsmatrix abgeleitet ist, wobei s eine Zahl ist, die auf mindestens 1 und unter m gesetzt ist, und der Diagonalmatrix sowie einer dritten Matrix $U_s$, die aus s Stücken der Eigenwerte und der Orthogonalmatrix abgeleitet ist,

die zweite Matrix eine Untermatrix der Diagonalmatrix ist und eine Matrix ist, deren Diagonalkomponente s Stücke der Eigenwerte sind, und

die dritte Matrix eine Untermatrix der Orthogonalmatrix ist und eine Matrix ist, in der Eigenvektoren, die s Stücken der Eigenwerte entsprechen, auf einen Spaltenkomponentenvektor gesetzt sind.

## Revendications

1. Appareil de traitement d'informations (900, 2110) de diagnostic d'anomalie d'un roulement (106), comprenant :

un moyen d'acquisition (910, 2120) qui acquiert des données mesurées relatives à des vibrations du roulement (106) ;

un moyen de détermination (920, 2130) qui détermine, sur la base des données mesurées acquises par le moyen d'acquisition, un coefficient de révision qui est un coefficient dans un modèle autorégressif révisé ; et

un moyen de diagnostic (930, 2140) qui diagnostique une anomalie du roulement (106) sur la base du coefficient de révision déterminé par le moyen de détermination ; et

un moyen de sortie (950, 2150) qui délivre en sortie des informations relatives au résultat du diagnostic par le moyen de diagnostic, dans lequel

le modèle autorégressif révisé est une équation exprimant une valeur prédite des données mesurées en utilisant une valeur réelle des données mesurées et le coefficient de révision en réponse à la valeur réelle,

le moyen de détermination détermine le coefficient de révision en utilisant une équation dans laquelle une première matrice est définie sur une matrice de coefficients et un vecteur d'autocorrélation dérivé des données mesurées est défini sur un vecteur constant, où la première matrice est dérivée d'une matrice diagonale et d'une matrice orthogonale, la matrice diagonale est une matrice dont la composante diagonale est constituée de valeurs propres d'une matrice d'autocorrélation, les valeurs propres étant dérivées en soumettant la matrice d'autocorrélation dérivée des données mesurées à une décomposition en valeurs singulières, et la matrice orthogonale est une matrice dans laquelle un vecteur propre de la matrice d'autocorrélation est défini sur une composante de colonne,

le vecteur d'autocorrélation est un vecteur dont la composante est l'autocorrélation des données mesurées avec un retard temporel de 1 à m, m étant un nombre de la valeur réelle utilisée dans le modèle autorégressif révisé,

la matrice d'autocorrélation est une matrice dont la composante est l'autocorrélation des données mesurées avec un retard temporel de 0 à m - 1,

la première matrice est une matrice $U_S\Sigma_SU_S^T$ qui est dérivée d'une deuxième matrice $\Sigma_S$ dérivée de s fragments des valeurs propres de la matrice d'autocorrélation, s étant un nombre défini sur 1 ou plus et moins que m, et de la matrice diagonale et d'une troisième matrice Us dérivée de s fragments des valeurs propres et de la matrice orthogonale,
la deuxième matrice est une sous-matrice de la matrice diagonale et est une matrice dont la composante diagonale est constituée de s fragments des valeurs propres, et
la troisième matrice est une sous-matrice de la matrice orthogonale et est une matrice dans laquelle les vecteurs propres correspondant à s fragments des valeurs propres sont définis sur un vecteur de composante de colonne.

2. Appareil de traitement d'informations selon la revendication 1, dans lequel
s fragments des valeurs propres incluent la valeur propre ayant la plus grande valeur parmi les valeurs propres de la matrice d'autocorrélation.

3. Appareil de traitement d'informations selon la revendication 2, dans lequel
s fragments des valeurs propres sont des valeurs propres qui sont choisies parmi les valeurs propres de la matrice d'autocorrélation dans l'ordre décroissant de valeur.

4. Appareil de traitement d'informations selon l'une quelconque des revendications 1 à 3, comprenant en outre :

un moyen de jugement (940) qui juge si le diagnostic d'anomalie du roulement (106) par le moyen de diagnostic est réussi ou non, dans lequel
le moyen de détermination réinitialise s et détermine le coefficient de révision à nouveau lorsque le moyen de jugement juge que le diagnostic d'anomalie du roulement (106) par le moyen de diagnostic n'est pas réussi, et lorsque le moyen de jugement juge que le diagnostic d'anomalie du roulement (106) par le moyen de diagnostic n'est pas réussi, le moyen de diagnostic diagnostique en outre l'anomalie du roulement (106) sur la base du coefficient de révision déterminé à nouveau par le moyen de détermination.

5. Appareil de traitement d'informations selon l'une quelconque des revendications 1 à 4, dans lequel
la matrice d'autocorrélation est une matrice incluse dans une expression conditionnelle qui exprime une condition rendant minimale une erreur quadratique entre une valeur prédite des données mesurées et une valeur mesurée réelle des données mesurées à un instant correspondant à la valeur prédite des données mesurées.

6. Appareil de traitement d'informations selon l'une quelconque des revendications 1 à 5, dans lequel
le moyen de diagnostic dérive une caractéristique de fréquence indiquant une distribution de fréquence du modèle autorégressif révisé en utilisant le coefficient de révision déterminé par le moyen de détermination, et diagnostique l'anomalie du roulement (106) sur la base de la caractéristique de fréquence.

7. Appareil de traitement d'informations selon la revendication 6, dans lequel
le moyen de diagnostic spécifie la présence ou l'absence de l'anomalie du roulement (106) sur la base d'une fréquence à laquelle un pic est représenté dans la caractéristique de fréquence et définit un résultat obtenu par la spécification comme étant un résultat de diagnostic, pour ainsi diagnostiquer l'anomalie du roulement (106).

8. Appareil de traitement d'informations selon la revendication 6 ou 7, dans lequel
le moyen de diagnostic spécifie une partie, du roulement (106), ayant une anomalie sur la base d'une fréquence à laquelle un pic est représenté dans la caractéristique de fréquence et définit un résultat obtenu par la spécification comme étant un résultat de diagnostic, pour ainsi diagnostiquer l'anomalie du roulement (106).

9. Appareil de traitement d'informations selon l'une quelconque des revendications 1 à 5, dans lequel
le moyen de diagnostic diagnostique l'anomalie du roulement (106) sur la base d'un schéma de mesure qui est un schéma du coefficient de révision déterminé par le moyen de détermination.

10. Appareil de traitement d'informations selon la revendication 9, comprenant en outre :

un moyen d'apprentissage (2130) qui spécifie, sur la base de données d'apprentissage qui sont un ou plusieurs coefficients dans le modèle autorégressif révisé déterminé à partir du roulement (106) dans chacun d'une pluralité d'états prédéterminés, un schéma du coefficient dans le modèle autorégressif révisé correspondant à chacun d'une pluralité des états par apprentissage en tant que schéma d'apprentissage, dans lequel
le moyen de diagnostic diagnostique l'anomalie du roulement (106) sur la base du schéma de mesure déterminé par le moyen de détermination et le schéma d'apprentissage spécifié par le moyen d'apprentissage par apprentissage.

**11.** Appareil de traitement d'informations selon la revendication 10, dans lequel
le moyen d'apprentissage soumet une matrice qui inclut des colonnes ayant chacune les données d'apprentissage stockées en leur sein à une factorisation matricielle non négative avec le nombre d'une pluralité des états défini sur un nombre de base, pour ainsi spécifier le schéma d'apprentissage par apprentissage.

**12.** Appareil de traitement d'informations selon l'une quelconque des revendications 1 à 11, dans lequel

le roulement (106) est un roulement destiné à être utilisé dans un bogie ferroviaire, et
le moyen de diagnostic diagnostique une anomalie incluant la présence d'un défaut dans le roulement (106) sur la base du coefficient de révision déterminé par le moyen de détermination.

**13.** Appareil de traitement d'informations selon la revendication 12, dans lequel

les vibrations du roulement (106) sont des vibrations basées sur des mouvements de rotation d'une bague interne dans le roulement (106), et
les données mesurées sont des données mesurées à une fréquence d'échantillonnage (Hz) qui est égale ou supérieure à 15,6 fois le nombre de rotations (tr/min) de la bague interne du roulement.

**14.** Système de diagnostic, comprenant

un dispositif de mesure de vibrations (901), et
un appareil de traitement d'informations (900) selon l'une quelconque des revendications précédentes, dans lequel l'appareil de traitement d'informations (900) est configuré pour acquérir les données mesurées provenant du dispositif de mesure de vibrations (901).

**15.** Procédé de traitement d'informations devant être exécuté par un appareil de traitement d'informations de diagnostic d'anomalie d'un roulement (106), le procédé comprenant :

une étape d'acquisition qui acquiert des données mesurées relatives à des vibrations du roulement (106) ;
une étape de détermination qui détermine, sur la base des données mesurées acquises par l'étape d'acquisition, un coefficient de révision qui est un coefficient dans un modèle autorégressif révisé ;
une étape de diagnostic qui diagnostique une anomalie du roulement (106) sur la base du coefficient de révision déterminé par l'étape de détermination ; et
une étape de sortie qui délivre en sortie des informations relatives au résultat du diagnostic par l'étape de diagnostic, dans lequel
le modèle autorégressif révisé est une équation exprimant une valeur prédite des données mesurées en utilisant une valeur réelle des données mesurées et le coefficient de révision en réponse à la valeur réelle,
l'étape de détermination détermine le coefficient de révision en utilisant une équation dans laquelle une première matrice est définie sur une matrice de coefficients et un vecteur d'autocorrélation dérivé des données mesurées est défini sur un vecteur constant, où la première matrice est dérivée d'une matrice diagonale et d'une matrice orthogonale, la matrice diagonale est une matrice dont la composante diagonale est constituée de valeurs propres d'une matrice d'autocorrélation, les valeurs propres étant dérivées en soumettant la matrice d'autocorrélation dérivée des données mesurées à une décomposition en valeurs singulières, et la matrice orthogonale est une matrice dans laquelle un vecteur propre de la matrice d'autocorrélation est défini sur une composante de colonne,
le vecteur d'autocorrélation est un vecteur dont la composante est l'autocorrélation des données mesurées avec un retard temporel de 1 à m, m étant un nombre de la valeur réelle utilisée dans le modèle autorégressif révisé,
la matrice d'autocorrélation est une matrice dont la composante est l'autocorrélation des données mesurées avec un retard temporel de 0 à m - 1,
la première matrice est une matrice $U_S \Sigma_S U_S^T$ qui est dérivée d'une deuxième matrice $\Sigma_S$ dérivée de s fragments des valeurs propres de la matrice d'autocorrélation, s étant un nombre défini sur 1 ou plus et moins que m, et de la matrice diagonale et d'une troisième matrice Us dérivée de s fragments des valeurs propres et de la matrice orthogonale,
la deuxième matrice est une sous-matrice de la matrice diagonale et est une matrice dont la composante diagonale est constituée de s fragments des valeurs propres, et
la troisième matrice est une sous-matrice de la matrice orthogonale et est une matrice dans laquelle les vecteurs propres correspondant à s fragments des valeurs propres sont définis sur un vecteur de composante de colonne.

**16.** Programme d'ordinateur pour diagnostic d'anomalie d'un roulement (106), comprenant des instructions qui, lorsque le programme est exécuté par un ordinateur, amènent l'ordinateur à exécuter les étapes comprenant :

une étape d'acquisition qui acquiert des données mesurées relatives à des vibrations du roulement (106) ;

une étape de détermination qui détermine, sur la base des données mesurées acquises par l'étape d'acquisition, un coefficient de révision qui est un coefficient dans un modèle autorégressif révisé ;

une étape de diagnostic qui diagnostique une anomalie du roulement (106) sur la base du coefficient de révision déterminé par l'étape de détermination ; et

une étape de sortie qui délivre en sortie des informations relatives au résultat du diagnostic par l'étape de diagnostic, dans lequel

le modèle autorégressif révisé est une équation exprimant une valeur prédite des données mesurées en utilisant une valeur réelle des données mesurées et le coefficient de révision en réponse à la valeur réelle,

l'étape de détermination détermine le coefficient de révision en utilisant une équation dans laquelle une première matrice est définie sur une matrice de coefficients et un vecteur d'autocorrélation dérivé des données mesurées est défini sur un vecteur constant, où la première matrice est dérivée d'une matrice diagonale et d'une matrice orthogonale, la matrice diagonale est une matrice dont la composante diagonale est constituée de valeurs propres d'une matrice d'autocorrélation, les valeurs propres étant dérivées en soumettant la matrice d'autocorrélation dérivée des données mesurées à une décomposition en valeurs singulières, et la matrice orthogonale est une matrice dans laquelle un vecteur propre de la matrice d'autocorrélation est défini sur une composante de colonne,

le vecteur d'autocorrélation est un vecteur dont la composante est l'autocorrélation des données mesurées avec un retard temporel de 1 à m, m étant un nombre de la valeur réelle utilisée dans le modèle autorégressif révisé,

la matrice d'autocorrélation est une matrice dont la composante est l'autocorrélation des données mesurées avec un retard temporel de 0 à m -1,

la première matrice est une matrice $U_S \Sigma_S U_S^T$ qui est dérivée d'une deuxième matrice $\Sigma_S$ dérivée de s fragments des valeurs propres de la matrice d'autocorrélation, s étant un nombre défini sur 1 ou plus et moins que m, et de la matrice diagonale et d'une troisième matrice Us dérivée de s fragments des valeurs propres et de la matrice orthogonale,

la deuxième matrice est une sous-matrice de la matrice diagonale et est une matrice dont la composante diagonale est constituée de s fragments des valeurs propres, et

la troisième matrice est une sous-matrice de la matrice orthogonale et est une matrice dans laquelle les vecteurs propres correspondant à s fragments des valeurs propres sont définis sur un vecteur de composante de colonne.

FIG.1A

EP 3 663 741 B1

## FIG.1B

# FIG.2

| OUTER RING | INNER RING | ROLLING ELEMENT | CAGE |
|---|---|---|---|
| | | | |

## FIG.3A

NORMAL
eigen value

## FIG.3B

FLAW IN INNER RING
eigen value

FIG.3C

FLAW IN CAGE
eigen value

## FIG.4A

NORMAL
AR

FIG.4B

FLAW IN INNER RING
AR

## FIG.4C

FLAW IN CAGE
AR

## FIG.5A

NORMAL s=1
AR

## FIG.5B

FLAW IN INNER RING s = 1
AR

## FIG.5C

FLAW IN CAGE s = 1
AR

## FIG.6A

NORMAL s = 1
Power spectrum($x_{k-m}$)

# FIG.6B

FLAW IN INNER RING s = 1

Power spectrum($x_{k-m}$)

1649Hz

frequency (Hz)

$\times 10^4$

# FIG.6C

FLAW IN CAGE s = 1

Power spectrum($x_{k-m}$)

## FIG.7A

NORMAL s = 5
AR

## FIG.7B

FLAW IN INNER RING s = 5
AR

## FIG.7C

FLAW IN CAGE s = 5
AR

# FIG.8A

NORMAL s = 5
Power spectrum($x_{k-m}$)

## FIG.8B

FLAW IN INNER RING s = 5
Power spectrum($x_{k-m}$)

## FIG.8C

FLAW IN CAGE s = 5
Power spectrum($x_{k-m}$)

frequency (Hz)

$\times 10^4$

*FIG.9*

FIG.10

## FIG.11

```
                    ┌──────────────┐
                    │    START     │
                    └──────┬───────┘
                           ↓
         ┌─────────────────────────────┐
         │    ACQUIRE MEASURED DATA     │～ S1101
         └──────────────┬──────────────┘
                        ↓
         ┌─────────────────────────────┐
         │      GENERATE MATRIX R       │～ S1102
         └──────────────┬──────────────┘
                        ↓
         ┌─────────────────────────────┐
         │ SINGULAR VALUE DECOMPOSITION │～ S1103
         └──────────────┬──────────────┘
                        ↓
         ┌─────────────────────────────┐
         │  SET USED EIGENVALUE NUMBER  │～ S1104
         │  TO ONE                      │
         └──────────────┬──────────────┘
                        ↓
         ┌─────────────────────────────┐
         │    DETERMINE COEFFICIENT OF  │～ S1105
         │ REVISED AUTOREGRESSIVE MODEL │
         └──────────────┬──────────────┘
                        ↓
         ┌─────────────────────────────┐
         │     ACQUIRE FREQUENCY        │～ S1106
         │     CHARACTERISTIC           │
         └──────────────┬──────────────┘
                        ↓
         ┌─────────────────────────────┐
         │    ABNORMALITY DIAGNOSIS     │～ S1107
         └──────────────┬──────────────┘
                        ↓        S1108
                   ◇─────────◇  YES
                  │IS DIAGNOSIS │─────────────────┐
                  │ SUCCESSFUL? │                 │
                   ◇─────────◇                    │
                        │ NO                       │
                        ↓                          │
         ┌─────────────────────────────┐          │
         │ UPDATE USED EIGENVALUE NUMBER│～ S1109   │
         └──────────────┬──────────────┘          │
                        ↓        S1110             │
                   ◇─────────◇                     │
                  │  IS USED    │                  │
                  │EIGENVALUE   │ YES   S1111       │
                  │NUMBER LARGER│────┐              │
                  │THAN THRESHOLD│   ↓              │
                  │   VALUE?    │  ┌──────────────┐ │
                   ◇─────────◇   │DETERMINE THAT │ │
                        │ NO      │DIAGNOSIS IS   │ │
                        │         │UNSUCCESSFUL   │ │
                        │         └──────┬────────┘ │
                        │                │          │
                        │                └──────────┤
                        │                           │ S1112
                        │                ┌──────────────────┐
                        │                │  OUTPUT RESULT   │
                        │                └────────┬─────────┘
                        │                         ↓
                        │                  ┌──────────────┐
                        │                  │     END      │
                        │                  └──────────────┘
```

## FIG.12A

FLAW IN ROLLING ELEMENT
eigen value

## FIG.12B

FLAW IN OUTER RING
eigen value

## FIG.13A

FLAW IN ROLLING ELEMENT
AR

FIG.13B

FLAW IN OUTER RING
AR

# FIG.14A

FLAW IN ROLLING ELEMENT s = 1
AR

## FIG.14B

FLAW IN OUTER RING s = 1

AR

## FIG.15A

FLAW IN ROLLING ELEMENT s = 1

Power spectrum($x_{k\text{-}m}$)

## FIG.15B

FLAW IN OUTER RING s = 1

Power spectrum($x_{k-m}$)

frequency
(Hz)

## FIG.16A

FLAW IN ROLLING ELEMENT s = 5

AR

*FIG.16B*

FLAW IN OUTER RING s = 5

AR

## FIG.17A

FLAW IN ROLLING ELEMENT s = 5
Power spectrum($x_{k\text{-}m}$)

## FIG.17B

FLAW IN OUTER RING s = 5

Power spectrum($x_{k\text{-}m}$)

23020Hz

22785Hz

frequency
(Hz)

## FIG.18

## FIG.19

## FIG.20

# FIG.21

INFORMATION PROCESSING APPARATUS 900

2110 ACQUISITION UNIT

2120 DETERMINATION UNIT

2130 LEARNING UNIT

2140 DIAGNOSIS UNIT

2150 OUTPUT UNIT

901 VIBRATION MEASURING DEVICE

## FIG.22

```
                    START

            ACQUIRE LEARNING DATA          S2201

            GENERATE MATRIX Y              S2202

              ACQUIRE COST                 S2203

           UPDATE MATRICES A•P             S2204

              ACQUIRE COST                 S2205

                                    S2206
              COST DIFFERENCE ≦        NO
              THRESHOLD VALUE?

                      YES    S2207                    S2208
              COUNTER ++            COUNTER INITIALIZATION

                            S2209
               COUNTER ≥        NO
              THRESHOLD VALUE?

                      YES

         SPECIFY PATTERN CORRESPONDING     S2210
          TO BEARING IN EACH STATE

                     END
```

## FIG.23

START

ACQUIRE MEASURED DATA — S2301

GENERATE MATRIX R — S2302

SINGULAR VALUE DECOMPOSITION — S2303

DETERMINE PATTER OF COEFFICIENT α
IN REVISED AUTOREGRESSIVE MODEL — S2304

ACQUIRE LEARNING PATTERN — S2305

GENERATE MATRIX Y — S2306

SPECIFY MATRIX A — S2307

ACQUIRE COST — S2308

UPDATE MATRIX P — S2309

ACQUIRE COST — S2310

COST DIFFERENCE ≦
THRESHOLD VALUE? — S2311    NO

YES

COUNTER ++ — S2312    COUNTER INITIALIZATION — S2313

COUNTER ≥
THRESHOLD VALUE? — S2314    NO

YES

DIAGNOSIS — S2315

OUTPUT DIAGNOSIS RESULT — S2316

END

**REFERENCES CITED IN THE DESCRIPTION**

**Patent documents cited in the description**

- CN 104228872 A
- CN 105806604 A
- US 20150369698 A1
- WO 2015015987 A1
- JP 2003050158 A